# EUROPEAN PATENT APPLICATION

(11) **EP 4 478 632 A1**
(43) Date of publication of application: **18.12.2024**
(21) Application number: 24180480.6
(22) Date of filing: 06.06.2024
(51) Int. Cl.: H04B 11/00

(54) **ANALOG AMPLITUDE NOISE MODULATION TO COMMUNICATE INFORMATION**

(30) Priority: 14.06.2023 US 202318334739; 28.07.2023 US 202318361036; 27.09.2023 US 202318475548
(71) Applicant: The Boeing Company, Arlington, VA 22202 (US)
(72) Inventor: HOWE, Wayne Richard, ARLINGTON, 22202 (US); HUNT, Jeffrey H., ARLINGTON, 22202 (US)
(74) Representative: Plasseraud IP

(57) **Abstract**

A method, apparatus, and system for communicating information. A communications system comprising a computer system and a communications manager. The communications manager is configured to identify analog information for transmission and transmit noise signals with a varying amplitude that thereby modulate the noise signals to correspond to the analog information.

## Description

### CROSS-REFERENCE TO RELATED APPLICATION

This application is a Continuation-in-Part (CIP) of U.S. Patent Application entitled "Radio Frequency Communications Using Laser Optical Breakdowns," Serial No. 18/067,516, filed December 16, 2022, attorney docket no. 20-2513-US-NP; and is a Continuation-in-Part of U.S. Patent Application entitled "Pulse Noise Modulation to Encode Data," Serial No. 18/067,547, filed December 16, 2022, attorney docket no. 20-3533-US-NP; both of which are incorporated herein by reference in their entirety.

### BACKGROUND INFORMATION

### 1. Field:

The present disclosure relates generally to communications and in particular, to methods, apparatuses, systems, and computer program products for communicating information using radio frequency (RF), optical, and/or other signals within the electromagnetic spectrum without physical antenna structures.

### 2. Background:

Wireless communications using radio frequency (RF) signals, optical, and/or other signals within the electromagnetic spectrum are common and widespread. Radio frequency signals are commonly used in computer networks, for example, in the form of Wi-Fi signals that provide communications links between various computing devices.

Radio frequency signals are also used for communications between various clients such as ships, aircraft, land vehicles, buildings, and other locations. These communications can include data and/or information such as position information, voice messages, voice communications, and other types of information and/or data. For example, other types of information and/or data can include digital and analog signaling.

Communications using radio frequency transmissions are facilitated using physical antennas. The transmission or reception of radio frequency signals occurs between antennas. The use of physical antennas can be less convenient or reliable than desired.

In addition, radio frequency communications can be implemented using a carrier signal or carrier wave modulated by a modulation signal, message signal, and/or information signal that modulates the carrier wave. Carrier signals use periodic waves, repeating waveforms, pseudo-random waveforms, and/or other predictable waveforms such as sinusoidal, cosinusoidal, square-waves, sawtooth, or other repeatable carriers which are then modulated in various ways by the message signal, modulation signal, and/or information signal.

Communications have been attempted using lasers, gas-filled tubes, electric arcs, high-voltage electrodes, high-voltage fields, field exciter members, and other mechanisms to create and maintain "plasma antennas" including plasma columns, plasma filaments, plasma structures, plasma channels, laser-induced plasma filaments (LIPF), arrays of focusing and defocusing cycles of plasma, and/or bounded or unbounded ionized air or water columns to emulate the shapes and/or conductance of physical antennas. These devices may be continuous wave or pulsed devices. Previous communication approaches attempt to input, impel, induce, impute, impress upon, influence, and/or modulate an RF or other signal onto the plasma or conductive plasma column with a coupling device, such as an RF coupler, an electromagnetic or capacitive coupling device, an electro-optical crystal, electro-optic modulators such as beams of light, and/or other influencing device. In effect, previous approaches attempt to treat plasma or the plasma column as a conductor or a classical physical conducting antenna, such as a monopole or dipole device. These approaches use conventional modulation of periodic, repeating, sinusoidal, and/or pseudo-random carrier waveforms, such as amplitude-, frequency-, and/or phase-modulation, to generate, induce, impel, influence, and/or control the plasma's amplitude-, frequency-, or phase-modulated electromagnetic fields that radiate from the plasma or plasma column.

Therefore, it would be desirable to have methods, systems, and apparatuses that take into account at least some of the issues discussed above, as well as other possible issues. For example, it would be desirable to have methods and apparatus that overcome a technical problem with radio frequency communications using physical antennas. It would also be desirable to have systems, methods, and apparatuses that overcome the limitations of periodic and/or predictable carriers. It would also be desirable to have systems, methods, and apparatuses that overcome the limitations of plasma antennas and coupled modulation.

### SUMMARY

An embodiment of the present disclosure provides a communications system comprising a computer system and a communications manager. The communications manager is configured to identify analog information for transmission and transmit noise signals with a varying amplitude that thereby modulate the noise signals to correspond to the analog information.

Another embodiment of the present disclosure provides a method for communicating analog information. The analog information is identified for transmission. Noise signals are transmitted with a varying amplitude that thereby modulate the noise signals to correspond to the analog information.

Yet another embodiment of the present disclosure provides a method for communicating analog information. Noise signals are received, wherein the analog information that is modulated in the noise signals is demodulated based on a change in amplitude in the noise signals.

Various embodiments herein use the plasma RF noise emission itself as a carrier wave and modulate that RF noise with the message signal.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1A** is a pictorial representation of platforms that can transmit radio frequency signals using non-physical antennas in which illustrative embodiments may be implemented;
**Figure 1B** is a pictorial representation of platforms that can transmit radio frequency signals using non-physical antennas from space in which illustrative embodiments may be implemented;
**Figure 1C** is a pictorial representation of platforms that can transmit radio frequency signals using non-physical antennas on, in, or under water in which illustrative embodiments may be implemented;
**Figure 2** is an illustration of a block diagram of a radio frequency communications environment in accordance with an illustrative embodiment;
**Figure 3** is an illustration of radio frequency noise generation using a laser beam in accordance with an illustrative embodiment;
**Figure 4** is an illustration of radio frequency noise generation using a plurality of laser beams in accordance with an illustrative embodiment;
**Figure 5** is an illustration of radio frequency noise generation using a plurality of laser beams in accordance with an illustrative embodiment;
**Figure 6** is an illustration of a diagram for controlling radio frequency noise generation in accordance with an illustrative embodiment;
**Figure 7** is an illustration of a diagram for controlling radio frequency noise generation in accordance with an illustrative embodiment;
**Figure 8** is an illustration of data transmission using pulse code noise modulation or pulse noise modulation in accordance with an illustrative embodiment;
**Figure 9** is an illustration of a block diagram of a communication system in accordance with an illustrative embodiment;
**Figure 10** is an illustration of a transmitter in accordance with an illustrative embodiment;
**Figure 11** is an illustration of a block diagram of a radio frequency transmitter in accordance with an illustrative embodiment;
**Figure 12** is an illustration of a block diagram of a receiver in accordance with an illustrative embodiment;
**Figure 13** is an illustration of a communications system for transmitting and receiving electromagnetic noise signals in accordance with an illustrative embodiment;
**Figure 14** is an illustration of a block diagram of a communications system for transmitting and receiving electromagnetic noise signals in accordance with an illustrative embodiment;
**Figure 15A** is an illustration of a data flow of signals transmitting data using modulated noise signals in accordance with an illustrative embodiment;
**Figure 15B** is an illustration of an envelope follower circuit using a diode detector with a low pass filter in accordance with an illustrative embodiment;
**Figure 15C** is an illustration of a clipper circuit in accordance with an illustrative embodiment;
**Figure 16** is an illustration of a flowchart of a process for transmitting data in accordance with an illustrative embodiment;
**Figure 17** is an illustration of a flowchart for controlling the emission of laser beams in points in accordance with an illustrative embodiment;
**Figure 18** is an illustration of a flowchart for controlling the emission of laser beams in intersecting points in accordance with an illustrative embodiment;
**Figure 19** is an illustration of a flowchart for controlling the emission of laser beams in points in accordance with an illustrative embodiment;
**Figure 20** is an illustration of a flowchart of a process for transmitting data in accordance with an illustrative embodiment;
**Figure 21** is an illustration of a flowchart for controlling the emission of laser beams in points in accordance with an illustrative embodiment;
**Figure 22** is an illustration of a flowchart for controlling the emission of the laser beams in points in accordance with an illustrative embodiment;
**Figure 23** is an illustration of a flowchart for controlling the emission of laser beams in points in accordance with an illustrative embodiment;
**Figure 24** is an illustration of a flowchart for controlling the emission of laser beams in points in accordance with an illustrative embodiment;
**Figure 25** is an illustration of a flowchart for controlling the emission of laser beams in points in accordance with an illustrative embodiment;
**Figure 26** is an illustration of a flowchart for controlling the emission of laser beams in points in accordance with an illustrative embodiment;
**Figure 27** is an illustration a flowchart for controlling laser beams in accordance with an illustrative embodiment;
**Figure 28** is an illustration of a flowchart for communicating data in accordance with an illustrative embodiment;
**Figure 29** is an illustration of a flowchart for transmitting pulses of noise signals in accordance with an illustrative embodiment;
**Figure 30** is another illustration of a flowchart for transmitting pulses of noise signals in accordance with an illustrative embodiment;
**Figure 31** is an illustration of a flowchart for communicating data in accordance with an illustrative embodiment;
**Figure 32** is an illustration of a flowchart of a process for controlling the emission of a set of one or more beams in accordance with an illustrative embodiment;
**Figure 33** is an illustration of a flowchart of a process for controlling the emission of a set of one or more beams in accordance with an illustrative embodiment;
**Figure 34** is an illustration of a flowchart for communicating data in accordance with an illustrative embodiment;
**Figure 35** is an illustration of a flowchart for decoding data in accordance with an illustrative embodiment;
**Figure 36** is an illustration of a block diagram of a communication system in accordance with an illustrative embodiment;
**Figure 37** is an illustration of information flow depicting transmitting analog information with analog amplitude noise modulation using a laser generation system in accordance with an illustrative embodiment;
**Figure 38** is an illustration demonstrating transmitting analog information with analog amplitude noise modulation using a noise transmitter in accordance with an illustrative embodiment;
**Figure 39** is an illustration of a flowchart for communicating analog information in accordance with an illustrative embodiment;
**Figure 40** is an illustration of a flowchart of a process for transmitting noise signals using a laser generation system in accordance with an illustrative embodiment;
**Figure 41** is an illustration of a flowchart of a process for controlling emission of a set of one or more laser beams in accordance with an illustrative embodiment;
**Figure 42** is an illustration of a flowchart of a process for controlling emission of a set of one or more laser beams in accordance with an illustrative embodiment;
**Figure 43** is an illustration of a flowchart of a process for controlling emission of a set of one or more laser beams in accordance with an illustrative embodiment;
**Figure 44** is an illustration of a flowchart of a process for controlling emission of a set of one or more laser beams in accordance with an illustrative embodiment;
**Figure 45** is an illustration of a flowchart of a process for transmitting noise signals in accordance with an illustrative embodiment;
**Figure 46** is an illustration of a flowchart of process for communicating analog information in accordance with an illustrative;
**Figure 47** is an illustration of a block diagram of a communication system for transmitting noise signals using analog frequency noise modulation in accordance with an illustrative embodiment;
**Figure 48** is an illustration depicting information flow for transmitting analog information with analog frequency noise modulation using a laser generation system in accordance with an illustrative embodiment;
**Figure 49** is an illustration of frequency modulation of radio frequency signals through changing a location of the center points of radio frequency noise-band signals in accordance with an illustrative embodiment;
**Figure 50** is an illustration of frequency modulation of radio frequency signals through changing a width or bandwidth of radio frequency noise-band signals in accordance with an illustrative embodiment;
**Figure 51** is an illustration depicting information flow for transmitting analog information with analog frequency noise modulation using a noise transmitter in accordance with an illustrative embodiment;
**Figure 52** is an illustration of a receiver frequency comb filter in accordance with an illustrative embodiment;
**Figure 53** is an illustration of a flowchart for communicating analog information in accordance with an illustrative embodiment;
**Figure 54** is an illustration of a flowchart of a process for transmitting noise signals using a laser generation system in accordance with an illustrative embodiment;
**Figure 55** is an illustration of a flowchart of a process for controlling emission of a set of one or more laser beams in accordance with an illustrative embodiment;
**Figure 56** is an illustration of a flowchart of a process for controlling emission of a set of one or more laser beams in accordance with an illustrative embodiment;
**Figure 57** is an illustration of a flowchart of a process for controlling emission of a set of one or more laser beams in accordance with an illustrative embodiment;
**Figure 58** is an illustration of a flowchart of a process for transmitting noise signals in accordance with an illustrative embodiment;
**Figure 59** is an illustration of a flowchart of a process for transmitting noise signals in accordance with an illustrative embodiment;
**Figure 60** is an illustration of a block diagram of a communication system for transmitting noise-band signals using analog noise color modulation in accordance with an illustrative embodiment;
**Figure 61** is an illustration of noise colors in accordance with an illustrative embodiment;
**Figure 62** is an illustration a flowchart of a process for communicating analog information in accordance with an illustrative embodiment;
**Figure 63** is an illustration of a flowchart of a process for transmitting noise-band signals using a laser generation system in accordance with an illustrative embodiment;
**Figure 64** is an illustration of a flowchart of a process for controlling the emission of a set of one or more laser beams in accordance with an illustrative embodiment;
**Figure 65** is an illustration of a flowchart of a process for controlling the emission of a set of one or more laser beams in accordance with an illustrative embodiment;
**Figure 66** is an illustration of a flowchart of a process for transmitting noise signals using a noise transmitter in accordance with an illustrative embodiment;
**Figure 67** is an illustration of a flowchart of a process for communicating analog information in accordance with an illustrative embodiment;
**Figure 68** is an illustration of a block diagram of a communication system for transmitting noise-band signals using analog phase noise modulation in accordance with an illustrative embodiment;
**Figure 69** is an illustration depicting information flow in transmitting analog information with analog phase noise modulation using a laser generation system in accordance with an illustrative embodiment;
**Figure 70** is an illustration depicting information flow in transmitting analog information with analog phase noise modulation using a laser generation system in accordance with an illustrative embodiment;
**Figure 71** is an illustration of analog phase noise modulation in accordance with an illustrative embodiment;
**Figure 72** is an illustration a flowchart of a process for communicating analog information in accordance with an illustrative embodiment;
**Figure 73** is an illustration of a flowchart of a process for transmitting noise-band signals using a laser generation system in accordance with an illustrative embodiment;
**Figure 74** is an illustration of a flowchart of a process for controlling emission of a set of one or more laser beams in accordance with an illustrative embodiment;
**Figure 75** is an illustration of a flowchart of a process for controlling emission of a set of one or more laser beams in accordance with an illustrative embodiment;
**Figure 76** is an illustration of a flowchart of a process for controlling emission of a set of one or more laser beams in accordance with an illustrative embodiment;
**Figure 77** is an illustration of a flowchart of a process for controlling emission of a set of one or more laser beams in accordance with an illustrative embodiment;
**Figure 78** is an illustration of a flowchart of a process for controlling emission of a set of one or more laser beams in accordance with an illustrative embodiment;
**Figure 79** is an illustration of a flowchart of a process for transmitting noise signals using a noise transmitter in accordance with an illustrative embodiment; and
**Figure 80** is an illustration of a flowchart of a process for communicating analog information in accordance with an illustrative embodiment.

### DETAILED DESCRIPTION

The illustrative embodiments recognize and take into account one or more different considerations as described herein. For example, currently used physical antennas for transmitting radio frequency signals are subject to damage or destruction from various causes. For example, adverse weather conditions such as a hurricane or tornado can damage or destroy antennas such as transmission towers for land-based communications. As another example, these physical antennas are also subject to damage or destruction from kinetic attacks.

In other considerations, currently used "plasma antennas" require an ionized column of air or water which is not readily relocatable or easily repositioned. Plasma antennas also require a coupling mechanism to modulate the ionized plasma column as if it were a traditional conductive antenna. Plasma antennas also must use traditional modulation techniques of sinusoidal, pseudorandom, and/or other repeating carrier signals which may be easily detected and decoded.

Thus, the illustrative embodiments provide a method, apparatus, system, and computer program product for transmitting radio frequency signals without hardware such as transmission towers and physical antenna structures. In one or more illustrative examples we provide a non-physical radio frequency antenna that is impervious to adverse environmental conditions and kinetic attack. These illustrative embodiments provide a method, apparatus, system, and computer program product for transmitting radio frequency signals without plasma antennas and/or ionized columns of air or water, without coupling mechanisms, and without the need for periodic, repeating, sinusoidal, and/or pseudorandom carrier waves with classical modulation schemes based on these periodic, repeating, sinusoidal, and/or pseudorandom carrier waves. Further, these non-physical radio frequency antennas can be more difficult to detect.

These transmitters can be positioned away from airplanes, transport, installations, buildings, or other locations that are subject to attack or undesired environmental conditions.

In the illustrative examples, radio frequency transmissions are transmitted by using laser beams that induce, cause, and/or control optical breakdowns to generate and control the radio frequency transmissions. In this illustrative example, the optical breakdowns create plasma that generates the radio frequency signals including radio frequency noise. These optical breakdown points where the optical breakdowns occur are the points of origination for transmitting the radio frequency signals and/or radio frequency noise. These optical breakdown points also may be used for transmission in the range of light frequencies, either visible and/or non-visible light.

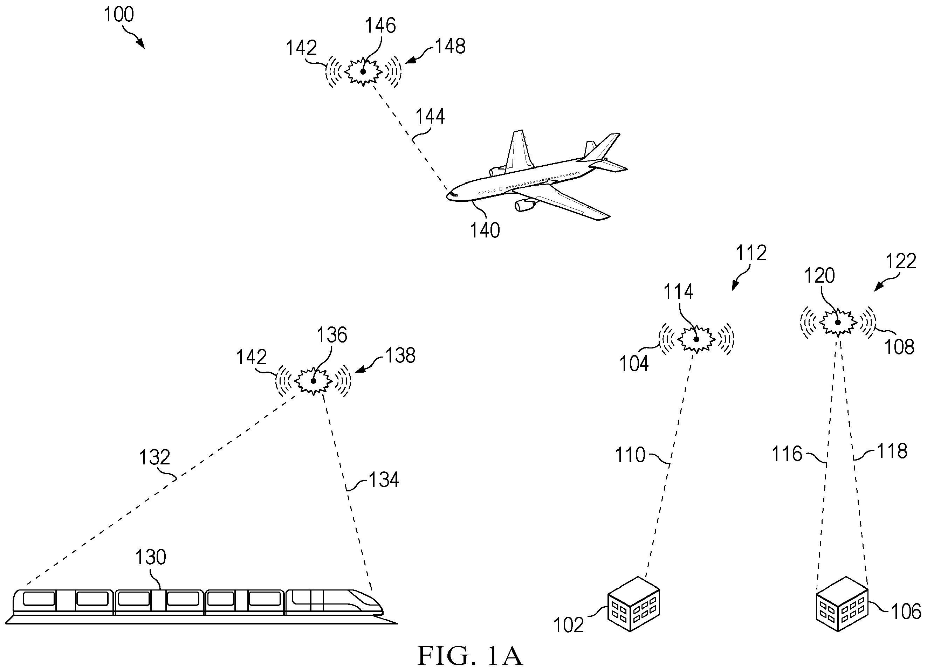

With reference now to the figures and, in particular, with reference to **Figure 1A****,** a pictorial representation of platforms that can transmit radio frequency signals using non-physical antennas is depicted in which illustrative embodiments may be implemented. As depicted, radio frequency signals can be transmitted from various platforms as depicted in this figure.

As depicted, ground station **102** can transmit radio frequency signals **104** without using a physical antenna. In a similar fashion, ground station **106** can also transmit radio frequency signals **108** without using a physical antenna.

In this example, laser beams are used by these ground stations to transmit the radio frequency signals. For example, ground station **102** emits laser beam **110** in a manner that causes optical breakdown **112** at optical breakdown point **114.** Radio frequency signals **104** are generated at and transmitted from optical breakdown point **114.**

In this example, ground station **106** emits laser beam **116** and laser beam **118** at optical breakdown point **120** to cause optical breakdown **122.** In this example, two laser beams are used to cause optical breakdown **122** that results in transmission of radio frequency signals **108.**

This type of transmission can be used from other platforms such as train **130.** In this example, train **130** emits laser beam **132** and laser beam **134** from different locations on train **130** at optical breakdown point **136.** The intersection of these two laser beams at optical breakdown point **136** causes optical breakdown **138.** As a result, radio frequency signals **142** are transmitted in response to optical breakdown **138** at optical breakdown point **136.**

As another example, airplane **140** transmits radio frequency signals **142** using laser beam **144.** As depicted, laser beam **144** is emitted from airplane **140** at optical breakdown point **146.** Optical breakdown **148** occurs at optical breakdown point **146** which results in the transmission of radio frequency signals **142.**

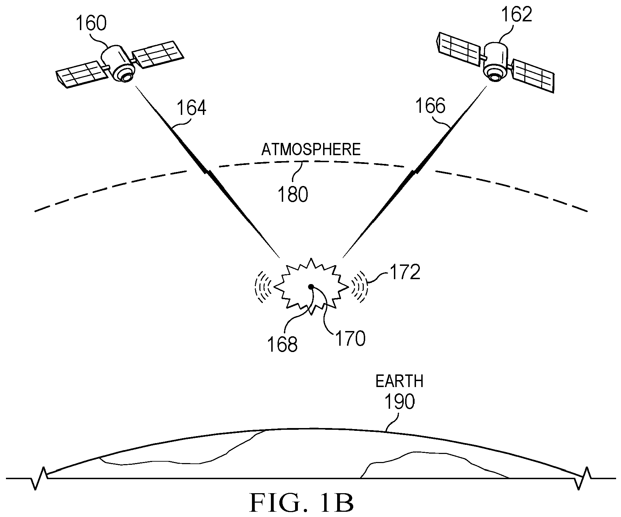

Turning now to **Figure 1B****,** a pictorial representation of platforms that can transmit radio frequency signals using non-physical antennas from space in which illustrative embodiments may be implemented. As another example, in **Figure 1B****,** satellite **160** emits laser **164** from space into the atmosphere **180** above earth **190** while satellite **162** emits laser **166** from space into the atmosphere **180** such that laser **164** and laser **166** intersect at optical breakdown point **168** causing optical breakdown **170** which results in radio frequency signals **172** originating and emanating from optical breakdown point **168.**

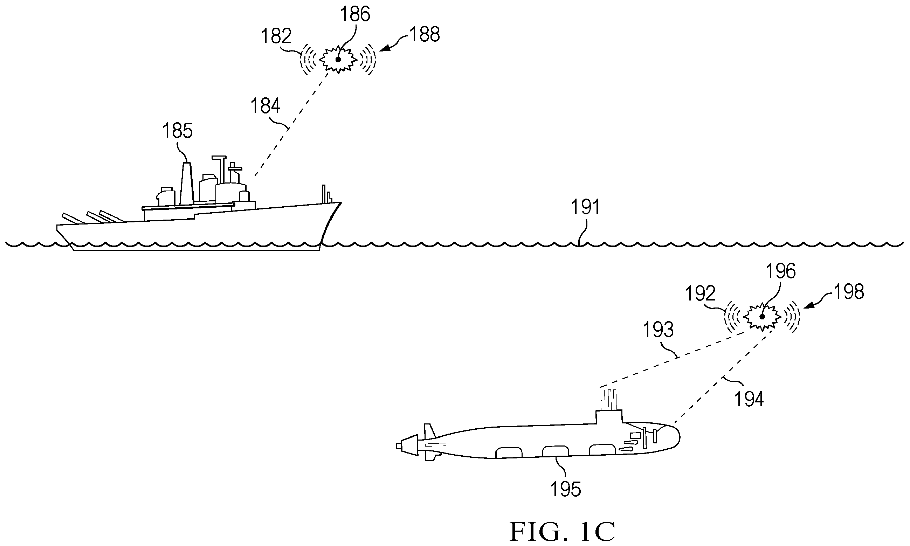

Turning now to **Figure 1C****,** a pictorial representation of platforms that can transmit radio frequency signals using non-physical antennas on, in, or under water **191** in which illustrative embodiments may be implemented. In this example, ship **185** emits laser beam **184** from ship **185** in a manner that causes and controls optical breakdown **188** at optical breakdown point **186.** As a result, radio frequency signals **182** as well as light emissions are transmitted in response to optical breakdown **188** at optical breakdown point **186.**

As another example, submarine **195** emits laser beam **193** and laser beam **194** from different locations on submarine **195.** The intersection of these two laser beams at optical breakdown point **196** causes optical breakdown **198** which results in the transmission of radio frequency signals **192** as well as underwater light emissions, including visible and non-visible light frequencies.

As depicted, these radio frequency signals are generated without using physical antennas to transmit signals. Further, these radio frequency signals are transmitted at locations away from the platforms. As a result, identifying the platforms generating these radio frequency signals can be more difficult because antennas for transmitting the radio frequency signals are not visible. Further, tracking the location of where the radio frequency signals are generated does not provide identification of the platform or the platform location, nor the location of the communications system, computer system, communications manager, or the laser origination points in these examples.

The locations of these optical breakdowns are considered radio frequency source emitters that can be in remote locations from the platforms emitting the laser beams. As a result, identifying the locations of the platforms becomes more difficult with the absence of physical antennas. Note that these optical breakdowns are distinguished from "plasma antennas" or ionized air or water columns.

Illustration of the different platforms in radio frequency communications environment **100** are only provided as examples of platforms that can implement this type of radio frequency signal transmission. In other illustrative examples, other platforms in addition to or in place of these platforms can be used. For example, this type of radio frequency generation can be implemented in a surface ship, a car or truck, a cruise missile, an aerial vehicle, a tank, a submersible sensor, or some other suitable type of platform in other illustrative examples.

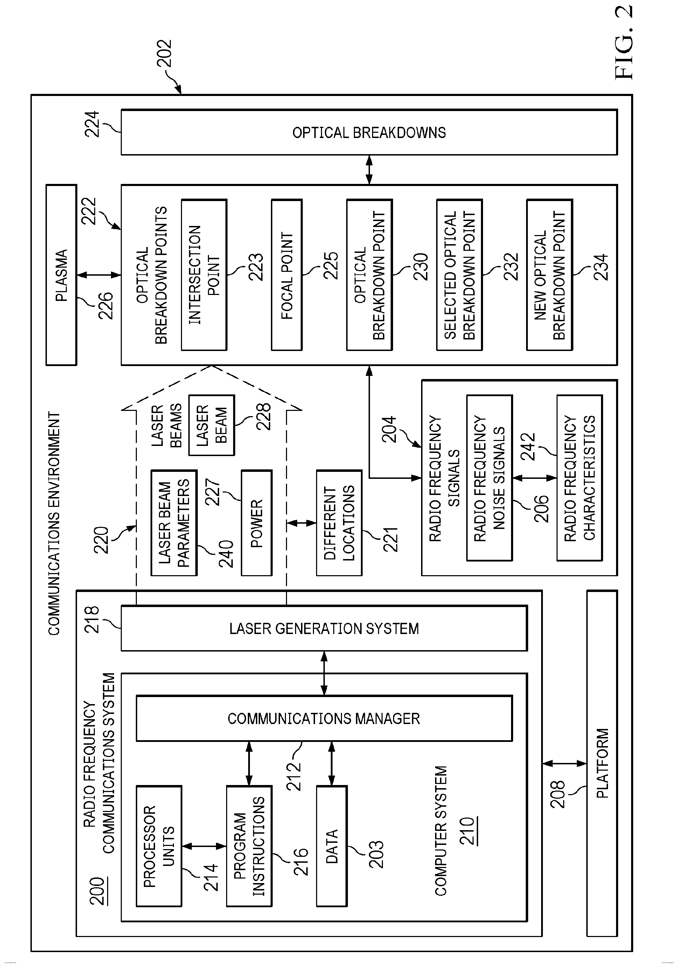

With reference now to **Figure 2****,** an illustration of a block diagram of a radio frequency communications environment is depicted in accordance with an illustrative embodiment. In this illustrative example, radio frequency communications system **200** in communications environment **202** can communicate data **203** by using radio frequency signals **204** in the form of radio frequency noise signals **206.**

Data **203** can take a number of different forms. For example, data **203** can be a document, a spreadsheet, sensor data, an image, a video, and email message, a text message, a webpage, a table, a data structure, serial data, commands, or other types of data that is to be transmitted or communicated. Data can also be analog or digital information and/or data. Analog and digital information and/or data can include, for example, music and audio.

In one illustrative example, a noise signal is a signal with irregular fluctuations that are or appear to be at least one of random, non-predictable, or non-deterministic.

Further, the phrase "at least one of," when used with a list of items, means different combinations of one or more of the listed items can be used, and only one of each item in the list may be needed. In other words, "at least one of" means any combination of items and number of items may be used from the list, but not all of the items in the list are required. The item can be a particular object, a thing, or a category.

For example, without limitation, "at least one of item A, item B, or item C" may include item A, item A and item B, or item B. This example also may include item A, item B, and item C or item B and item C. Of course, any combinations of these items can be present. In some illustrative examples, "at least one of" can be, for example, without limitation, two of item A; one of item B; and ten of item C; four of item B and seven of item C; or other suitable combinations.

A noise signal can be a signal that is statistically random. For example, a noise signal in these examples can be a signal that meets one or more standard tests for statistical randomness. A pseudorandom noise signal that seems to lack any definite pattern, although consisting of a deterministic sequence of pulses that repeats itself after its period is an example of a signal that is statistically random and considered a noise signal that can be used to encode data.

In this example, radio frequency noise signals **206** are electromagnetic noise signals that can have a frequency from around 20 kHz to above the Terahertz range. Radio frequency noise signals can include signals with frequencies such as extremely low frequency (ELF), high frequency (HF), and other types of frequencies. These noise signals can also include microwave noise signals and Terahertz noise signals. Electromagnetic noise signals can also be optical noise in the visible range, infrared, ultraviolet X-rays and other types of noise signals that can be used as modulated noise. For example, lasers used at optical breakdown also may transmit as various ranges of noisy light in addition to noisy broadband radio frequencies. Modulating this noisy light with different techniques such as pulse noise modulation is included in this disclosure.

In this illustrative example, radio frequency communications system **200** is associated with platform **208.** Platform **208** is an object that can transmit radio frequency noise signals **206** using radio frequency communications system **200.**

Platform **208** can take a number of different forms. For example, platform **208** can be one of a mobile platform, a stationary platform, a land-based structure, an aquatic-based structure, and a space-based structure. More specifically, the platform can be a surface ship, a tank, a personnel carrier, a train, an airplane, a commercial airplane, a spacecraft, a space station, a satellite, a submarine, an automobile, a ground station, a power plant, a bridge, a dam, a house, a manufacturing facility, a building, and other suitable platforms.

In this illustrative example, radio frequency communications system **200** comprises computer system **210** and communications manager **212.** In this example, communications manager **212** is located in computer system **210.**

As used herein, "a number of" when used with reference to items, means one or more items. For example, "a number of different forms " is one or more different forms.

Communications manager **212** can be implemented in software, hardware, firmware or a combination thereof. When software is used, the operations performed by communications manager **212** can be implemented in program instructions configured to run on hardware, such as a processor unit. When firmware is used, the operations performed by communications manager **212** can be implemented in program instructions and data and stored in persistent memory to run on a processor unit.

When hardware is employed, the hardware may include circuits that operate to perform the operations in communications manager **212.** The circuits used to implement communications manager **212** can take other forms in addition to or in place of a processor unit.

In the illustrative examples, the hardware used to implement communications manager **212** can take a form selected from at least one of a circuit system, an integrated circuit, an application-specific integrated circuit (ASIC), a programmable logic device, or some other suitable type of hardware configured to perform a number of operations. With a programmable logic device, the device can be configured to perform a number of operations. The device can be reconfigured at a later time or can be permanently configured to perform the number of operations. Programmable logic devices include, for example, a programmable logic array, a programmable array logic, a field-programmable logic array, a field-programmable gate array, and other suitable hardware devices. Additionally, the processes can be implemented in organic components integrated with inorganic components and can be comprised entirely of organic components excluding a human being. For example, the processes can be implemented as circuits in organic semiconductors.

Computer system **210** is a physical hardware system and includes one or more data processing systems. In this illustrative example, the data processing systems are hardware machines that can be configured to perform a sequence of operations. These operations can be performed in response to receiving an input in generating and output based on performing the operations. This output can be data in the form of values, commands, or other types of data. When more than one data processing system is present in computer system **210,** those data processing systems are in communication with each other using a communications medium. The communications medium may be a network. The data processing systems may be selected from at least one of a computer, a server computer, a tablet, or some other suitable data processing system.

As depicted, computer system **210** includes a number of processor units **214** that are capable of executing program instructions **216** implementing processes in the illustrative examples. In other words, program instructions **216** are computer-readable program instructions.

As used herein, a processor unit in the number of processor units **214** is a hardware device and is comprised of hardware circuits such as those on an integrated circuit that respond and process instructions and program code that operate a computer. When the number of processor units **214** executes program instructions **216** for a process, the number of processor units **214** can be one or more processor units that are on the same computer or on different computers. In other words, the process can be distributed between processor units **214** on the same or different computers in a computer system **210.**

Further, the number of processor units **214** can be of the same type or different type of processor units. For example, a number of processor units **214** can be selected from at least one of a single core processor, a dual-core processor, a multi-processor core, a general-purpose central processing unit (CPU), a graphics processing unit (GPU), a digital signal processor (DSP), or some other type of processor unit.

As depicted, radio frequency communications system **200** can also include laser generation system **218.** In other examples, laser generation system **218** can be considered a separate component controlled by radio frequency communications system **200.**

In this example, laser generation system **218** is a hardware system that can emit a set of laser beams **220.** The operation of laser generation system **218** can be controlled by communications manager **212.**

In this example, the set of laser beams **220** can be emitted from different locations **221.** For example, laser generation system **218** can be comprised of laser units that are positioned in different locations. Each location can have one or more laser units for laser generation system **218** in this illustrative example.

Communications manager **212** can identify data **203** for transmission using radio frequency noise signals **206.** Communications manager **212** controls an emission of a set of laser beams **220.** In this example, communications manager **212** directs or steers the set of laser beams **220** at a set of optical breakdown points **222.** In this example, the set of optical breakdown points **222** can be selected from at least one of intersection point **223** or focal point **225.**

As used herein, "a set of" when used with reference to items, means one or more items. For example, "a set of optical breakdown points **222"** is one or more of optical breakdown points **222.** In another example, a "set of laser beams" means one or more laser beams.

In this example, intersection point **223** can be a location where two or more laser beams intersect. This location can be where an optical breakdown occurs from the intersection of two or more laser beams when the power **227** of two or more intersecting laser beams is sufficient to cause an optical breakdown. Focal point **225** can be a location where the laser beam is focused to cause an optical breakdown to occur at that location.

This emission of the set of laser beams **220** is controlled by communications manager **212** to cause optical breakdowns **224** at the set of optical breakdown points **222** that generate radio frequency noise signals **206** encoding data **203.** In this illustrative example, plasma **226** occurs at optical breakdown points **222** in response to optical breakdowns **224** by the set of laser beams **220.** This plasma generated by optical breakdowns **224** causes radio frequency noise signals **206** to be transmitted at the set of optical breakdown points **222.**

In this example, power **227** of laser beam **228** in the set of laser beams **220** at optical breakdown point **230** in the set of optical breakdown points **222** can be controlled using different mechanisms. For example, power **227** can be controlled by at least one of a shutter, a lens, a deformable lens, a microelectromechanical systems mirror, an attenuator, a controlling optics, an optical filter, an amplitude modulator in a laser beam generator, or other device.

In this illustrative example, communications manager **212** can control the emission of the set of laser beams **220** by laser generation system **218** in a number of different ways. For example, communications manager **212** can control laser generation system **218** to emit a first number of the set of laser beams **220** continuously at the set of optical breakdown points **222.** Communications manager **212** can control laser generation system **218** to pulse a second number of the set of laser beams **220** at the set of optical breakdown points **222** to cause optical breakdowns **224** that generate radio frequency noise signals **206** encoding data **203.** The laser beam can be pulsed by turning the laser beam on and off. In another example, a laser beam can be pulsed by varying the power of the laser beam. In other words, the power can be pulsed by increasing and decreasing the power of the laser beam.

In another illustrative example, communications manager **212** can control laser generation system **218** to emit the set of laser beams **220** at the set of optical breakdown points **222** causing optical breakdowns **224** that generate radio frequency noise signals **206** encoding data **203.**

In this example, the emission of the set of laser beams **220** can be performed in a number of different ways. The set of laser beams can be emitted as at least one of as pulsed or continuous. For example, one laser beam can be continuous while another laser beam is pulsed. Further, the laser beams can be originated from different directions at the set of optical breakdown points **222.**

The direction at which a laser beam is emitted can move or sweep back such that an optical breakdown point is included during the movement of the laser beam. In other words, during the sweeping of the laser beam the laser beam can intersect with another laser beam. The intersection of this laser beam with another laser beam emitted the optical breakdown point can cause the optical breakdown at that optical breakdown point.

In another illustrative example, communications manager **212** can control laser generation system **218** to emit the set of laser beams **220** at selected optical breakdown point **232** in the set of optical breakdown points **222.** Communications manager **212** can select new optical breakdown point **234** in the set of optical breakdown points as the selected optical breakdown point. Communications manager **212** can repeat emitting the set of laser beams **220** and selecting the new optical breakdown point while generating radio frequency noise signals **206** encoding data **203.**

In yet another illustrative example, communications manager **212** can control laser generation system **218** to emit the set of laser beams **220** from different locations **221** at optical breakdown point **230.** In this example, a portion of the set of laser beams **220** intersect at optical breakdown point **230** such that power **227** from the portion of the set of laser beams **220** is sufficient to cause optical breakdowns **224** at intersection point **223** that generate radio frequency noise signals **206** encoding data **203.**

As another example, communications manager **212** can control laser generation system **218** to emit the set of laser beams **220** at optical breakdown point **230.** In this example, optical breakdowns **224** occur in response to all of the set of laser beams **220** intersecting at optical breakdown point **230.**

In controlling the emission of the set of laser beams **220,** communication manager **212** can change a set of laser beam parameters **240** for the set of laser beams **220** to encode data **203** into radio frequency noise signals **206** or visible and/or non-visible light. Laser beam parameters **240** include but are not limited to pulse durations, pulse repetition rate, beam diameter, beam profile (temporal and spatial), optical focal length, pulse shape, power, frequency, wavelength, directivity, gain, efficiency, and physical properties of propagation media such as index of refraction. In this example, changing the set of laser beam parameters **240** changes a set of radio frequency characteristics **242** for radio frequency noise signals **206** or visible and/or non-visible light. The set radio frequency characteristics **242** for radio frequency noise signals **206** can be selected from at least one of a timing, an optical breakdown point, an amplitude of the radio frequency noise signals, a frequency band, a relative phase, or other characteristics for radio frequency noise signals **206.**

In yet another illustrative example, communications manager **212** can control laser generation system **218** to emit a subset of the set of laser beams **220** at the set of optical breakdown points **222** to cause the optical breakdowns **224** that generates radio frequency noise signals **206** encoding data **203.** Communications manager **212** can select a new subset of the set of laser beams **220** as the subset of laser beams **220.** Communications manager **212** can repeat emitting of the subset of the set of laser beams **220** and selecting the new subset of the set of laser beams **220** while transmitting radio frequency noise signals **206** encoding the data **203.**

Thus, one or more illustrative examples enable transmitting radio frequency noise signals using radio frequency source emitters that do not require physical structures. As a result, one or more illustrative examples can overcome an issue with the vulnerability present in using physical source emitters such as antennas. In the illustrative examples, the optical breakdown points for the optical breakdowns are radio frequency source emitters.

Further, these radio frequency source emitters can be moved almost instantaneously to different locations by repositioning the laser beams such that the laser beams point at different optical breakdown points. Attacks at these radio frequency source locations are attacks at the optical breakdown points where the plasma is generated. As a result, kinetic attacks against these locations are useless because the laser modulation sources are remote from the locations of these radio frequency source emitters.

The illustration of communications environment **202** to in **Figure 2** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, although communications manager **212** is shown as being implemented using program instructions **216** run on a number of processor units **214** in computer system **210,** communications manager **212** can be implemented in other hardware instead of or in addition to the number of processor units **214.** For example, computer system **210** may use other hardware in addition to or in place of the number of processor units **214.**

For example, other types of hardware circuits capable of performing the operations for communications manager **212** can be used. This other hardware can be at least one of a circuit system, an integrated circuit, an application-specific integrated circuit (ASIC), a programmable logic device, or some other suitable type of hardware configured to perform a number of operations.

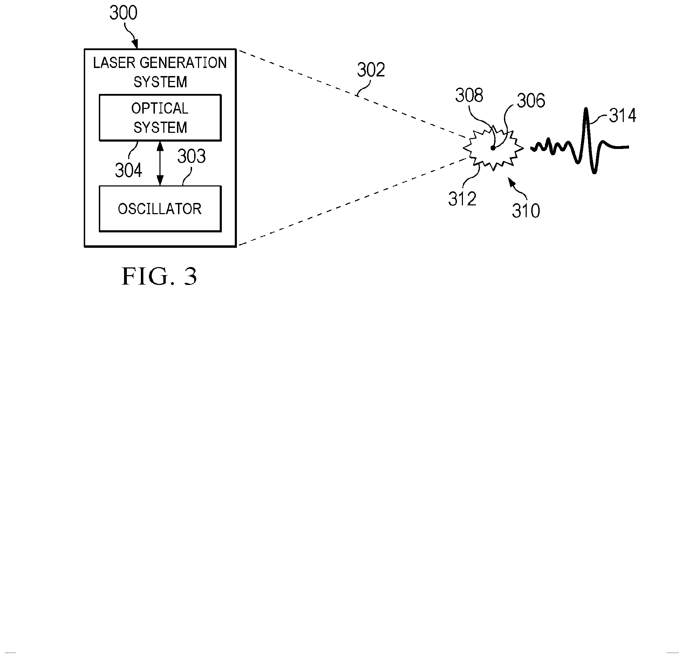

Turning next to **Figure 3****,** an illustration of radio frequency noise generation using a laser beam is depicted in accordance with an illustrative embodiment. This depicted example in **Figure 3** illustrates how a single laser beam can be used to generate radio frequency signals.

In this illustrative example, laser generation system **300** is an example of laser generation system **218** in **Figure 2****.** Laser generation system **300** emits laser beam **302.**

As depicted, laser generation system **300** comprises a number of different components. In this example, laser generation system **300** includes oscillator **303** and optical system **304.**

Oscillator **303** generates coherent light for emitting laser beam **302.** In this example, optical system **304** can focus laser beam **302.** Optical system **304** includes at least one of a lens, a mirror, or other optical element that can change the focus of laser beam **302.**

In this example, the focus of laser beam **302** is controlled such that the power at focal point **306** is an optical breakdown point **308** where optical breakdown **310** occurs. As depicted in this example, optical breakdown **310** results in the generation of plasma **312.** Plasma **312** resulting from optical breakdown **310** causes the generation of radio frequency noise signal **314.** Thus, this example illustrates how a single laser beam can be used to generate radio frequency signals.

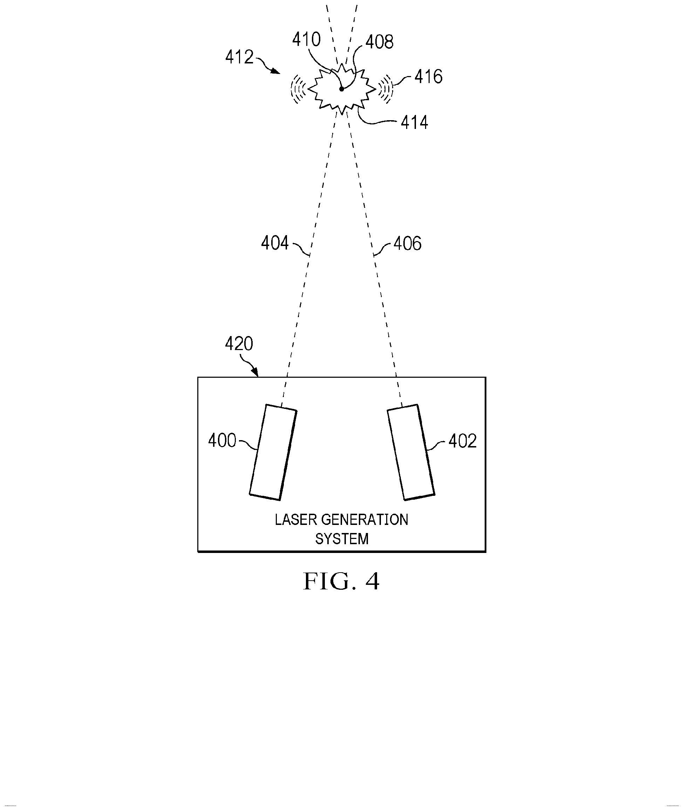

Turning next to **Figure 4****,** an illustration of radio frequency noise generation using a plurality of laser beams is depicted in accordance with an illustrative embodiment. In this illustrative example, laser generation system **420** comprises laser unit **400** and laser unit **402.** Laser generation system **420** is an example of an implementation for laser generation system **218** in **Figure 2****.**

In this illustrative example, laser unit **400** generates first laser beam **404.** Laser unit **402** generates second laser beam **406.**

In this example, first laser beam **404** and second laser beam **406** are emitted in directions from these laser beam units to intersect at optical breakdown point **408.** These two laser beams are emitted along different paths that intersect at optical breakdown point **408.** This optical breakdown point where the two laser beams intersect each other is intersection point **410.**

In this example, the intersection of first laser beam **404** and second laser beam **406** results in optical breakdown **412.** This optical breakdown generates plasma **414.** As depicted in this example, optical breakdown **412** results in radio frequency noise signals **416.**

As depicted in the example, optical breakdown **412** occurs where first laser beam **404** and second laser beam **406** intersect at intersection point **410.** In this example, the power for first laser beam **404** and second laser beam **406** individually is not sufficient to cause an optical breakdown.

The illustration of the two laser units for laser generation system **420** in **Figure 4** is provided as an example of one implementation for generating radio frequency noise signals. This illustration is not meant to limit the manner in which other illustrative examples can be implemented. In another example, one or more laser units in addition to laser unit **400** and laser unit **402** can be used to generate additional laser beams. The laser beams can also intersect at intersection point **410** to cause optical breakdown **412.**

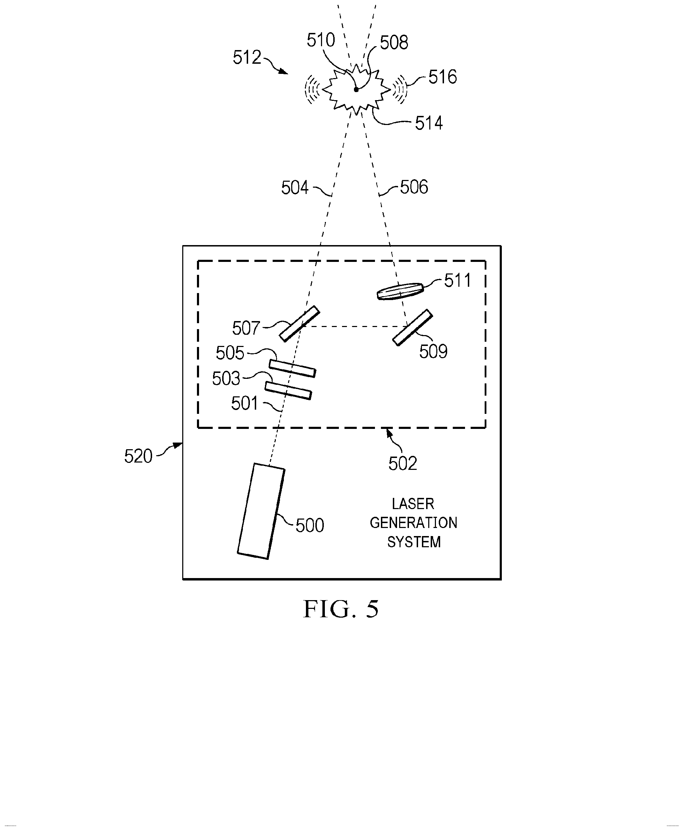

Turning next to **Figure 5****,** an illustration of radio frequency noise generation using a plurality of laser beams is depicted in accordance with an illustrative embodiment. In this illustrative example, laser generation system **520** comprises laser unit **500** and optical system **502.** Laser generation system **520** is an example of an implementation for laser generation system **218** in **Figure 2****.**

In this example, laser unit **500** emits first laser beam **504** and second laser beam **506.** In this example, laser unit **500** generates initial laser beam **501** that is split into two laser beams, first laser beam **504** and second laser beam **506** by optical system **502.**

As depicted, optical system **502** comprises a number of different components. In this depicted example, optical system **502** comprises shutter **503,** variable attenuator **505,** beam splitter **507,** mirror **509,** and lens **511.**

The components depicted are example components that can be used in optical system **502** and can change in other illustrative examples. For example, one or more of lens **511,** variable attenuator **505,** and shutter **503** may be omitted in other illustrative examples. In yet other illustrative examples, other components may be added such as a lens located before beam splitter **507.**

As depicted, initial laser beam **501** is split into two laser beams by beam splitter **507.** Mirror **509** can be used to direct second laser beam **506** in different directions. Further, mirror **509** can be used to provide focus to increase the power of second laser beam **506** at a focal point such as optical breakdown point **508.** Lens **511** also can be used to provide focus to increase the power of second laser beam **506** at optical breakdown point **508.**

In this example, first laser beam **504** and second laser beam **506** are emitted in directions to intersect at optical breakdown point **508,** which is intersection point **510** in this example. Optical breakdown **512** occurs at this intersection of first laser beam **504** and second laser beam **506,** generating plasma **514** that results in the generation of radio frequency noise signals **516.**

In this example, the power of first laser beam **504** and second laser beam **506** are sufficient to cause optical breakdown **512** at the intersection of the laser beams. Optical breakdowns do not occur in other locations where these laser beams do not intersect each other in this example.

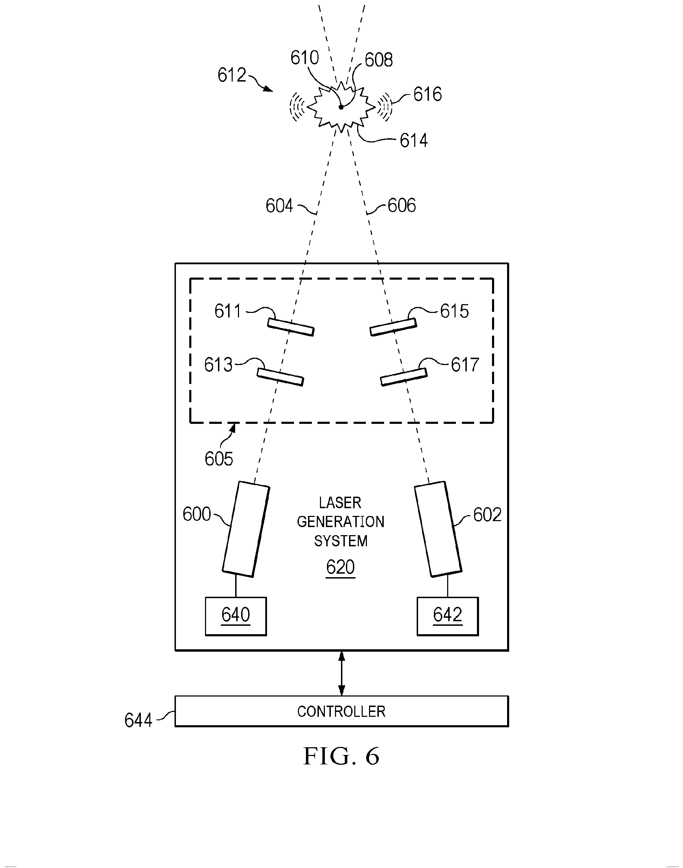

With reference now to **Figure 6****,** an illustration of a diagram for controlling radio frequency noise generation is depicted in accordance with an illustrative embodiment. In this illustrative example, the operation of laser generation system **620** is controlled by controller **644.** As depicted, laser generation system comprises laser unit **600,** laser unit **602,** first power source **640,** second power source **642,** and optical system **605.** In this example, controller **644** can control the operation of laser generation system **620.**

In this example, laser generation system **620** is an example of an implementation for laser generation system **218** in **Figure 2****.** Controller **644** is an example a component that can be implemented in communications manager **212** in **Figure 2****.**

In this illustrative example, controller **644** can control the emission of first laser beam **604** and second laser beam **606** from laser generation system **620.** In this illustrative example, laser unit **600** generates first laser beam **604** using power supplied by first power source **640.** Laser unit **602** generates second laser beam **606** using power supplied by second power source **642.**

In this example, first laser beam **604** and second laser beam **606** are emitted in directions that have paths that intersect at optical breakdown point **608,** which is intersection point **610.** Optical breakdown **612** occurs at this intersection of first laser beam **604** and second laser beam **606,** generating plasma **614** that results in the transmission of radio frequency noise signals **616.**

In this example, controller **644** can control the emission of these laser beams such that at least one of first laser beam **604** or second laser beam **606** is pulsed. This pulsing can include at least one of turning a laser beam on and off for increasing and decreasing the power of the laser beam. This pulsing of one or both of first laser beam **604** and second laser beam **606** can be controlled to control the timing of radio frequency noise generation.

When pulsed, optical breakdown **612** occurs when both laser beams intersect at intersection point **610.** When one laser beam is turned off, and intersection is not present between both laser beams and optical breakdown **612** does not occur. By controlling the timing of when first laser beam **604** and second laser beam **606** intersect at intersection point **610,** controller **644** can control the generation of radio frequency noise signals in a manner that encodes information and/or data.

For example, data can be encoded in radio frequency noise signals based on the timing of when radio frequency noise signals are generated. As another example, the timing of the laser beams can be used to control the duration of radio frequency noise signals. This duration can also be used to encode data into the radio frequency noise signals.

In this illustrative example, controller **644** can control whether a laser unit emits a continuous laser beam or a pulsed laser beam using components such as first power source **640** and second power source **642.** These power sources can be turned on and off to turn the laser beams on and off. With this pulsing, optical breakdowns occur when both laser beams are on and intersect at intersection point **610.**

In this example, the pulsing can also include increasing and decreasing the power in one or both of first laser beam **604** and second laser beam **606.** In this example, decreasing the power of one or both laser beams can prevent the occurrence of an optical breakdown because of insufficient power being present when first laser beam **604** and second laser beam **606** intersect at intersection point **610.** Optical breakdown **612** occurs when the power present from both laser beams intersecting at intersection point **610** is high enough for an optical breakdown.

As another example, the pulsing of the laser beams can also be controlled using optical elements in optical system **605.** These optical elements can be controlled by controller **644** to pulse one or more of first laser beam **604** and second laser beam **606.**

For example, variable attenuator **611** and shutter **613** can be operated to pulse first laser beam **604.** For example, shutter **613** can be used to selectively emit first laser beam **604.** Variable attenuator **611** can be used to change the power of first laser beam **604.** In similar fashion, the emission of second laser beam **606** can also be pulsed using variable attenuator **615** and shutter **617.**

Thus, the emission of first laser beam **604** and second laser beam **606** from laser generation system **620** can be controlled by controller **644** such that both laser beams are continuous, one laser beam is continuous while the other laser beam is pulsed, or both laser beams are pulsed. This control can be performed to achieve optical breakdowns to transmit radio frequency noise signals in a manner that encodes data into the radio frequency signals.

The illustration of laser generation system **620** is an example of one implementation and is not meant to limit the manner in which other illustrative examples can be implemented. For example, in other illustrative examples one or more laser units can be present in addition to laser unit **600** and laser unit **602.**

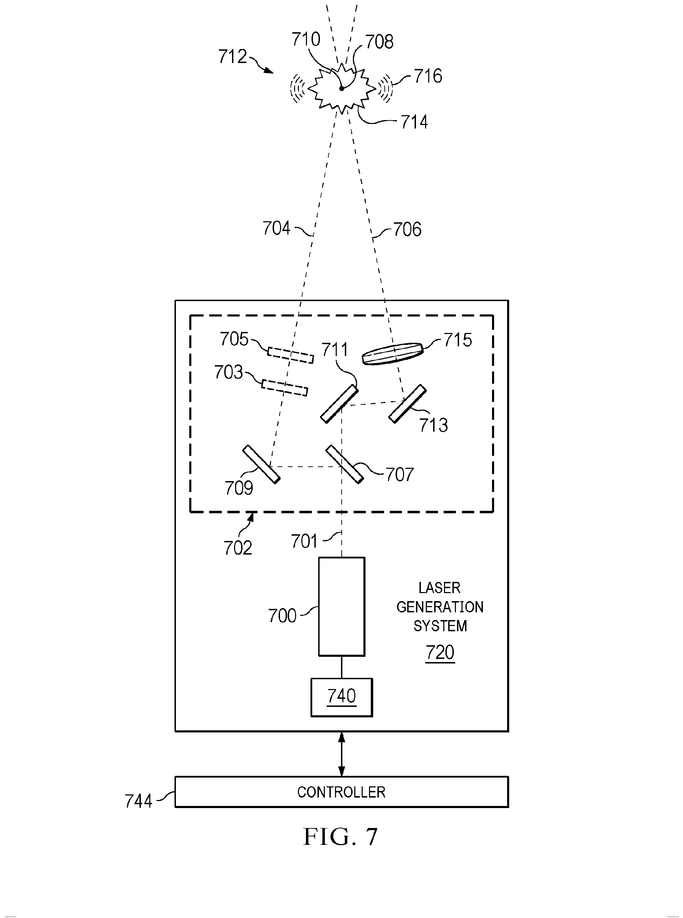

With reference next to **Figure 7****,** an illustration of a diagram for controlling radio frequency noise generation is depicted in accordance with an illustrative embodiment. In this illustrative example, laser generation system **720** is controlled by controller **744.** As depicted, laser generation system **720** comprises laser unit **700,** power source **740,** and optical system **702.**

Laser generation system **720** is an example of an implementation for laser generation system **218** in **Figure 2****.** Controller **744** is an example of the components that can be implemented in communications manager **212** in **Figure 2****.**

In this illustrative example, controller **744** controls the emission of first laser beam **704** and second laser beam **706** from laser generation system **720.** In this illustrative example, laser unit **700** generates first laser beam **704** and second laser beam **706** using power supplied by power source **740.** In this example, laser unit **700** generates initial laser beam **701** that is split into two laser beams, first laser beam **704** and second laser beam **706** by optical system **702.**

As depicted, optical system **702** comprises a number of different components. In this example, optical system **702** comprises shutter **703,** variable attenuator **705,** beam splitter **707,** and mirror **709,** mirror **711,** mirror **713,** and lens **715** as other components that can be located in optical system **702.** The components depicted are example components that can be used in optical system **702** and these components can change in other illustrative examples. For example, one or more lens **715,** variable attenuator **705,** and shutter **703** may be omitted in other illustrative examples. In yet other illustrative examples, other components may be included such as a lens located before beam splitter **707.**

As depicted, initial laser beam **701** is split into two laser beams by beam splitter **707.** In this example, first laser beam **704** and second laser beam **706** are emitted in directions to intersect at optical breakdown point **708,** which is intersection point **710** in this example. Optical breakdown **712** occurs at this intersection of first laser beam **704** and second laser beam **706.** Optical breakdown **712** generates radio frequency signal **716** through plasma **714** occurring from optical breakdown **712.**

In this example, the power of the first laser beam **704** and second laser beam **706** are sufficient to cause optical breakdown **712** at the intersection of the laser beams. Optical breakdowns do not occur in other locations where these laser beams do not intersect each other in this example.

In this example, controller **744** can control the emission of these laser beams such that at least one of first laser beam **704** or second laser beam **706** is pulsed. This pulsing can include at least one of turning a laser beam on and off for increasing and decreasing the power of the laser beam. This pulsing of one or both of first laser beam **704** and second laser beam **706** can be controlled to control the timing of radio frequency noise generation.

In this example, first laser beam **704** can be pulsed by controller **744** controlling the operation of at least one of variable attenuator **705** or shutter **703.** Variable attenuator **705** can be used to change the power of first laser beam **704.** Shutter **703** can turn laser beam on and off with respect to emissions of laser beams from laser generation system **720.** In this example, both laser beams can be pulsed at the same time by controlling power source **740.** In another illustrative example, components within laser unit **700** such as an amplitude modulator can be controlled to pulse the power of initial laser beam **701** resulting in a pulsing of both first laser beam **704** and second laser beam **706.**

By controlling the timing of when first laser beam **704** and second laser beam **706** intersect at intersection point **710,** controller **744** can control the generation of radio frequency noise signals in a manner that encodes data.

In yet another illustrative example, controller **744** can control the location of optical breakdown point **708** by moving one or both of first laser beam **704** and second laser beam **706.** This movement of optical breakdown point **708** can be controlled using at least one of mirror **709** or mirror **713.** By moving the location of optical breakdown point **708,** the phase of radio frequency noise signal can be changed to encode data.

The illustration of example implementations for laser generation system **218** in **Figure 2** and in **Figures 3-****7** have been provided as an example of some illustrative examples and are not meant to limit the manner in which other laser generation systems can be implemented. For example, a laser generation system can include both a first laser unit and a second laser unit with an optical system. In yet another illustrative example, one or more laser units can be present that emit laser beams in addition to the ones depicted at different optical breakdown points. With this example, two or more optical breakdowns can occur from laser beams emitted from a laser generation system.

In yet another illustrative example, different laser beams can be emitted at different times at the same optical breakdown point. As a result, optical breakdowns can be generated from different combinations of laser beams at the same optical breakdown point.

The illustrative embodiments also recognize and take into account that current techniques for transmitting data involves the use of carrier wave forms. For example, many techniques use only periodic, sinusoidal, or other repetitive or predictable carrier wave forms that are modulated to encode data. These types of waveforms can be detected in noise through various techniques including the denoiser technology which can detect sinusoidal carriers at 20 dB to 40 dB below a noise floor.

As a result, interception and decoding of signals can occur using current transmission techniques. Further, when the sinusoidal carriers can be detected, security issues can arise. For example, information can be inserted into transmissions, jamming attacks can occur, or other issues with using single sinusoidal, periodic, or other repetitive carriers to transmit data.

Thus, the illustrative embodiments provide a method, apparatus, and system for transmitting data. In the illustrative examples, this data can be transmitted using various modulation techniques that modulate noise signals. The use of noise signals is in contrast to the use of a sinusoidal, periodic, repetitive, or predictable carrier that can be detected.

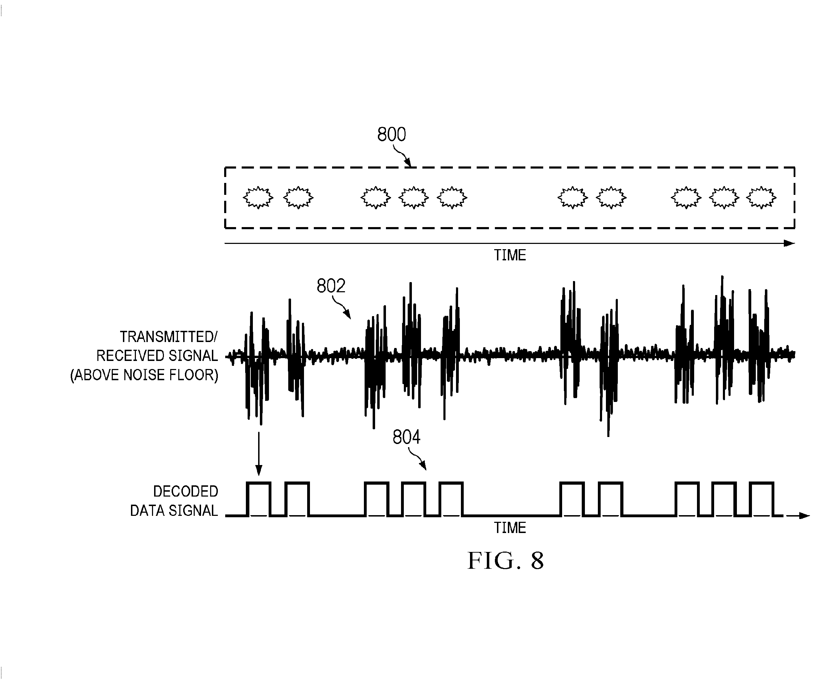

Turning to **Figure 8****,** an illustration of data transmission using pulse code noise modulation (also called pulse noise modulation) is depicted in accordance with an illustrative embodiment. In this illustrative example, pulse code noise modulation or pulse noise modulation can be performed using a radio frequency communication system such as radio frequency communication system **200** in **Figure 2****.**

In this illustrative example, optical breakdowns are generated over time. These optical breakdowns result in the generation of plasma **800** that causes radio frequency noise signals **802** to be transmitted.

The timing of these optical breakdowns can be selected to encode data such that the generation of radio frequency noise signals **802** encode the data. In this example, pulses are present in radio frequency noise signals **802** with timing that corresponds to the timing of optical breakdowns that generated plasma **800.** These pulses of radio frequency noise signals **802** are timed to encode data. This type of encoding of data can be referred to as pulse noise modulation. As depicted, radio frequency noise signals **802** can be received and decoded to obtain decoded data signal **804.**

This illustration of using radio frequency noise signals generated by optical breakdowns to communicate data is presented as one example of how pulses of radio frequency noise signals can encode data. This illustration is not meant to limit the manner in which other illustrative examples can be implemented.

For example, the pulses of radio frequency noise signals can be generated using other techniques in addition to or in place of laser-induced optical breakdowns. A transmitter system can use a noise signal as a carrier signal and a modulator to modulate the carrier signal such that pulses of radio frequency noise are transmitted that encode the data.

In still other illustrative examples, other types of noise signals in addition to or in place of radio frequency electromagnetic noise signals can be used. For example, noise signals can be used for transmitting data encoded in pulses and can be selected from at least one of electromagnetic frequency noise signals, radio frequency noise signals, microwave frequency signals, audio frequency noise signals, ultrasonic frequency noise signals, ultra-low frequency noise signals, very low frequency noise signals, underwater frequency noise signals, optical frequency noise signals, or other types of noise signals. These different types of noise signals can be used for various applications including speech communication, music, or other types of information for data that that are encoded in the noise signals.

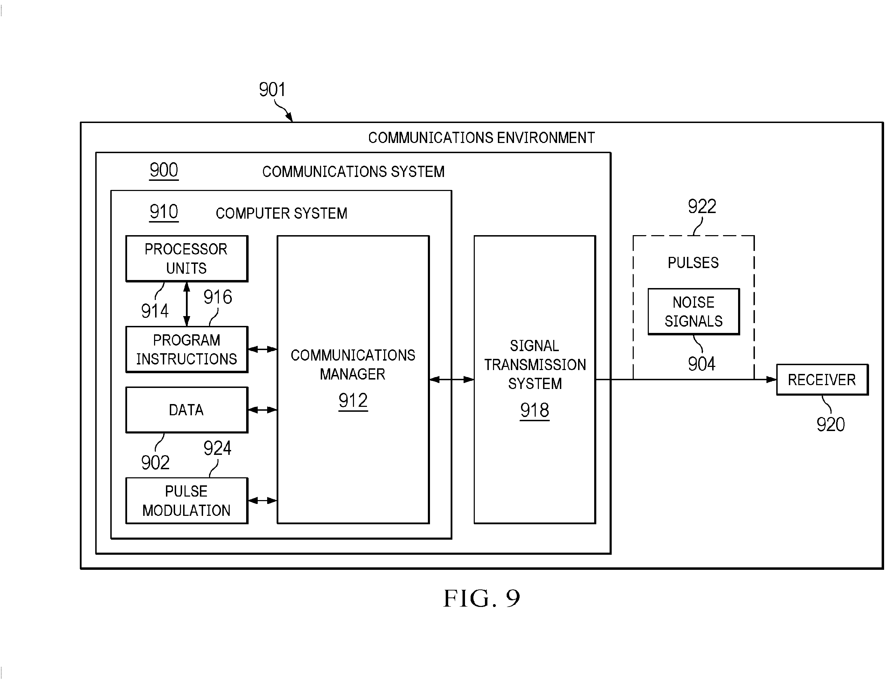

With reference next to **Figure 9****,** an illustration of a block diagram of a communication system is depicted in accordance with an illustrative embodiment. In this illustrative example, communications system **900** in communications environment **901** operates to transmit data **902** encoded in noise signals **904.**

In one illustrative example, a noise signal is a signal with irregular fluctuations that are or appear to be random, non-predictable, or non-deterministic. A noise signal can be a signal that is statistically random. For example, a noise signal in these examples can be a signal that meets one or more standard tests for statistical randomness. A pseudorandom noise signal that seems to lack any definite pattern, although consisting of a deterministic sequence of pulses that repeats itself after its period is an example of a signal that is statistically random and considered a noise signal that can be used to encode data. In this example, the noise in noise signals **904** can be selected from at least one of nondeterministic noise, pseudo random noise, or some other suitable type of noise signal.

In the illustrative example, signals can have characteristics selected from at least one of amplitude, frequency, bandwidth, timing, phase, or other characteristics. In this illustrative example, noise signals **904** can be noise signals in which at least one of these characteristics are not controlled to encode the data. In other words, at least one or more of these characteristics meet one or more standard tests for statistical randomness in noise signals **904.**

In these examples, noise signals **904** do not include carrier waves that are periodic. These types of signals can be, for example, sinusoidal, sawtooth, square, or other types of signals. Noise signals **904** also do not include periodic or sinusoid-based carrier signals that employ spread spectrum, frequency-hopping signals, and radar "chirps" that are based on periodic signals such as sinusoids or sawtooths. These and other types of signals that do not meet one or more standard tests for statistical randomness are not considered noise signals **904** in this example. However, "spread noise spectrum", frequency-hopping noise signals, and noise-based radar bursts that use noise as the basis of their carrier signals are considered noise signals **904** in this example.

As depicted, communications system **900** comprises computer system **910** and communications manager **912** located in computer system **910.**

Communications manager **912** can be implemented in software, hardware, firmware or a combination thereof. When software is used, the operations performed by communications manager **912** can be implemented in program instructions configured to run on hardware, such as a processor unit. When firmware is used, the operations performed by communications manager **912** can be implemented in program instructions and data and stored in persistent memory to run on a processor unit.

When hardware is employed, the hardware may include circuits that operate to perform the operations in communications manager **912.**

The circuits used to implement communications manager **912** can take other forms in addition to or in place of a processor unit.

In the illustrative examples, the hardware used to implement communications manager **912** can take a form selected from at least one of a circuit system, an integrated circuit, an application-specific integrated circuit (ASIC), a programmable logic device, or some other suitable type of hardware configured to perform a number of operations. With a programmable logic device, the device can be configured to perform the number of operations. The device can be reconfigured at a later time or can be permanently configured to perform the number of operations. Programmable logic devices include, for example, a programmable logic array, a programmable array logic, a field-programmable logic array, a field-programmable gate array, and other suitable hardware devices. Additionally, the processes can be implemented in organic components integrated with inorganic components and can be comprised entirely of organic components excluding a human being. For example, the processes can be implemented as circuits in organic semiconductors.

Computer system **910** is a physical hardware system and includes one or more data processing systems. In this illustrative example, the data processing systems are hardware machines that can be configured to perform a sequence of operations. These operations can be performed in response to receiving an input in generating and output based on performing the operations. This output can be data in the form of values, commands, or other types of data. When more than one data processing system is present in computer system **910,** those data processing systems are in communication with each other using a communications medium. The communications medium may be a network. The data processing systems may be selected from at least one of a computer, a server computer, a tablet, or some other suitable data processing system.

As depicted, computer system **910** includes a number of processor units **914** that are capable of executing program instructions **916** implementing processes in the illustrative examples. In other words, program instructions **916** are computer-readable program instructions.

As used herein, a processor unit in the number of processor units **914** is a hardware device and is comprised of hardware circuits such as those on an integrated circuit that respond and process instructions and program code that operate a computer. When the number of processor units **914** executes program instructions **916** for a process, the number of processor units **914** can be one or more processor units that are on the same computer or on different computers. In other words, the process can be distributed between processor units **914** on the same or different computers in a computer system **910.**

Further, the number of processor units **914** can be of the same type or different type of processor units. For example, a number of processor units **914** can be selected from at least one of a single core processor, a dual-core processor, a multi-processor core, a general-purpose central processing unit (CPU), a graphics processing unit (GPU), a digital signal processor (DSP), or some other type of processor unit.

As depicted, communications system **900** can also include signal transmission system **918.** In other examples, signal transmission system **918** can be considered a separate component controlled by communications system **900.**

In this depicted example, signal transmission system **918** is a hardware system that can transmit noise signals **904.** The operation of signal transmission system **918** can be controlled by communications manager **912.**

In this illustrative example, noise signals **904** are received by receiver **920.** Receiver **920** is also depicted as part of communication system **900.** In yet other illustrative examples, receiver **920** may be a separate component from communications system **900.**

Receiver **920** is a hardware system and can include processes implemented in hardware or software that decode data **902** that is encoded in pulses **922** of noise signals **904.**

In this illustrative example, communications manager **912** identifies data **902** for transmission. In response to identifying data **902,** communications manager **912** transmits pulses **922** of noise signals **904** encoding data **902.** In one illustrative example, data **902** can be encoded in pulses **922** of noise signals **904** using at least one of a timing of the pulses **922,** an amplitude of the pulses **922,** duration of pulses **922,** or other characteristic for pulses **922.** In this manner, communications manager **912** can perform pulse noise modulation through the modulation of noise signals **904** to encode data **902.**

For example, communications manager **912** can control the operation of signal transmission system **918** to perform pulse modulation **924.** With pulse modulation **924,** pulses **922** can encode data **902** through the timing of pulses **922** which are noise pulses or pulses of noise in this example.

For example, the presence of a noise pulse or pulse of noise can be considered a "1" and the absence of a noise pulse or pulse of noise can be considered a "0" which can be selected in time to encode data **902.** The timing of the presence or absence of pulses **922** of noise can occur using various time periods.

For example, the timing can be based on whether a noise pulse or pulse of noise is present or absent at each period of time. The period of time can be, for example, a microsecond, a millisecond, two milliseconds, or some other period of time during which a pulse is absent or present for encoding data **902** in pulses **922** of noise.

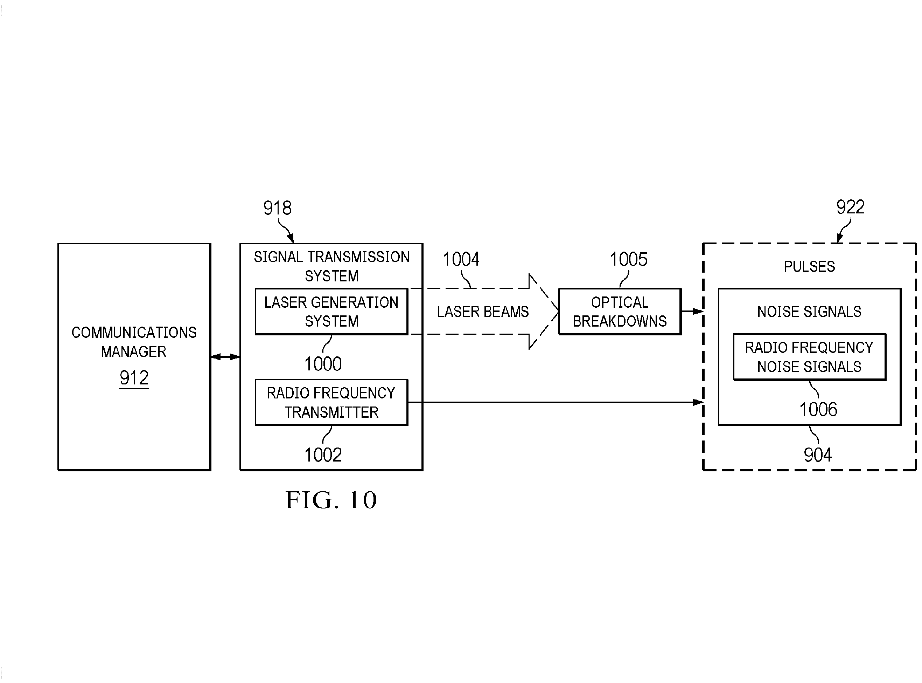

With reference next to **Figure 10****,** an illustration of a transmitter is depicted in accordance with an illustrative embodiment. In the illustrative examples, the same reference numeral may be used in more than one figure. This reuse of a reference numeral in different figures represents the same element in the different figures. In this illustrative example, examples of components that can be used to implement signal transmission system **918** in **Figure 9** are depicted.

As depicted in this illustrative example, signal transmission system **918** can include a number of different components that can be controlled to transmit noise signals **904.** More specifically, these components can be controlled to generate pulses **922** of noise signals **904.** These components can include at least one of laser generation system **1000** or radio frequency transmitter **1002.**

In this illustrative example, laser generation system **1000** is a hardware system that emits a set of laser beams **1004.** Communications manager **912** can control the emission of the set of laser beams **1004** from laser generation system **1000** to cause optical breakdowns **1005.**

In this example, optical breakdowns **1005** result in the generation of noise signals **904** in the form of radio frequency noise signals **1006.** In this example, pulses **922** of radio frequency noise signals **1006** can be generated based on the timing of optical breakdowns **1005.** In this illustrative example, each optical breakdown in optical breakdowns **1005** can be a pulse in pulses **922** of radio frequency noise signals **1006.**

In this example, radio frequency transmitter **1002** is a hardware system and can transmit pulses **922** of noise signals **904** in the form of radio frequency noise signals **1006.** For example, radio frequency transmitter **1002** can transmit pulses **922** of noise signals **904** in the form of radio frequency noise signals **1006** transmitted from a physical hardware antenna instead of using lasers and optical breakdowns to produce the radio frequency noise signals **1006.**

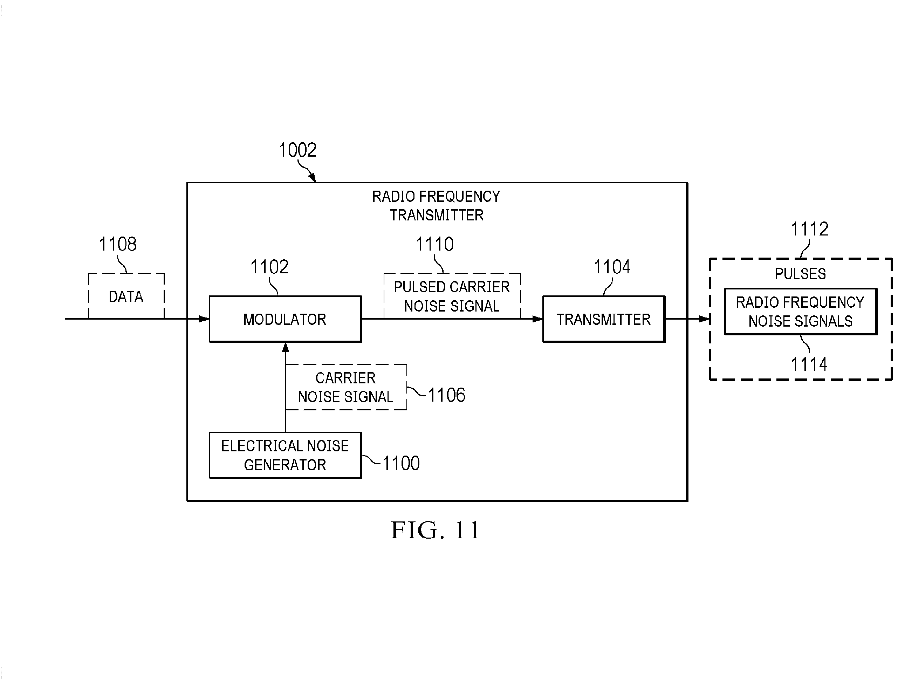

Turning next to **Figure 11****,** an illustration of a block diagram of a radio frequency transmitter is depicted in accordance with an illustrative embodiment. This figure illustrates example components that can be used to implement radio frequency transmitter **1002.** As depicted in this example, radio frequency transmitter **1002** comprises electrical noise generator **1100,** modulator **1102,** and transmitter **1104.**

As depicted, electrical noise generator **1100** generates carrier noise signal **1106.** Electrical noise generator **1100** is connected to modulator **1102** and sends carrier noise signal **1106** to modulator **1102.**

As depicted, modulator **1102** receives data **1108** that is to be transmitted. In this example, modulator **1102** modulates carrier noise signal **1106** to create pulsed carrier noise signal **1110** that encodes data **1108.** This data is encoded in pulses in pulsed carrier noise signal **1110.** In this example the modulation occurs by modulator **1102** turning carrier noise signal **1106** on and off to form pulsed carrier noise signal **1110.**

Transmitter **1104** transmits pulsed carrier noise signal **1110** as pulses **1112** of radio frequency noise signals **1114.** In this example, transmitter **1104** includes a physical antenna that is used to transmit pulses **1112** of radio frequency noise signals **1114.** In other illustrative examples, the antenna can be a separate component from the hardware used to generate radio frequency noise signals **1114.**

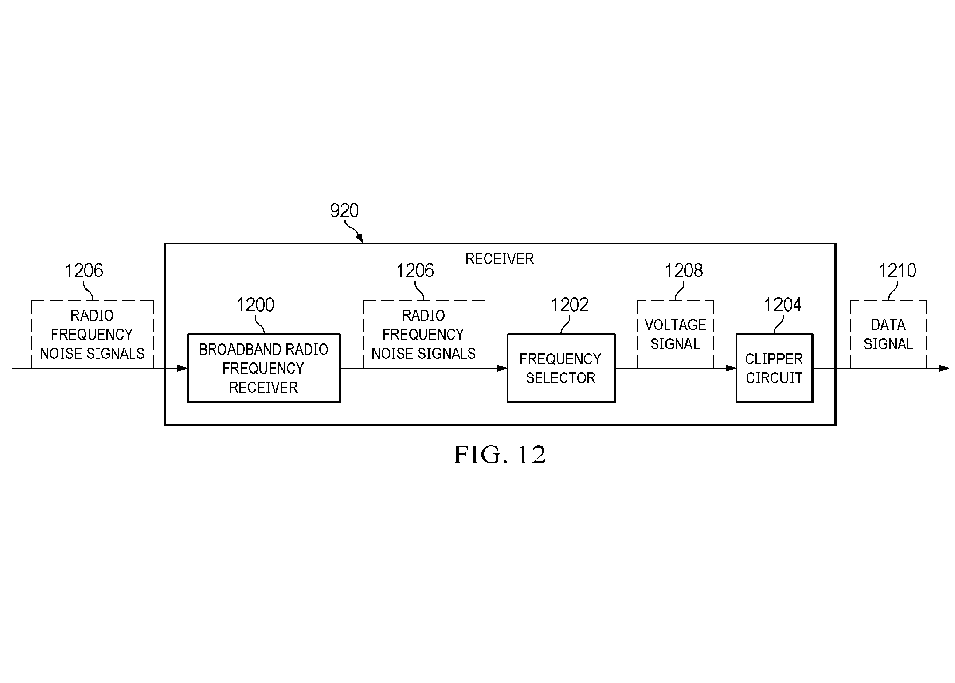

Turning next to **Figure 12****,** an illustration of a block diagram of a receiver is depicted in accordance with an illustrative embodiment. An example of components that can be used to implement receiver **920** are shown in this figure. As depicted, receiver **920** is a hardware system. As depicted, receiver **920** comprises broadband radio frequency receiver **1200,** frequency selector **1202,** and clipper circuit **1204.**

In this illustrative example, broadband radio frequency receiver **1200** receives radio frequency noise signals **1206.** Broadband radio frequency receiver **1200** is connected to frequency selector **1202** and sends the received signals to frequency selector **1202.**

Frequency selector **1202** outputs a set of voltage signals **1208** from the frequencies selected in radio frequency noise signal **1206.** In this illustrative example, the selection of frequencies by frequency selector **1202** can be performed using at least one of a bandpass filter, a band-reject filter, an envelope follower, an envelope detector, a low-pass filter, a rectified low pass filter, multiple bandpass filters tuned to different frequencies, or some other suitable type of circuit.

Frequency selector **1202** is connected to clipper circuit **1204.** Voltage signal **1208** is received by clipper circuit **1204,** which shapes voltage signal **1208.** In this illustrative example, clipper circuit **1204** prevents voltage signal **1208** from exceeding a selected voltage level. Clipper circuit **1204** outputs data signal **1210.** In this example, data signal **1210** is in an analog or digital signal and contains pulses that can be used recreate the data transmitted in radio frequency noise signals **1206.**

Thus, one or more illustrative examples enable communicating data using noise carrier signals. In one illustrative example, these noise carrier signals or carrier noise signals can be modulated to encode data. The modulation can be pulse noise modulation or pulse code noise modulation in which a noise signal is transmitted in pulses. The timing of the pulses selected encodes data in these pulses of noise signals.

In this illustrative example, the modulation and demodulation of these pulses of noise signals do not depend on a single frequency or periodic waveform as the basis for the carrier wave as compared to current techniques that use a sinusoidal, periodic, or predictable carrier. As result, increased security can be present and interference with the sinusoidal carriers can be reduced.

In one illustrative example, the pulse code noise modulation or pulse noise modulation can be a broadband noise radio frequency carrier signal encoding the data. The generation of the pulses of radio frequency noise signals can be performed using a laser generation system that generates radio frequency signals through optical breakdowns. In another example, the generation of the radio frequency noise signals can be performed using a physical electromagnetic receipt transmitter having a physical antenna.

The illustration of communications environment **901** and the different components in **Figures 9-12** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, although communications manager **912** is shown as being implemented using program instructions **916** run on a number of processor units **914** in computer system **910,** communications manager **912** can be implemented in other hardware instead of or in addition to the number of processor units **914.** For example, computer system **910** may use other hardware in addition to or in place of the number of processor units **914.**

For example, other types of hardware circuits capable of performing the operations for communications manager **912** can be used. This other hardware can be at least one of a circuit system, an integrated circuit, an application-specific integrated circuit (ASIC), a programmable logic device, or some other suitable type of hardware configured to perform a number of operations.

As another example, the illustration of laser generation system **1000** and radio frequency transmitter **1002** are provided as examples of some implementations of components that can transmit pulses **922** of noise signals **904.** As another example, radio frequency transmitter 1002 that generates electrical noise in electrical noise generator **1100** as carrier signal noise **1106** to be modulated and transmitted as radio frequency noise signals **1114** in noise pulses **1112** can be transmitted on any type of physical, hardware antenna, or both. Examples of antenna types include, for example, whip antennas, dipole antennas, microwave antennas, metamaterial antennas, directional antennas, omnidirectional antennas, and any other type of physical antenna.

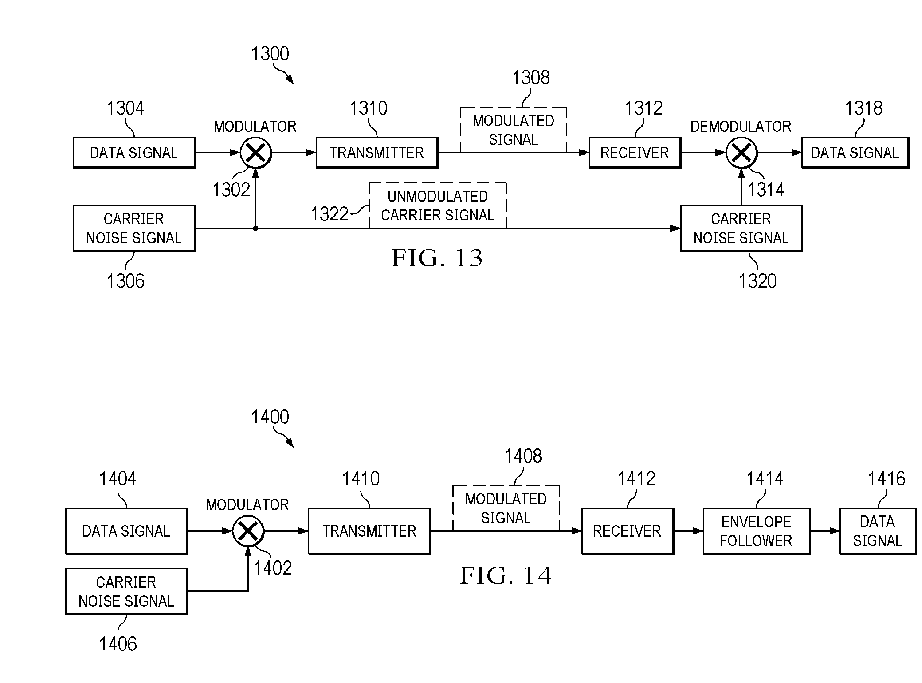

Turning next to **Figure 13****,** an illustration of a communications system for transmitting and receiving electromagnetic noise signals is depicted in accordance with an illustrative embodiment. In this illustrative example, communications system **1300** can transmit or receive electromagnetic noise signals encoding data using electromagnetic noise signals. Examples of electromagnetic noise signals may include electromagnetic ranges of ULF (Ultra Low Frequency), VLF (Very Low Frequency), 20 KHz to 300 KHz, HF (High Frequency), UHF (Ultra High Frequency), millimeter wave and microwave ranges, EHF (Extremely High Frequencies) up through Gigahertz frequencies and above Terahertz frequencies, and including the optical spectrum. Examples of applications or uses include noise carrier communications for modulation of audio, voice, and video communications, as well as noise-based radar, noise-based precision navigation and timing such as noise-based global positioning systems, noise-based spread spectrum using frequency bands of noise instead of sinusoidal-based carrier spread spectrum, noise-based frequency band-hopping using frequency-hopping of frequency bands of noise instead of using sinusoidal or periodic-based carrier frequency-hopping, as well as Signals Intelligence (SI) waveforms such as Low Probability of Intercept/Low Probability of Detect (LPI/LPD) and other clandestine signaling where detection and interception of messages using noise carriers will be difficult.

As depicted, modulator **1302** receives data signal **1304** and carrier noise signal **1306.** In this illustrative example, carrier noise signal **1306** can be generated by an electrical noise generator.

Modulator **1302** modulates carrier noise signal **1306** to generate modulated signal **1308.** In this example, modulated signal **1308** comprises pulses of carrier noise signal **1306.** For example, modulated signal **1308** can be generated by turning modulator **1302** on and off to send pulses of carrier noise signal **1306** to transmitter **1310** for transmission as modulated signal **1308.** The generation of the pulses is based on the data in data signal **1304.** In this manner, the data in data signal **1304** can be encoded in modulated signal **1308.**

Transmitter **1310** transmits modulated signal **1308** to receiver **1312.** In one illustrative example, receiver **1312** can be a broadband radio frequency receiver when modulated signal **1308** is a radio frequency signal. When other types of signals are used, receiver **1312** is selected to detect the signals transmitted by transmitter **1310.**

Modulated signal **1308** detected by receiver **1312** is sent to demodulator **1314.** In this example, demodulator **1314** demodulates modulated signal **1308** using carrier noise signal **1320** to generate data signal **1318,** which contains the same data in data signal **1304** in this depicted example.

As depicted, the demodulation of modulated signal **1308** is performed using carrier noise signal **1320.** In this illustrative example, carrier noise signal **1306** is not predictable as compared to current techniques using sinusoidal wave forms for carrier signals.

As depicted, carrier noise signal **1320** can be obtained by demodulator **1314** in the form of unmodulated carrier noise signal **1322** being transmitted to demodulator **1314.** In this manner, carrier noise signal **1320** used to demodulate modulated signal **1308** can be the same carrier signal as carrier noise signal **1306.** Unmodulated carrier noise signal **1322** can be an in-band or out-of-band copy of carrier noise signal **1306.**

With reference now to **Figure 14****,** an illustration of a block diagram of a communications system for transmitting and receiving electromagnetic noise signals is depicted in accordance with an illustrative embodiment. Communications system **1400** can transmit or receive electromagnetic noise signals encoding data using electromagnetic noise signals.

In this illustrative example, communications system **1400** can transmit or receive electromagnetic noise signals encoding data using electromagnetic noise signals.

As depicted, modulator **1402** receives data signal **1404** and carrier noise signal **1406.** In this illustrative example, carrier noise signal **1406** can be generated by an electrical noise generator.

Modulator **1402** modulates carrier noise signal **1406** to generate modulated signal **1408.** In this example, modulator **1402** can be an on/off modulator. As an on/off modulator, modulator **1402** sends carrier noise signal **1406** transmitter **1410** for transmission when modulator **1402** is turned on and does not send carrier noise signal **1406** to transmitter **1410** when modulator **1402** is turned off. As result, modulated signal **1408** comprises pulses of carrier noise signal **1406.** These pulses are generated to encode data signal **1404.** In other words, the timing of these pulses can be generated to encode the data. For example, the timing in these depicted examples can be time for pulses to perform pulse code noise modulation or pulse noise modulation.

For example, modulated signal **1408** can be generated by turning modulator **1402** on and off to send pulses of carrier noise signal **1406** to transmitter **1410** for transmission as modulated signal **1408.**

Transmitter **1410** transmits modulated signal **1408** to receiver **1412.** In one illustrative example, receiver **1412** can be a broadband radio frequency receiver when modulated signal **1408** is a radio frequency signal. When other types of signals are used, receiver **1412** is selected to detect the signals transmitted by transmitter **1410.**

In this example, modulated signal **1408** detected by receiver **1412** is sent to envelope follower **1414.** As depicted, envelope follower **1414** can also be referred to as an envelope detector. Envelope follower **1414** can detect amplitude variations in modulated signal **1408** and create a signal having a shape that resembles those variations. This example, modulated signal **1408** contains pulses of noise. As a result, envelope follower **1414** can generate a signal with the shape of the noise pulses to form data signal **1416.** Envelope follower **1414** can be a selected from at least one of a low pass filter, a bandpass filter, an envelope detector, a peak detector, or a diode detector that follows and outputs the overall shape of at least one of the amplitudes or pulses as currently used.

The illustrative examples of communication systems in **Figure 13** and in **Figure 14** are presented as examples of some implementations for communications system **900** in **Figure 9****.** These illustrations are not meant to limit the manner in which other illustrative examples can be implemented. For example, a clipper circuit as is known in the art can be placed after envelope follower **1414** in **Figure 14** to convert rough envelopes of pulses into square wave pulses.

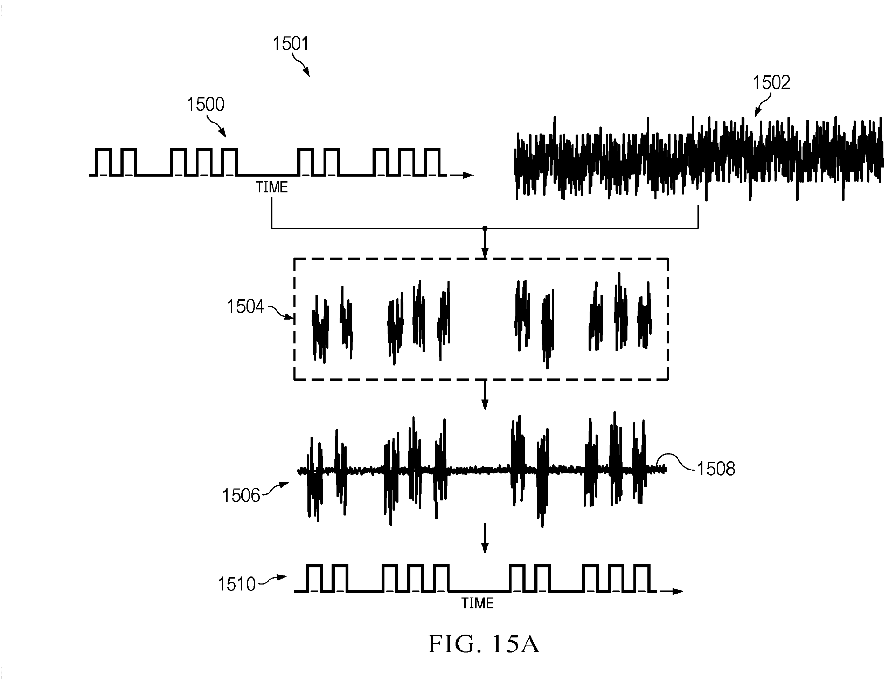

Turning now to **Figure 15A****,** an illustration of a data flow of signals transmitting data using modulated noise signals is depicted in accordance with an illustrative embodiment. In this illustrative example, data signal **1501** is an example of signals in communications system **1400** in **Figure 14****.**

In this illustrative example, data signal **1500** is used to modulate carrier noise signal **1502.** Data signal **1500** is an example of data signal **1404** and carrier noise signal **1502** is an example of carrier noise signal **1406** in **Figure 14****.**

The modulation of carrier noise signal **1502** forms modulated signal **1504,** which encodes the data in data signal **1500.** Modulated signal **1504** is an example of modulated signal **1408** in **Figure 14****.** As depicted in this example, modulated signal **1504** is a modulated noise signal comprising pulses of carrier noise signal **1502.**

Received signal **1506** is an example of the signal received by a receiver. As depicted, received signal **1506** also includes noise **1508** in addition to the pulses of carrier noise signal **1502** in modulated signal **1504.** In this example, noise **1508** is background noise or other noise in addition to the pulses in the carrier noise in modulated signal **1504.**

As depicted, received signal **1506** can be processed and decoded using a component such as envelope follower **1414** in **Figure 14****.** Other components such as a bandpass filter, low-pass filter, band reject filter, clipper circuit, or other circuits can be used to generate data signal **1510.** In this example, data signal **1510** is the same as or close enough to data signal **1500** such that the same data used to generate data signal **1500** can be obtained from data signal **1510.**

As discussed previously, the set of characteristics for noise signals can be selected from at least one of a timing, an amplitude, a frequency band, a relative phase, or other characteristics for carrier noise signals. For pulse noise modulation the carrier noise may be of different frequency characteristics that the transmitter and receiver will share. For pulse noise modulation the carrier noise signals will vary in amplitude, duration, and timing to modulate the message signal. For reception of these pulse noise modulated signals the receivers in **Figure 12** and **Figure 14** use various types of techniques to receive and demodulate the original data signal.

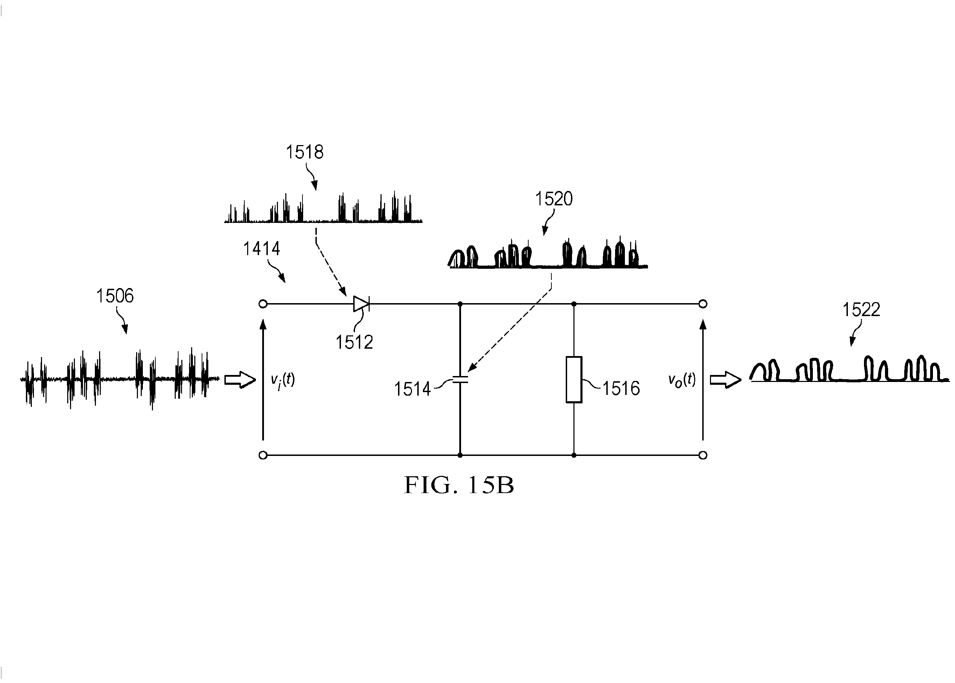

Turning now to **Figure 15B****,** an illustration of an envelope follower circuit using a diode detector with a low pass filter in accordance with an illustrative embodiment. In this figure, an illustration of a simple circuit for envelope follower **1414** is shown. In this illustrative example, envelope follower **1414** is comprised of a diode **1512** to rectify the input signal, capacitor **1514** to provide a low pass filter to smooth out the noisy rectified signal and produce a lower frequency envelope. An optional resistor **1516** or inductive coil may be provided to affect the tuning or resonance of the circuit. Here, received signal **1506** of carrier pulses of noise is inputted to the envelope follower **1414** circuit. As received signal **1506** travels through diode **1512** the diode acts as a rectifier and converts the AC noise signal into a DC noise signal **1518** as shown by the dashed arrow from DC noise signal **1518** to the output of diode **1512.** From there the rectified DC noise signal **1518** travels across capacitor **1514** which acts as a low pass filter to smooth the signal into an envelope signal **1520.** The actual envelope signal **1520** is shown by the line the follows the outline or envelope of the noise bursts from DC noise signal **1518.** The envelope signal **1520** then travels across optional resistor **1516** or coil and exits at the output as the envelope followed signal **1522.**

In this illustrative example it is clear that the envelope followed signal **1522** is beginning to look like the received data signal **1510.**

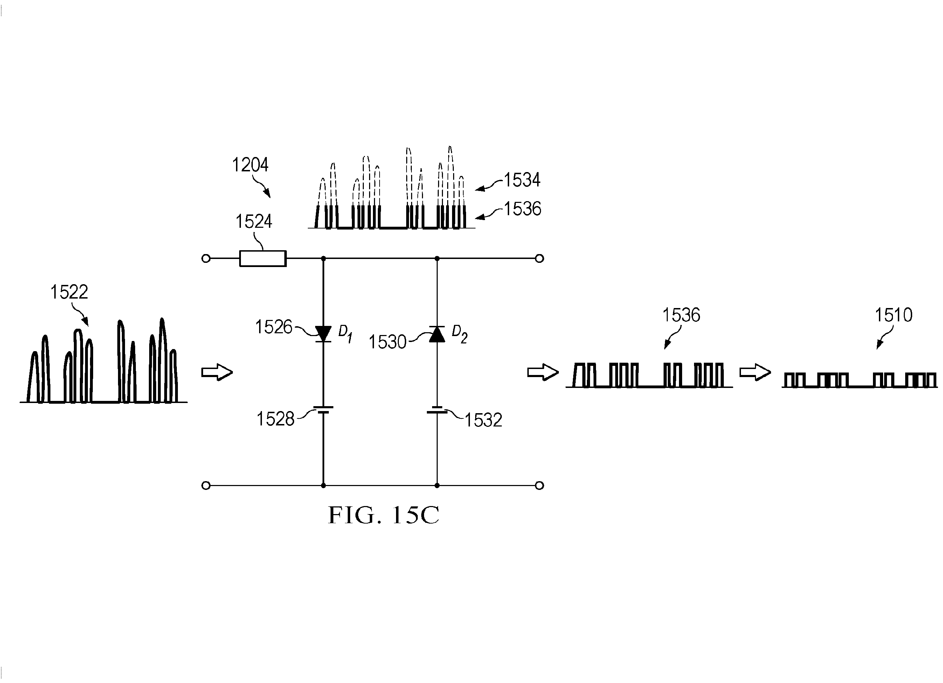

With reference to **Figure 15C****,** an illustration of a clipper circuit in accordance with an illustrative embodiment. In this figure, clipper circuit **1204** is also referred to as a slicer or amplitude selector. In this illustrative example, clipper circuit **1204** is comprised of optional input resistor **1524,** and a bidirectional clipping circuit comprised of diode D1 **1526,** bias voltage **1528,** diode D2 **1530,** and bias voltage **1532.** This and many other known methods of clipping can be used. Single directional clipping may be used as well as bidirectional or any other type of clipping circuit.

In this illustrative example, envelope followed signal **1522** from **Figure 15B** has been amplified to be a stronger signal and is inputted into clipper circuit **1204.** Envelope followed signal **1522** travels through optional input resistor **1524** which may be an impedance matching circuit.

This signal then travels across one or more illustrative diodes D1 **1526** and D2 **1530.** Various types of diodes may be used. A single diode may be used, or a transistor circuit may be used with the purpose of clipping off the top of envelope followed signal **1522** such that top part of signal **1534** is clipped off and bottom part of signal **1536** remains. The level at which top part of the signal **1534** is clipped off is determined by the diodes D1 **1526** and D2 **1530** as well as by the bias voltages **1528** and **1532.**

Thus, bottom part of signal **1536** remaining is outputted at the output. This bottom part of the signal **1536** can be transferred through another stage of clipping until it becomes output data signal **1510** which is extremely similar to the original data signal **1500.**

As can be seen in this illustrative example, the pulses of carrier noise signal **1502** encode data in data signal **1500.** In other words, the timing in generating pulses of carrier noise signal **1502** is used to encode the data.

Thus, the different illustrative examples use pulse modulation of a noise signal that can be generated using a laser generator or a transmitter. With a laser generator, optical breakdowns are used to create the pulses of noise signals. With a physical transmitter, an electronic noise source generates a carrier noise signal that is modulated to create pulses of the carrier noise signal based on the data to be transmitted. These pulses of the carrier noise signals form the pulses of noise signal encoding data that can be transmitted using a physical antenna.

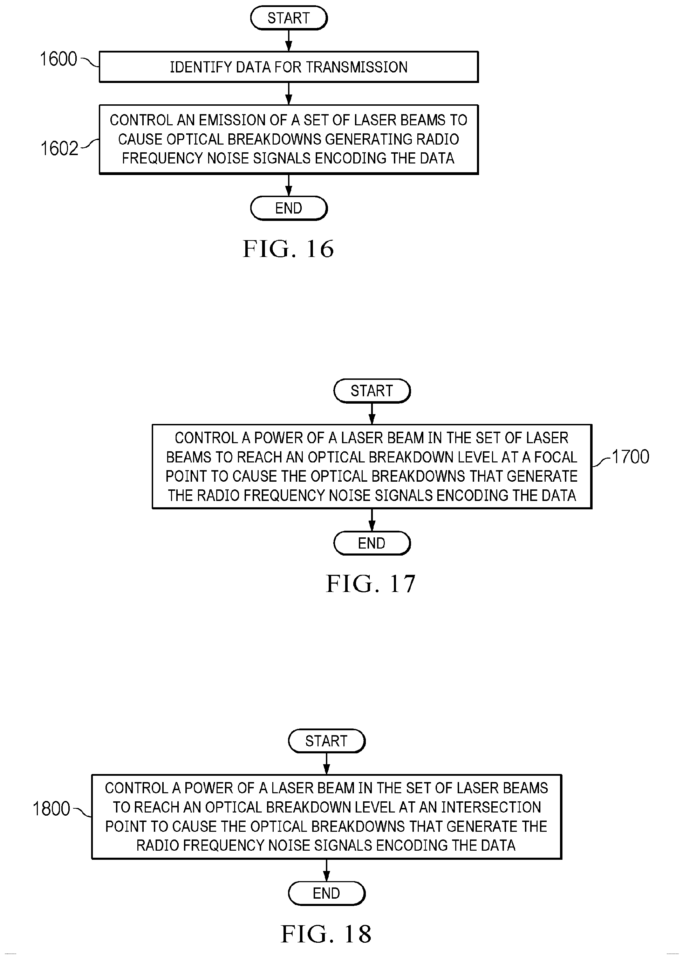

In this illustrative example, **Figures 16-27** are flowcharts illustrating operations that can be performed to generate radio frequency noise signals encoding data in which a physical antenna is unnecessary.

With reference first to **Figure 16****,** a flowchart of a process for transmitting data is depicted in accordance with an illustrative embodiment. The process in **Figure 16** can be implemented in hardware, software, or both. When implemented in software, the process can take the form of program instructions that is run by one of more processor units located in one or more hardware devices in one or more computer systems. For example, the process can be implemented in communications manager **212** in computer system **210** in **Figure 2****.**

The process begins by identifying data for transmission (operation **1600**). The process controls an emission of a set of laser beams to cause optical breakdowns generating radio frequency noise signals encoding the data (operation **1602**). The process terminates thereafter.

In operation **1602,** the emission of the set of laser beams can be controlled in number of different ways. For example, the laser beams can be emitted continuously or pulsed. Further, direction at which the laser beams are directed can also be changed. For example, the set of laser beams can be directed towards a set of optical breakdown points. The optical breakdown points can be selected from at least one of an intersection point or focal point. These optical breakdown points are locations where optical breakdowns occur. These optical breakdowns are locations where plasma is generated that generates the radio frequency noise signals.

The manner in which the optical breakdowns occur can be used to encode the data in the radio frequency noise signals. For example, the timing of the occurrence of optical breakdowns generate time pulses used to encode data. In this manner, different types of data encoding such as pulse noise modulation can be used to encode data based on when radio frequency noise signals are generated.

As another example, the set of laser beams can be moved or swept such that the optical breakdowns occur in different locations resulting in the frequency of a phase change in the optical breakdowns that can be used to encode data. As another example, the power of the laser beams can be changed to change the amplitude of the radio frequency noise signals two encode data. In this manner, different types of data encoding such as pulse noise modulation can be used to encode data based on when radio frequency noise signals are generated.

Turning next to **Figure 17****,** an illustration of a flowchart for controlling the emission of laser beams is depicted in points with an illustrative embodiment. The process illustrated in **Figure 17** is an example of one implementation for operation **1602** in **Figure 16****.**

The process controls a power of a laser beam in the set of laser beams to reach an optical breakdown level at a focal point to cause the optical breakdowns that generate the radio frequency noise signals encoding the data (operation **1700**). The process terminates thereafter.

With reference next to **Figure 18****,** an illustration of a flowchart for controlling the emission of laser beams is depicted at intersecting points with an illustrative embodiment. The process illustrated in **Figure 18** is another example of an implementation for operation **1602** in **Figure 16****.**

The process controls a power of a laser beam in the set of laser beams to reach an optical breakdown level at an intersecting point to cause the optical breakdowns that generate the radio frequency noise signals encoding the data (operation **1800**). The process terminates thereafter.

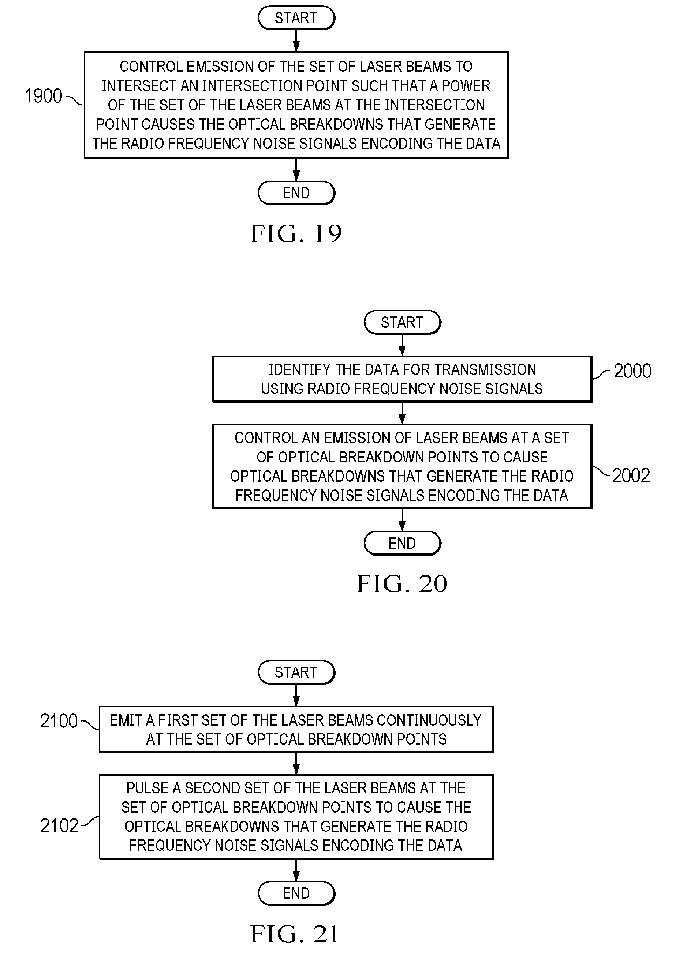

In **Figure 19****,** an illustration of a flowchart for controlling the emission of laser beams is depicted in points with an illustrative embodiment. The process illustrated in **Figure 19** is yet another example of an implementation for operation **1602** in **Figure 16****.**

The process controls emission of the set of laser beams to intersect an intersection point such that a power of the set of the laser beams at the intersection point causes the optical breakdowns that generate the radio frequency noise signals encoding the data (operation **1900**). The process terminates thereafter.

Turning next to **Figure 20****,** a flowchart of a process for transmitting data is depicted in accordance with an illustrative embodiment. The process in **Figure 20** can be implemented in hardware, software, or both. When implemented in software, the process can take the form of program instructions that is run by one of more processor units located in one or more hardware devices in one or more computer systems. For example, the process can be implemented in communications manager **212** in computer system **210** in **Figure 2****.**

The process begins by identifying the data for transmission using radio frequency noise signals (operation **2000**). The process controls an emission of laser beams at a set of optical breakdown points to cause optical breakdowns that generate the radio frequency noise signals encoding the data (operation **2002**). The process terminates thereafter.

In this example, the set of optical breakdown points can be at different locations when more than one optical breakdown point is present in the set of optical breakdown points. In one example, radio frequency transmissions can be transmitted from multiple locations when the set of optical breakdowns caused by the set of lasers being directed at more than one optical breakdown point.

In **Figure 21****,** an illustration of a flowchart for controlling the emission of laser beams is depicted in points with an illustrative embodiment. The process illustrated in **Figure 21** is yet another example of an implementation for operation **2002** in **Figure 20****.**

The process begins by emitting a first set of the laser beams continuously at the set of optical breakdown points (operation **2100**). The process pulses a second set of the laser beams at the set of optical breakdown points to cause the optical breakdowns that generate the radio frequency noise signals encoding the data (operation **2102**). The process terminates thereafter.

In operation **2102,** the pulsing can occur by turning the second set of laser beams on and off. In other examples, the pulsing can provide increasing decreasing the power to the second set of laser beams. In this example, the optical breakdowns occur in response to sufficient power in the laser beams at the set of optical breakdown points. In this example, the pulsing can control the timing of when radio frequency noise signals are transmitted.

Further in operation **2102,** a power of a laser beam at the optical breakdown point can be controlled at by at least one of a shutter, a lens, a deformable lens, a microelectromechanical systems mirror, an attenuator, a controlling optics, an optical filter, an amplitude modulator in a laser beam generator, or other suitable components.

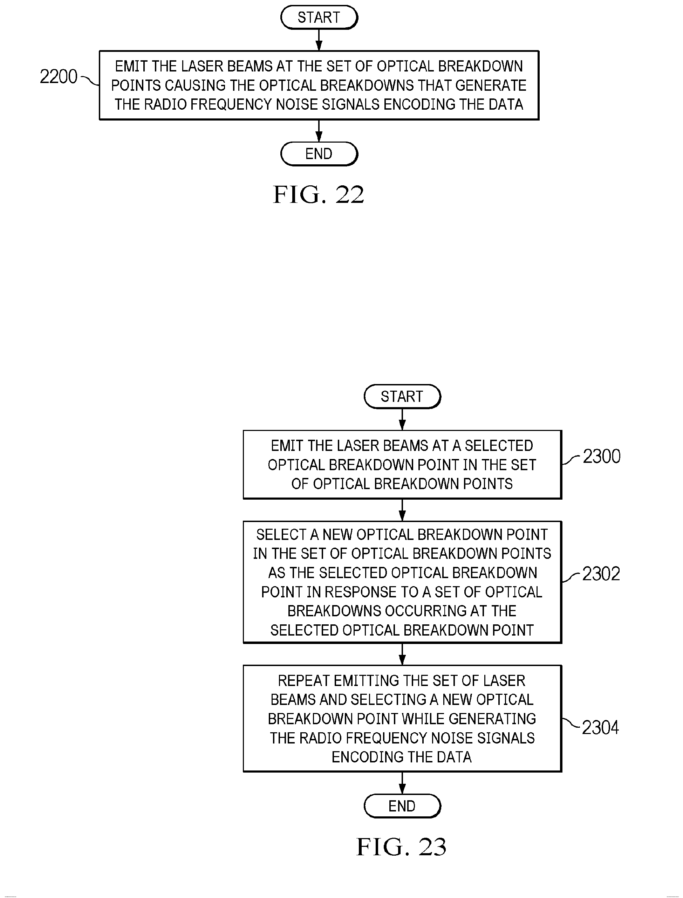

With reference now to **Figure 22****,** an illustration of a flowchart for controlling the emission of the laser beams is depicted in points with an illustrative embodiment. The process illustrated in **Figure 21** is yet another example of an implementation for operation **2002** in **Figure 20****.**

The process emits the laser beams at the set of optical breakdown points causing the optical breakdowns that generate the radio frequency noise signals encoding the data (operation **2200**). The process terminates thereafter.

Turning next to **Figure 23****,** an illustration of a flowchart for controlling the emission of laser beams is depicted in points with an illustrative embodiment. The process illustrated in **Figure 23** is example of an implementation for operation **2200** in **Figure 22****.**

The process begins by emitting the laser beams at a selected optical breakdown point in the set of optical breakdown points (operation **2300**). The process selects a new optical breakdown point in the set of optical breakdown points as the selected optical breakdown point in response to a set of optical breakdowns occurring at the selected optical breakdown point (operation **2302**).

The process repeats emitting the set of laser beams and selecting a new optical breakdown point while generating the radio frequency noise signals encoding the data (operation **2304**) the process terminates thereafter. In operation **2304,** the process repeats operations **2300** and operation **2302** any number of times while transmitting the radio frequency noise signals. Operation at **2304** enables transmitting the radio frequency signals from different locations through the selection of different optical breakdown points. As result, identifying the origination of the radio frequency signals can be made more difficult.

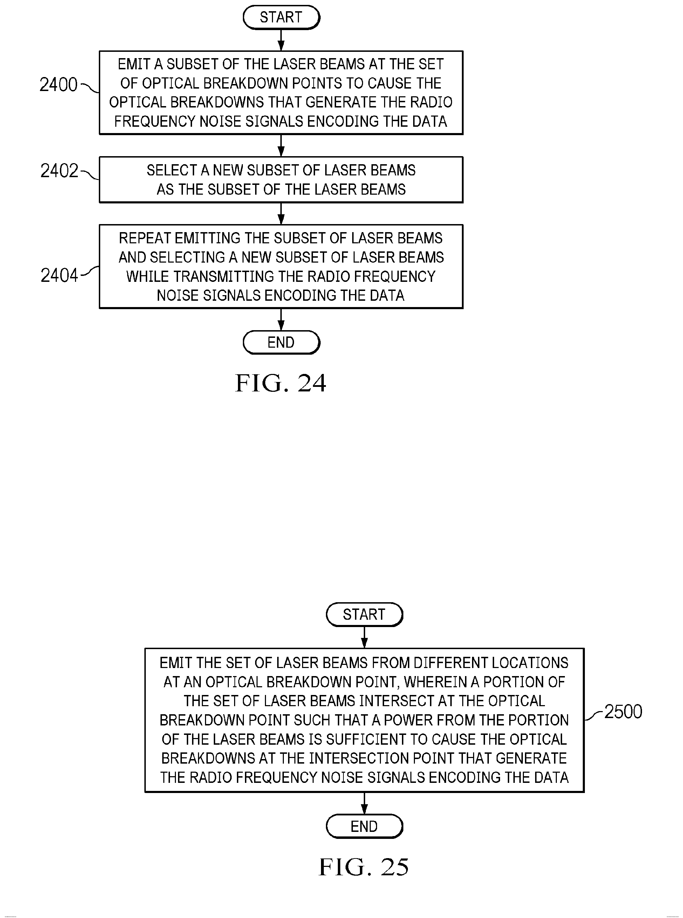

With reference next to **Figure 24****,** an illustration of a flowchart for controlling the emission of laser beams is depicted in points with an illustrative embodiment. The process illustrated in **Figure 24** is another example of an implementation for operation **2002** in **Figure 20****.**

The process begins by emitting a subset of the laser beams at the set of optical breakdown points to cause the optical breakdowns that generate the radio frequency noise signals encoding the data (operation **2400).** The process selects a new subset of laser beams as the subset of the laser beams (operation **2402**).

The process repeats emitting the subset of laser beams and selecting a new subset of laser beams while transmitting the radio frequency noise signals encoding the data (operation **2404**). The process terminates thereafter. By using different subsets of the laser beams, identifying a location from which the laser beams originate can be made more difficult when the laser beams are emitted from different locations.

In **Figure 25****,** an illustration of a flowchart for controlling the emission of laser beams is depicted in points with an illustrative embodiment. The process illustrated in **Figure 25** is an example of an implementation for operation **2002** in **Figure 20****.**

The process emits the set of laser beams from different locations at an optical breakdown point, wherein a portion of the set of laser beams intersect at the optical breakdown point such that a power from the portion of the laser beams is sufficient to cause the optical breakdowns at the intersection point that generate the radio frequency noise signals encoding the data (operation **2500**). The process terminates thereafter.

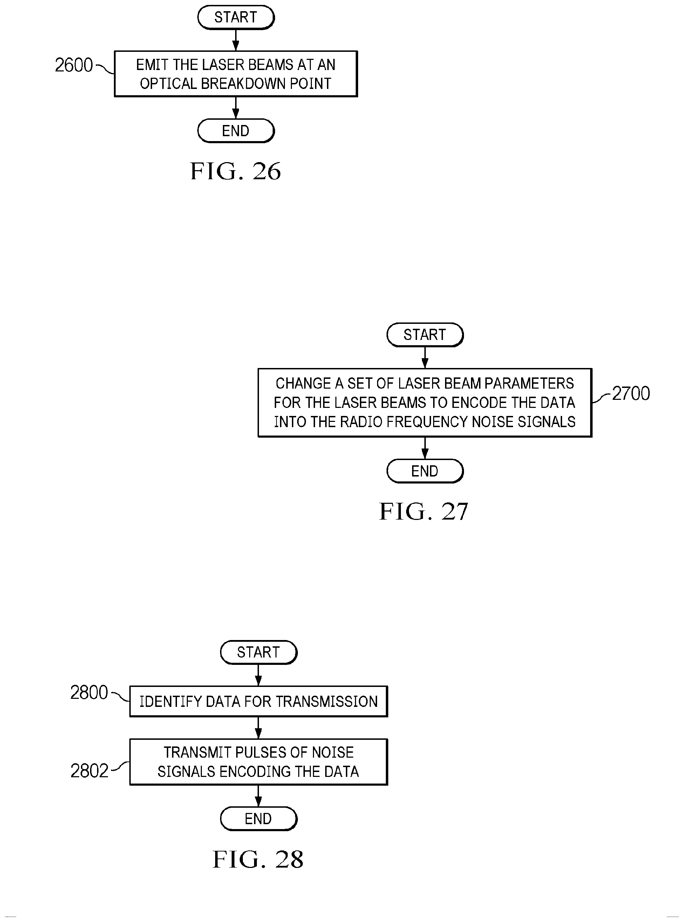

With reference to **Figure 26****,** an illustration of a flowchart for controlling the emission of laser beams is depicted in points with an illustrative embodiment. The process illustrated in **Figure 26** is an example of an implementation for operation **2002** in **Figure 20****.**

The process emits the laser beams at an optical breakdown point (operation **2600**). The process terminates thereafter. In operation **2600,** the optical breakdowns occur in response to all of the laser beams intersecting at the optical breakdown point.

With reference now to **Figure 27****,** an illustration a flowchart for controlling laser beams is depicted in accordance with an illustrative embodiment. The process illustrated in this figure is an example of an additional operation that can be performed with the operations in **Figure 20****.**

The process changes a set of laser beam parameters for the laser beams to encode the data into the radio frequency noise signals (operation **2700**). The process terminates thereafter. In operation of **2700,** changing the set of laser beam parameters changes a set of radio frequency characteristics for the radio frequency noise signals. The set of radio frequency characteristics is selected from at least one of a timing, an optical breakdown point, an amplitude of the radio frequency noise signals, or other characteristics of the radio frequency noise signals.

In this illustrative example, **Figures 28-35** are flowcharts illustrating operations that can be performed to encode data in noise signals. Turning first to **Figure 28****,** an illustration of a flowchart for communicating data is depicted in accordance with an illustrative embodiment. The process in **Figure 28** can be implemented in hardware, software, or both. When implemented in software, the process can take the form of program instructions that is run by one of more processor units located in one or more hardware devices in one or more computer systems. For example, the process can be implemented in communications manager **912** in computer system **910** in **Figure 9****.**

The process begins by identifying data for transmission (operation **2800**). The process transmits pulses of noise signals encoding the data (operation **2802).** The process terminates thereafter. The pulses of noise signals can be selected from at least one of electromagnetic frequency signals, radio frequency signals, microwave frequency signals, audio frequency signals, ultrasonic frequency signals, ultra-low frequency signals, very low frequency signals, underwater frequency signals, or optical frequency signals.

In operation **2802,** the pulses of radio frequency noise signals can be transmitted in a number of different ways. For example, these pulses of noise signals can be radio frequency noise signals transmitted from a physical antenna. In another illustrative example, the pulses of noise signals can be transmitted using optical breakdowns generated by laser beams. The optical breakdowns can be controlled to generate pulses of noise signals in the form of radio frequency noise signals.

The noise signals can be generated using at least one of a laser generation system that emits lasers to cause optical breakdown that generates the noise signal or an electric noise generator. The noise in the noise signal can be selected from at least one of nondeterministic noise or pseudo random noise.

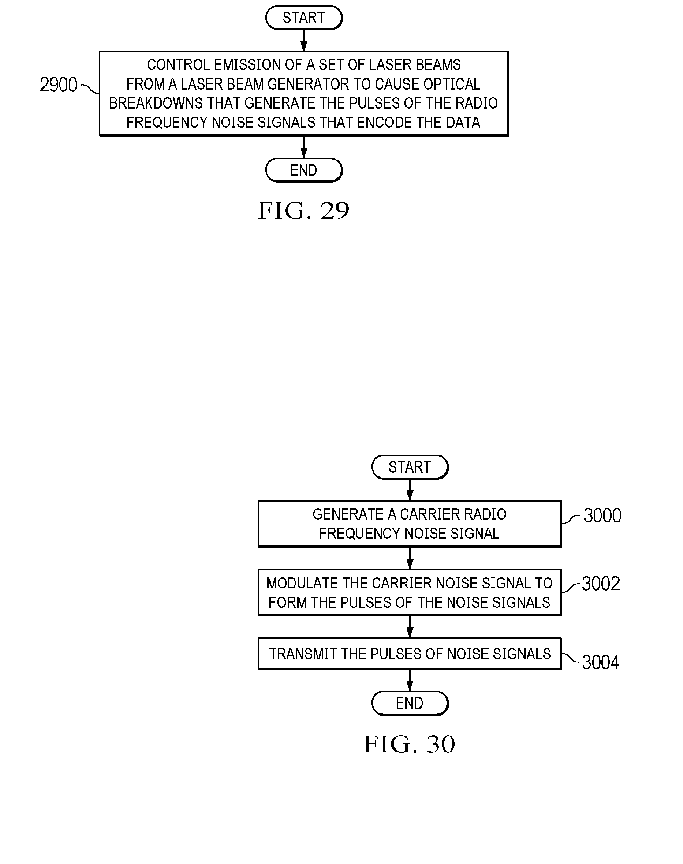

Turning to **Figure 29****,** an illustration of a flowchart for transmitting pulses of noise signals is depicted in accordance with an illustrative embodiment. This flowchart is an example of an implementation for operation **2802** in **Figure 28****.** In this example, the pulses of noise signals can be pulses of radio frequency noise signals.

The process controls emission of a set of laser beams from a laser beam generator to cause optical breakdowns that generate the pulses of the radio frequency noise signals that encode the data (operation **2900).** The process terminates thereafter.

With reference next to **Figure 30****,** another illustration of a flowchart for transmitting pulses of noise signals is depicted in accordance with an illustrative embodiment. This flowchart is an example of an implementation for operation **2802** in **Figure 28****.**

The process begins by generating a carrier radio frequency noise signal (operation **3000**). The process modulates the carrier noise signal to form the pulses of the noise signals (operation **3002**). In operation **3002,** the pulses encode the data.

The process transmits the pulses of noise signals (operation **3004**). The process terminates thereafter.

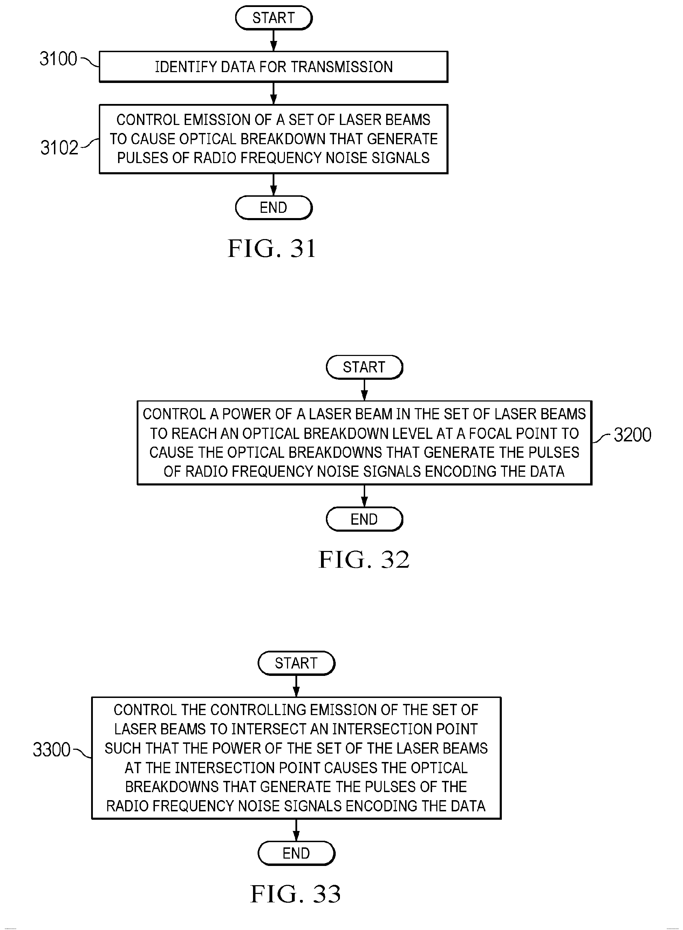

Turning now to **Figure 31****,** an illustration of a flowchart for communicating data is depicted in accordance with an illustrative embodiment. The process in **Figure 31** can be implemented in hardware, software, or both. When implemented in software, the process can take the form of program instructions that is run by one of more processor units located in one or more hardware devices in one or more computer systems. For example, the process can be implemented in communications manager **912** in computer system **910** in **Figure 9****.**

The process begins by identifying data for transmission (operation **3100**). The process controls emission of a set of laser beams to cause optical breakdown that generate pulses of radio frequency noise signals (operation **3102**). The process terminates thereafter. In operation **3100,** the data can be encoded in the pulses of the radio frequency noise signals.

With reference to **Figure 32****,** an illustration of a flowchart of a process for controlling the emission of a set of laser beams is depicted in accordance with an illustrative embodiment. The process in this flowchart is an example of an implementation for operation **3102** in **Figure 31****.**

The process controls a power of a laser beam in the set of laser beams to reach an optical breakdown level at a focal point to cause the optical breakdowns that generate the pulses of radio frequency noise signals encoding the data (operation **3200**). The process terminates thereafter.

Turning next to **Figure 33****,** an illustration of a flowchart of a process for controlling the emission of a set of laser beams is depicted in accordance with an illustrative embodiment. The process in this flowchart is an example of an implementation for operation **3102** in **Figure 31****.**

The process controls the controlling emission of the set of laser beams to intersect an intersection point such that the power of the set of the laser beams at the intersection point causes the optical breakdowns that generate the pulses of the radio frequency noise signals encoding the data (operation **3300**). The process terminates thereafter.

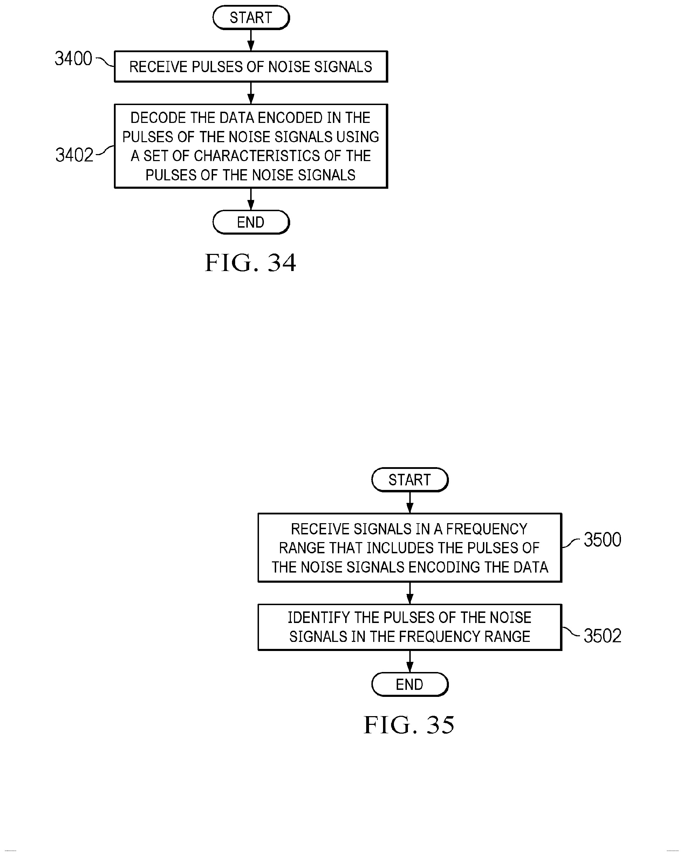

In **Figure 34****,** an illustration of a flowchart for communicating data is depicted in accordance with an illustrative embodiment. The process in **Figure 34** can be implemented in hardware, software, or both. When implemented in software, the process can take the form of program instructions that is run by one of more processor units located in one or more hardware devices in one or more computer systems. For example, the process can be implemented in communications manager **912** in computer system **910** in **Figure 9****.**

The process begins by receiving pulses of noise signals (operation **3400**). In operation **3400,** data is encoded in the pulses of noise signals.

The process decodes the data encoded in the pulses of the noise signals using a set of characteristics of the pulses of the noise signals (operation **3402**). The process terminates thereafter. In operation **3402,** the set of characteristics comprises at least one of a timing of the pulses of noise, an amplitude of the pulses of noise, a duration of the pulses of noise, or some other characteristic.

With reference now to **Figure 35****,** an illustration of a flowchart for decoding data is depicted in accordance with an illustrative embodiment. The process depicted in this flowchart is an example of an implementation for operation **3402** in **Figure 34****.**

The process begins by receiving signals in a frequency range that includes the pulses of the noise signals encoding the data (operation **3500**). In operation **3500,** the signals in the frequency range can be received using at least one of a bandpass filter, a notch filter, a band reject filter, a low-pass filter, or a high-pass filter.

The process identifies the pulses of the noise signals in the frequency range (operation **3502**). The process terminates thereafter. In operation **3502,** the pulses of the noise signals in the frequency range can be identified using an envelope detector.

The flowcharts and block diagrams in the different depicted embodiments illustrate the architecture, functionality, and operation of some possible implementations of apparatuses and methods in an illustrative embodiment. In this regard, each block in the flowcharts or block diagrams can represent at least one of a module, a segment, a function, or a portion of an operation or step. For example, one or more of the blocks can be implemented as program instructions, hardware, or a combination of the program instructions and hardware. When implemented in hardware, the hardware can, for example, take the form of integrated circuits that are manufactured or configured to perform one or more operations in the flowcharts or block diagrams. When implemented as a combination of program instructions and hardware, the implementation may take the form of firmware. Each block in the flowcharts or the block diagrams can be implemented using special purpose hardware systems that perform the different operations or combinations of special purpose hardware and program instructions run by the special purpose hardware.

In some alternative implementations of an illustrative embodiment, the function or functions noted in the blocks may occur out of the order noted in the figures. For example, in some cases, two blocks shown in succession may be performed substantially concurrently, or the blocks may sometimes be performed in the reverse order, depending upon the functionality involved. Also, other blocks may be added in addition to the illustrated blocks in a flowchart or block diagram.

Thus, the illustrative examples provide a method, apparatus, and system for transmitting radio frequency signals using a transmission system in which a physical antenna is absent. Optical breakdowns are generated by laser beams in which the optical breakdowns create plasma. The plasma results in radio frequency noise signals. The optical breakdowns can be controlled to encode data in the radio frequency noise signals. The locations of these optical breakdowns are radio frequency source emitters in the depicted examples.

Further, these radio frequency source emitters can be moved to different locations by repositioning the laser beams such that the laser beams point at different optical breakdown points. Attacks at these locations are in essence attacks at the optical breakdown points where the plasma is generated.

As a result, kinetic attacks against these locations are useless because no physical infrastructure is present at the locations. Further, the laser modulation sources are remote from the locations of these radio frequency source emitters. These optical breakdowns can occur at a location that is remote from the laser source.

Further, the illustrative examples can encode data using noise signals. The use of noise signals is in contrast to the use of sinusoidal signals as a carrier signal to encode data. With the encoding of data in pulses of noise signals, issues with detection and interference in transmitting data encoded using sinusoidal carriers can be reduced.

The following Figures provide examples of some types of noise modulation that can be performed in accordance with one or more illustrative examples. Some examples of noise modulation that can be performed include analog amplitude noise modulation (AANM), analog frequency noise modulation (AFNM), analog frequency amplitude noise color modulation (AFANCM), and analog phase noise modulation (APNM).

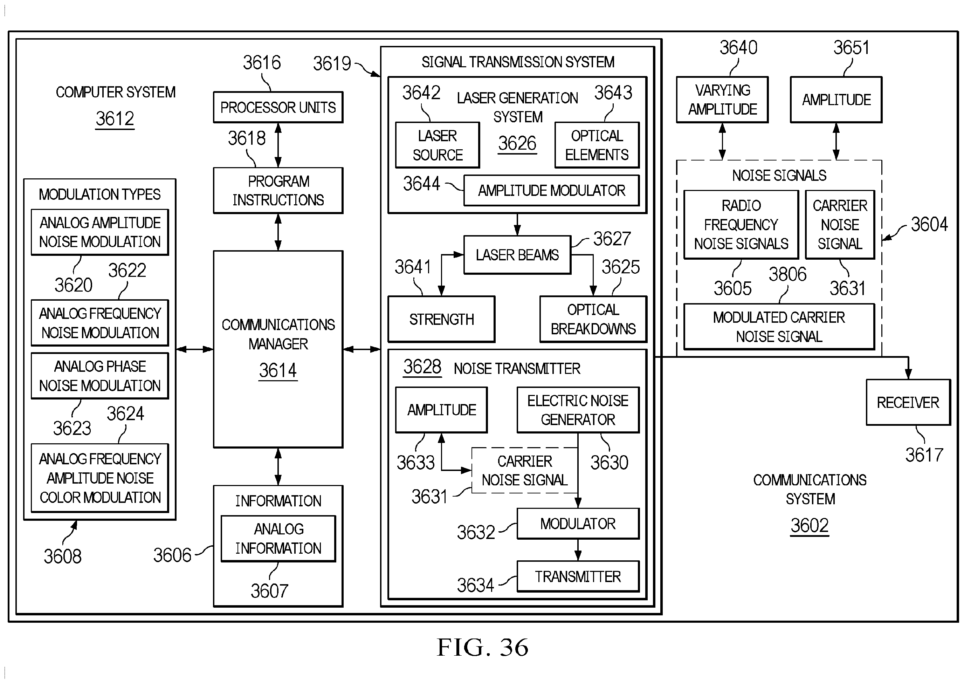

With reference next to **Figure 36****,** an illustration of a block diagram of a communication system is depicted in accordance with an illustrative embodiment. In this illustrative example, communications system **3602** operates to modulate noise signals **3604** to correspond to information **3606.** Noise signals **3604** are selected from at least one of electromagnetic frequency noise signals, radio frequency noise signals, microwave frequency noise signals, audio frequency noise signals, ultrasonic frequency noise signals, ultra-low frequency noise signals, very low frequency noise signals, underwater frequency noise signals, or optical frequency noise signals including visible and/or non-visible light.

The modulation performed can be selected from a set of modulation types **3608.** As depicted, communications system **3602** comprises computer system **3612,** communications manager **3614,** and signal transmission system **3619.**

In the illustrative example, communications manager **3614** can be implemented in software, hardware, firmware or a combination thereof. When software is used, the operations performed by communications manager **3614** can be implemented in program instructions configured to run on hardware, such as a processor unit. When firmware is used, the operations performed by communications manager **3614** can be implemented in program instructions and data and stored in persistent memory to run on a processor unit.

When hardware is employed, the hardware may include circuits that operate to perform the operations in communications manager **3614.** The circuits used to implement communications manager **3614** can take other forms in addition to or in place of a processor unit.

Computer system **3612** is a physical hardware system and includes one or more data processing systems. When more than one data processing system is present in computer system **3612,** those data processing systems are in communication with each other using a communications medium. The communications medium can be a network. The data processing systems can be selected from at least one of a computer, a server computer, a tablet computer, or some other suitable data processing system.

As depicted, computer system **3612** includes a number of processor units **3616** that are capable of executing program instructions **3618** implementing processes in the illustrative examples. In other words, program instructions **3618** are computer-readable program instructions.

As used herein, a processor unit in the number of processor units **3616** is a hardware device and is comprised of hardware circuits such as those on an integrated circuit that respond to and process instructions and program code that operate a computer. When the number of processor units **3616** executes program instructions **3618** for a process, the number of processor units **3616** can be one or more processor units that are in the same computer or in different computers. In other words, the process can be distributed between processor units **3616** on the same or different computers in computer system **3612.**

Further, the number of processor units **3616** can be of the same type or different type of processor units. For example, the number of processor units **3616** can be selected from at least one of a single core processor, a dual-core processor, a multi-processor core, a generalpurpose central processing unit (CPU), a graphics processing unit (GPU), a digital signal processor (DSP), or some other type of processor unit.

In this illustrative example, modulation types **3608** can be, for example, analog amplitude noise modulation (AANM) **3620,** analog frequency noise modulation (AFNM) **3622,** analog frequency amplitude noise color modulation (AFANCM) **3624,** and analog phase noise modulation (APNM) **3623.**

In this example, noise signals **3604** can be transmitted to receiver **3617** from signal transmission system **3619.** In this illustrative example, noise signals **3604** are received by receiver **3617.** Receiver **3617** is also depicted as part of communications system **3602.** In yet other illustrative examples, receiver **3617** may be a separate component from communications system **3602.**

Receiver **3617** is a hardware system and can include processes implemented in hardware or software that recover information **3606** from noise signals **3604.**

In this illustrative example, signal transmission system **3619** can take a number of different forms. For example, signal transmission system **3619** can be implemented using at least one of laser generation system **3626** or noise transmitter **3628.** Laser generation system **3626** can be implemented using laser generation systems as depicted in **Figures 2-7****.** With laser generation system **3626,** noise signals **3604** take the form of radio frequency noise signals **3605.**

As depicted, noise transmitter **3628** can include electric noise generator **3630,** modulator **3632,** and transmitter **3634.** In one illustrative example, noise transmitter **3628** can be implemented using a noise transmitter such as radio frequency transmitter **1002** as depicted in **Figure 10** and **Figure 11****.** In other illustrative examples, other types of noise transmitters can be used to transmit other types of noise signals **3604.**

In the illustrative examples, the noise generator can be implemented to generate electrical noise and other forms other than radio frequency noise signals. As result, noise signals **3604** can take different forms and can be selected from at least one of noise signals are selected from at least one of electromagnetic frequency noise signals, radio frequency noise signals, microwave frequency noise signals, audio frequency noise signals, ultrasonic frequency noise signals, ultra-low frequency noise signals, very low frequency noise signals, underwater frequency noise signals, or optical frequency noise signals including visible and/or non-visible light.

When using analog amplitude noise modulation **3620,** communications manager **3614** identifies information **3606** in the form of analog information **3607** for transmission. Communications manager **3614** transmits noise signals **3604** with varying amplitude **3640** that thereby modulate noise signals **3604** to correspond to analog information **3607.** In other words, the amplitude **3651** of noise signals **3604** can be varied such that the manner in which the amplitude varies is the same, similar, corresponding, or correlated pattern or information as analog information **3607.**

In one illustrative example, noise signals **3604** take the form of radio frequency noise signals **3605.** With this example, laser generation system **3626** is configured to emit a set of one or more laser beams **3627.** As result, in transmitting noise signals **3604,** communications manager **3614** controls emission of the set of one or more laser beams **3627** from laser generation system **3626** to cause and/or control optical breakdowns **3625** that generate radio frequency noise signals **3605** with varying amplitude **3640** that thereby modulate radio frequency noise signals **3605** to correspond to analog information **3607.** In other words, analog information **3607** is encoded, transferred, transformed, and/or modulated into radio frequency noise signals **3605** based on different amplitudes for radio frequency noise signals **3605.**

In controlling the emission of the set of one or more laser beams **3627,** communications manager **3614** can control strength **3641** of the set of one or more laser beams **3627** emitted from laser generation system **3626** to cause and/or control optical breakdowns **3625** that generate radio frequency noise signals **3605** with varying amplitude **3640** that thereby modulate radio frequency noise signals **3605** to correspond to analog information **3607.**

Communications manager **3614** can control strength **3641** of the set of one or more laser beams **3627** in a number of different ways. For example, strength **3641** of the set of one or more laser beams **3627** can be performed by controlling strength **3641** of the set of one or more laser beams **3627** emitted from laser source **3642** in laser generation system **3626.** For example, current, voltage, or power control can be used with laser diodes in laser source **3642** to change strength **3641.** In another example, pump source can be adjusted for laser source **3642** to change strength **3641.**

In another illustrative example, communications manager **3614** can control strength **3641** of the set of one or more laser beams **3627** using a set of optical elements **3643** to cause optical breakdowns **3625** that generate radio frequency noise signals **3605** with varying amplitude **3640** that thereby modulate radio frequency noise signals **3605** to correspond to the analog information **3607.** In this example, optical elements **3643** can include various fixed or adjustable elements such as a mirror, a lens, a focal focusing lens, or other optical element that can be adjusted to change strength **3641.**

In yet another illustrative example, communications manager **3614** can control strength **3641** of the set of one or more laser beams **3627** using amplitude modulator **3644** in laser generation system **3626.** In this example, amplitude modulator **3644** can modulate the amplitude, power, or intensity of the set of one or more laser beams **3627** emitted by laser source **3642.**

In another illustrative example, communications manager **3614** can transmit analog information **3607** using noise transmitter **3628** in signal transmission system **3619.** With this example, electric noise generator **3630** is configured to generate a carrier noise signal **3631.**

With this example, in generating noise signals **3604,** communications manager **3614** generates carrier noise signal using electric noise generator **3630.** Communications manager **3614** modulates amplitude **3633** of carrier noise signal **3631** using modulator **3632** to vary carrier noise signal **3631** with varying amplitude **3640** that thereby modulates carrier noise signal **3631** to correspond and/or correlate, directly or indirectly, to analog information **3607.** Communications manager **3614** transmits this carrier noise signal **3631** with varying amplitude **3640** as noise signals **3604** using transmitter **3634.**

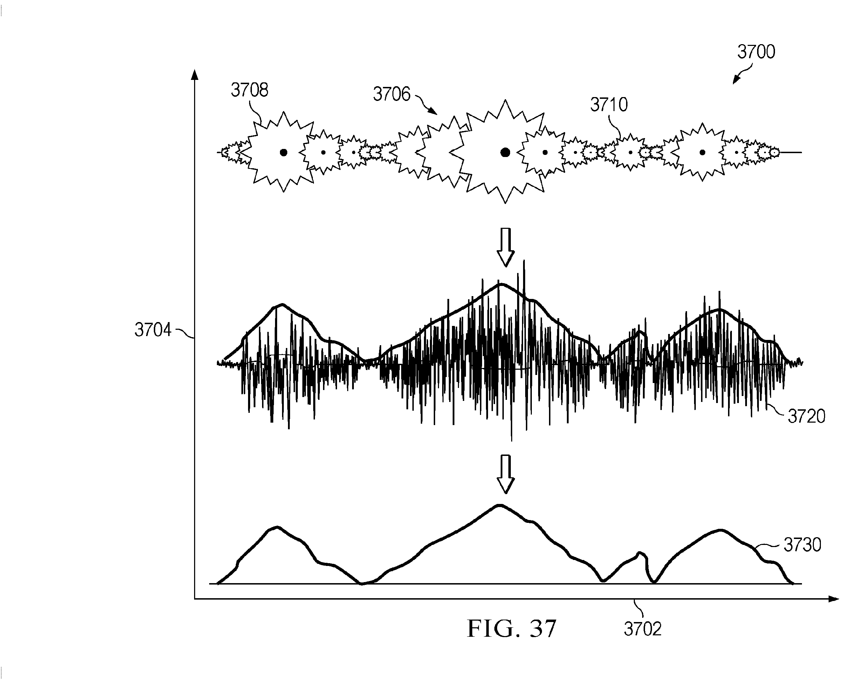

Turning next to **Figure 37****,** an illustration of information flow for transmitting analog information with analog amplitude noise modulation using a laser generation system is depicted in accordance with an illustrative embodiment. In this example, information flow **3700** can be implemented using laser generation system **3626** in signal transmission system **3619** for communications system **3602** in **Figure 36****.** In this example, x-axis **3702** represents time for optical breakdowns and noise signals while y-axis **3704** represents a strength or amplitude for noise signals in information flow **3700.**

As depicted, optical breakdowns **3706** are generated with varying amplitude based on the analog information to be transmitted. As previously described, these optical breakdowns are plasma generated using laser generation system **3626.** Each optical breakdown in optical breakdowns **3706** is a plasma event generated by the set of one or more laser beams **3627** emitted by laser generation system **3626** in **Figure 36****.**

In this illustrative example, different optical breakdowns in optical breakdowns **3706** have different sizes, strengths, amplitudes, or powers. For example, optical breakdown **3708** is larger in size, strength, amplitude, or power than optical breakdown **3710.** The sizes, amplitudes, strengths, or powers of optical breakdowns **3706** is controlled through controlling amplitude, power, or strength **3641** of the set of one or more laser beams **3627.** As depicted, the optical breakdowns are generated such that individual laser pulses in the optical breakdowns **3706** merge, overlap, or combine with each other in this example to achieve a continuously varying analog amplitude, power, or strength.

The result of these optical breakdowns is radio frequency noise signals **3720** and radio frequency noise signals **3605** as depicted in **Figure 36****.** As depicted, these radio frequency signals have varying amplitude that are modulated to correspond to the analog information being transmitted.

Analog signals **3730** can be recovered in response to receiver **3617** receiving radio frequency noise signals **3720** and radio frequency noise signals **3605** as depicted in **Figure 36****.** Thus, laser generation system **3626** is an example of one manner in which signal transmission system **3619** can transmit analog information **3607** in noise signals comprising radio frequency noise signals with varying amplitude.

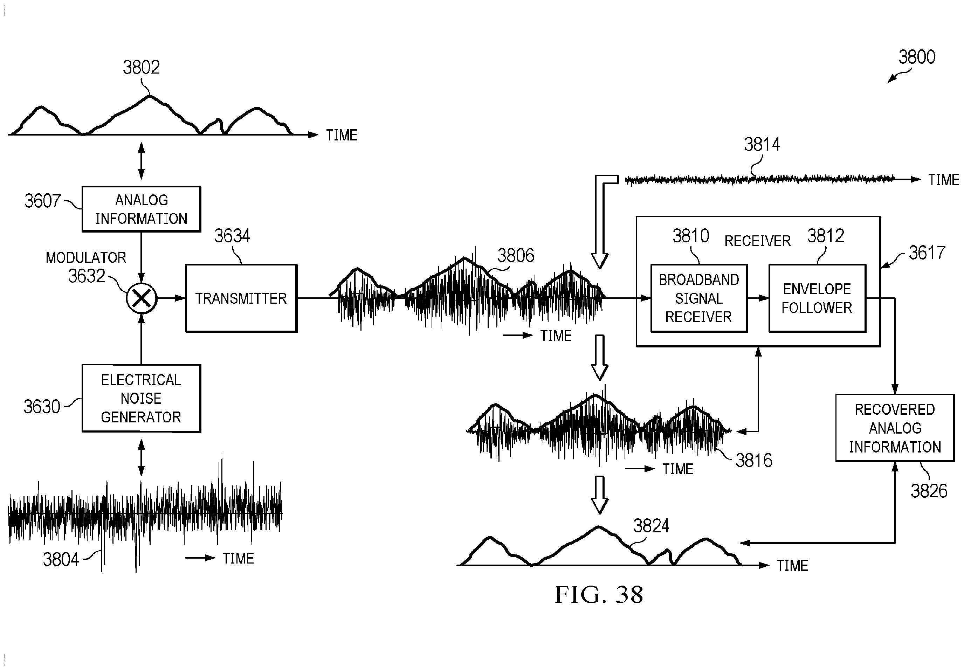

Turning next to **Figure 38****,** an illustration information flow for demonstrating transmitting analog information with analog amplitude noise modulation using a noise transmitter is depicted in accordance with an illustrative embodiment. In the illustrative examples, the same reference numeral may be used in more than one figure. This reuse of a reference numeral in different figures represents the same element in the different figures.

In this example, information flow **3800** can be implemented using noise transmitter **3628** in signal transmission system **3619** for communications system **3602** in **Figure 36****.**

As depicted in this example, analog signal **3802** is an example of analog information **3607** that is to be transmitted using analog amplitude modulation. In this example, electric noise generator **3630** generates carrier noise signal **3804.** In this example, modulator **3632** is an amplitude modulator that modulates carrier noise signal **3804** with analog signal **3802.** This modulation causes carrier noise signal **3804** to vary in amplitude in a manner that results in carrier noise signal with varying amplitude **3640** that is transmitted by transmitter **3634.** This carrier noise signal with varying amplitude **3640** is transmitted by transmitter **3634** as modulated carrier noise signal **3806.** Modulated carrier noise signal **3806** has a varying amplitude. This modulated carrier noise signal has an amplitude that varies in a manner that corresponds to or correlates with, directly or indirectly, with analog signal **3802.**

As depicted, receiver **3617** includes broadband signal receiver **3810** and envelope follower **3812.** Broadband signal receiver **3810** is a hardware device that is configured to receive and process signals across a wide range of frequencies. In this example, broadband signal receiver **3810** receives modulated carrier noise signal **3806** with varying amplitude. In addition, broadband signal receiver **3810** also receives noise **3814.** Noise **3814** represents the normal noise floor that can be present when receiving signals. This reception of modulated carrier noise signal **3806** and noise **3814** results in received signal **3816.** As depicted, received signal **3816** is a combination of modulated carrier noise signal **3806** and noise **3814.** In this example, envelope follower **3812** can detect amplitude variations in received signal **3816** to generate a signal having a shape that resembles, corresponds, or correlates to, directly or indirectly, those variations. In this example, the signal is recovered analog information signal **3824** for recovered analog information **3826.** In this example, envelope follower **3812** is implemented using envelope follower **1414** as depicted in **Figure 14** and **Figure 15B****.** As depicted in this example, recovered analog information signal **3824** for recovered analog information **3826** has the same or similar shape as analog signal **3802** for analog information **3607.**

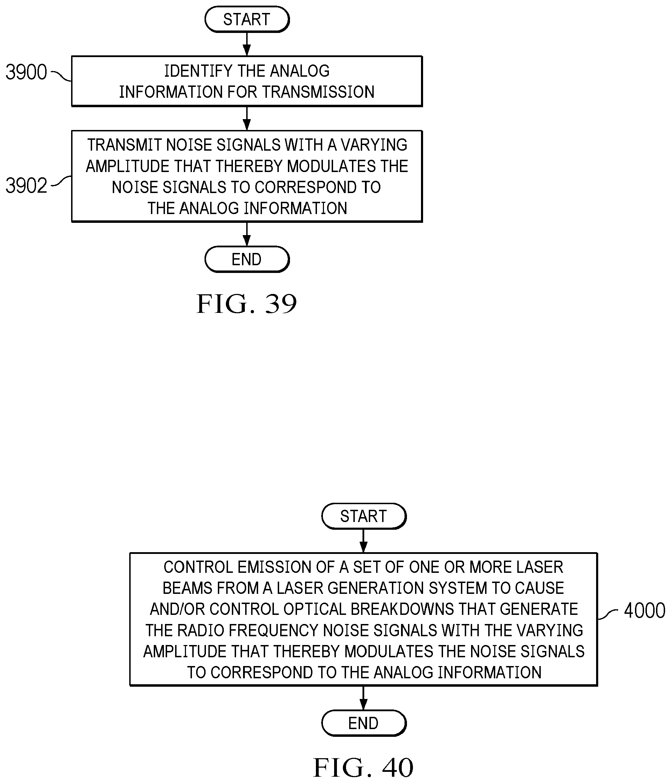

Turning now to **Figure 39****,** an illustration of a flowchart for communicating analog information is depicted in accordance with an illustrative embodiment. The process in **Figure 39** can be implemented in hardware, software, or both. When implemented in software, the process can take the form of program instructions that are run by one of more processor units located in one or more hardware devices in one or more computer systems. For example, the process can be implemented in communications manager **3614** in computer system **3612** in **Figure 36****.**

The process begins by identifying the analog information for transmission (operation **3900**). The process transmits noise signals with a varying amplitude that thereby modulates the noise signals to correspond to the analog information (operation **3902**). In other words, the varying amplitude of the analog information is used to modulate the noise signals to correspond to or correlate to, directly or indirectly, the analog information. The process terminates thereafter.

With reference next to **Figure 40****,** an illustration of flowchart of a process for transmitting noise signals using a laser generation system is depicted in accordance with an illustrative embodiment. The process in this figure is an example of an implementation for operation **3902** in **Figure 39****.** In this example, the noise signals are radio frequency noise signals.

The process controls emission of a set of one or more laser beams from a laser generation system to cause and/or control optical breakdowns that generate the radio frequency noise signals with the varying amplitude that thereby modulates the noise signals to correspond to the analog information (operation **4000**). The process terminates thereafter.

In other words, the varying amplitude of the analog information is used to control the emissions of the set of laser beams to cause and/or control optical breakdowns that generate the radio frequency noise signals and/or optical signals including visible and/or non-visible light. The varying amplitude is used to control these emissions which thereby modulates the noise signals to correspond to or correlate with, directly or indirectly, the analog information. In other words, the control of the emissions of the set of one or more laser beams does not necessarily correlate exactly to the varying analog amplitude. In alternative examples, the control of the emissions of the set of the one or more laser beams may be modified in such a way that the final output noise modulated signal most closely corresponds to original analog input signal such that it may be received with minimum distortion by a receiver **3617** in **Figure 36****.**

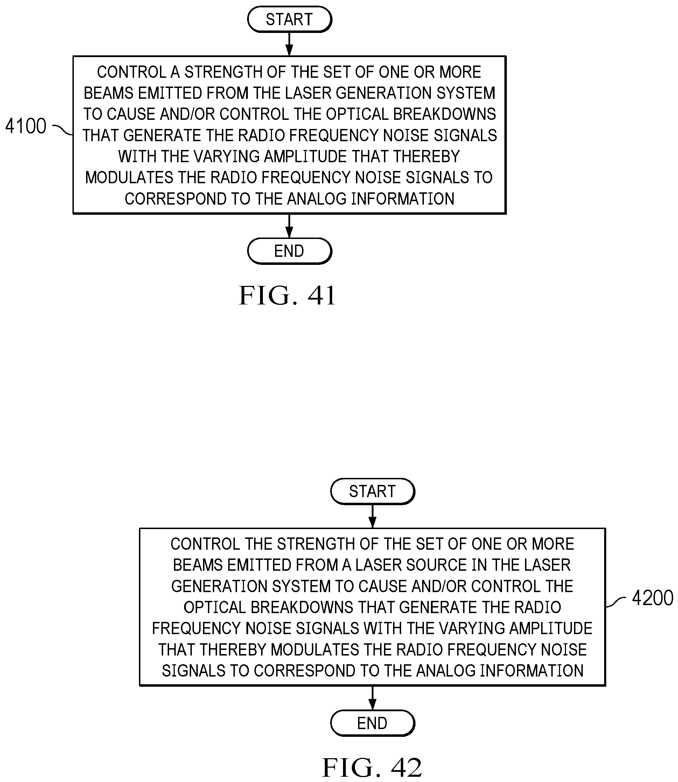

Next in **Figure 41****,** an illustration of a flowchart of a process for controlling emission of a set of one or more laser beams is depicted in accordance with an illustrative embodiment. The process in this figure is an example of an implementation for operation **4000** in **Figure 40****.**

The process controls a strength of the set of one or more beams emitted from the laser generation system to cause and/or control the optical breakdowns that generate the radio frequency noise signals with the varying amplitude that thereby modulates the radio frequency noise signals to correspond to the analog information (operation **4100**). The process terminates thereafter.

With reference now to **Figure 42****,** an illustration of a flowchart of a process for controlling emission of a set of one or more laser beams is depicted in accordance with an illustrative embodiment. The process in this figure is an example of an implementation for operation **4100** in **Figure 41****.**

The process controls the strength of the set of one or more beams emitted from a laser source in the laser generation system to cause and/or control the optical breakdowns that generate the radio frequency noise signals with the varying amplitude that thereby modulates the radio frequency noise signals to correspond to the analog information (operation **4200**). The process terminates thereafter.

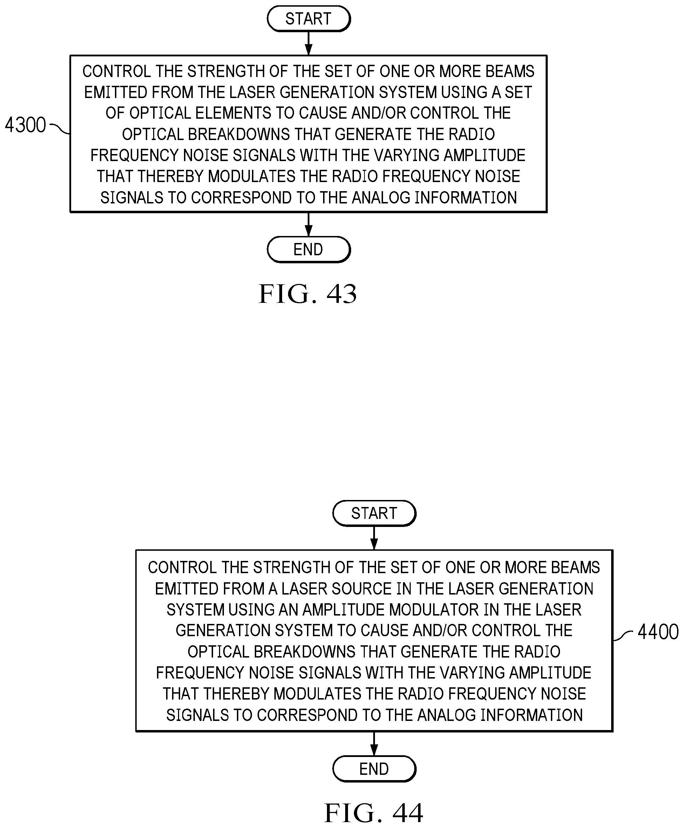

Next **Figure 43****,** an illustration of a flowchart of a process for controlling emission of a set of one or more laser beams is depicted in accordance with an illustrative embodiment. The process in this figure is an example of an implementation for operation **4100** in **Figure 41****.**

The process controls the strength of the set of one or more beams emitted from the laser generation system using a set of optical elements to cause and/or control the optical breakdowns that generate the radio frequency noise signals with the varying amplitude that thereby modulates the radio frequency noise signals to correspond to the analog information (operation **4300**). The process terminates thereafter.

With reference now to **Figure 44****,** an illustration of a flowchart of a process for controlling emission of a set of one or more laser beams is depicted in accordance with an illustrative embodiment. The process in this figure is an example of an implementation for operation **4100** in **Figure 41****.**

The process controls the strength of the set of one or more beams emitted from a laser source in the laser generation system using an amplitude modulator in the laser generation system to cause and/or control the optical breakdowns that generate the radio frequency noise signals with the varying amplitude that thereby modulates the radio frequency noise signals to correspond to the analog information (operation **4400**). The process terminates thereafter.

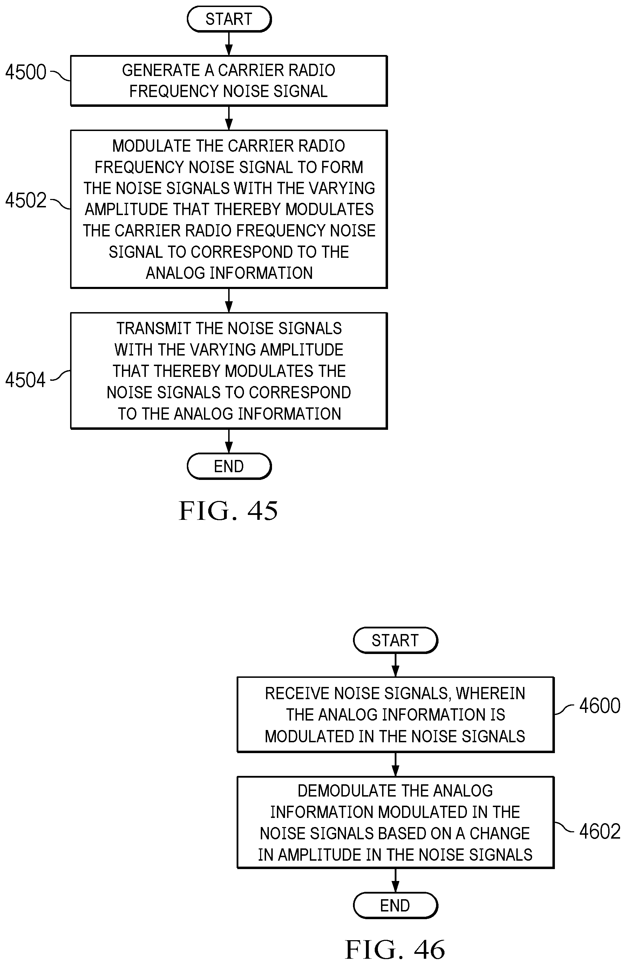

With reference now to **Figure 45****,** an illustration of a flowchart of a process for transmitting noise signals is depicted in accordance with an illustrative embodiment. The process in this figure is an example of an implementation for operation **3902** in **Figure 39****.**

The process begins by generating a carrier radio frequency noise signal (operation **4500**). The process modulates the carrier radio frequency noise signal to form the noise signals with the varying amplitude that thereby modulates the carrier radio frequency noise signal to correspond to the analog information (operation **4502**).

The process transmits the noise signals with the varying amplitude that thereby modulates the noise signals to correspond to the analog information (operation **4504**). The process terminates thereafter.

Turning next to **Figure 46****,** an illustration of a flowchart of process for communicating analog information is depicted in accordance with an illustrative. The process in **Figure 46** can be implemented in hardware, software, or both. When implemented in software, the process can take the form of program instructions that are run by one or more processor units located in one or more hardware devices in one or more computer systems. For example, the process can be implemented in receiver **3617** in **Figure 36****.**

The process begins by receiving noise signals, wherein the analog information is modulated in the noise signals (operation **4600**). The process demodulates the analog information modulated in the noise signals based on a change in amplitude in the noise signals (operation **4602).** The process terminates thereafter.

Some features of the illustrative examples for modulating analog information **3607** using analog amplitude noise modulation **3620** in communications system **3602** are described in the following clauses. These clauses are examples of features and are not intended to limit other illustrative examples.
1. A communications system comprising:
   a computer system; and
   a communications manager in the computer system, wherein the communications manager is configured to:
      identify analog information for transmission; and
      transmit noise signals with a varying amplitude that thereby modulate the noise signals to correspond to the analog information.
2. The communications system of clause 1, wherein the noise signals are radio frequency noise signals, and further comprising:
   a laser generation system configured to emit a set of one or more laser beams, wherein in transmitting the noise signals, the communications manager is configured to:
   control an emission of the set of one or more laser beams from the laser generation system to control optical breakdowns that generate the radio frequency noise signals with the varying amplitude that thereby modulate the radio frequency noise signals to correspond to the analog information.
3. The communications system of clause 2, wherein in controlling the emission of the set of one or more laser beams, the communication manager is configured to:
   control a strength of the set of one or more laser beams emitted from the laser generation system to control the optical breakdowns that generate the radio frequency noise signals with the varying amplitude that thereby modulate the radio frequency noise signals to correspond to the analog information.
4. The communications system of clause 3, wherein in controlling the strength of the set of one or more laser beams, the communication manager is configured to:
   control the strength of the set of one or more laser beams emitted from a laser source in the laser generation system to control the optical breakdowns that generate the radio frequency noise signals with the varying amplitude that thereby modulate the radio frequency noise signals to correspond to the analog information.
5. The communications system of clause 3, wherein in controlling the strength of the set of one or more laser beams, the communication manager is configured to:
   control the strength of the set of one or more laser beams emitted from the laser generation system using a set of optical elements to control the optical breakdowns that generate the radio frequency noise signals with the varying amplitude that thereby modulate the radio frequency noise signals to correspond to the analog information.
6. The communications system of clause 3, wherein in controlling the strength of the set of one or more laser beams, the communication manager is configured to:
   control the strength of the set of one or more laser beams emitted from the laser generation system using an amplitude modulator in the laser generation system to control the optical breakdowns that generate the radio frequency noise signals with the varying amplitude that thereby modulate the noise signals to correspond to the analog information.
7. The communications system of clause 1, further comprising:
   an electrical noise generator configured to generate a carrier noise signal;
   a modulator; and
   a transmitter, wherein in generating the noise signals, the communications manager is configured to:
      generate the carrier noise signal using the electrical noise generator; and
      modulate an amplitude of the carrier noise signal using the modulator to vary the carrier noise signal with the varying amplitude that thereby modulates the carrier noise signal to correspond to the analog information.
8. The communications system of clause 1, wherein the noise signals are selected from at least one of electromagnetic frequency noise signals, radio frequency noise signals, microwave frequency noise signals, audio frequency noise signals, ultrasonic frequency noise signals, ultra-low frequency noise signals, very low frequency noise signals, underwater frequency noise signals, or optical frequency noise signals including visible and/or non-visible light.
9. A method for communicating analog information, the method comprising:
   identifying the analog information for transmission; and
   transmitting noise signals with a varying amplitude that thereby modulates the noise signals to correspond to the analog information.
10. The method of clause 9, wherein the noise signals are radio frequency noise signals, and wherein said transmitting the noise signals comprises:
   controlling emission of a set of one or more laser beams from a laser generation system to control optical breakdowns that generate the radio frequency noise signals with the varying amplitude that thereby modulates the noise signals to correspond to the analog information.
11. The method of clause 10, wherein said controlling the emission of the set of one or more laser beams comprises:
   controlling a strength of the set of one or more beams emitted from the laser generation system to control the optical breakdowns that generate the radio frequency noise signals with the varying amplitude that thereby modulates the radio frequency noise signals to correspond to the analog information.
12. The method of clause 11, wherein said controlling the strength of the set of one or more beams comprises:
   controlling the strength of the set of one or more beams emitted from a laser source in the laser generation system to control the optical breakdowns that generate the radio frequency noise signals with the varying amplitude that thereby modulates the radio frequency noise signals to correspond to the analog information.
13. The method of clause 11, wherein said controlling the strength of the set of one or more beams comprises:
   controlling the strength of the set of one or more beams emitted from the laser generation system using a set of optical elements to control the optical breakdowns that generate the radio frequency noise signals with the varying amplitude that thereby modulates the radio frequency noise signals to correspond to the analog information.
14. The method of clause 11, wherein said controlling the strength of the set of one or more beams comprises:
   controlling the strength of the set of one or more beams emitted from a laser source in the laser generation system using an amplitude modulator in the laser generation system to control the optical breakdowns that generate the radio frequency noise signals with the varying amplitude that thereby modulates the radio frequency noise signals to correspond to the analog information.
15. The method of clause 9, wherein said transmitting the noise signals comprises:
   generating a carrier radio frequency noise signal; and
   modulating the carrier radio frequency noise signal to form the noise signals with the varying amplitude that thereby modulates the carrier radio frequency noise signal to correspond to the analog information; and
   transmitting the noise signals with the varying amplitude that thereby modulates the noise signals to correspond to the analog information.
16. The method of clause 9, wherein the noise signals are selected from at least one of electromagnetic frequency noise signals, radio frequency noise signals, microwave frequency noise signals, audio frequency noise signals, ultrasonic frequency noise signals, ultra-low frequency noise signals, very low frequency noise signals, underwater frequency noise signals, or optical frequency noise signals including visible and/or non-visible light.
17. A method for communicating analog information, the method comprising:
   receiving noise signals, wherein the analog information is modulated in the noise signals; and
   demodulating the analog information modulated in the noise signals based on a change in amplitude in the noise signals.
18. The method of clause 17, wherein a receiver receives the noise signals and demodulates the noise signals.

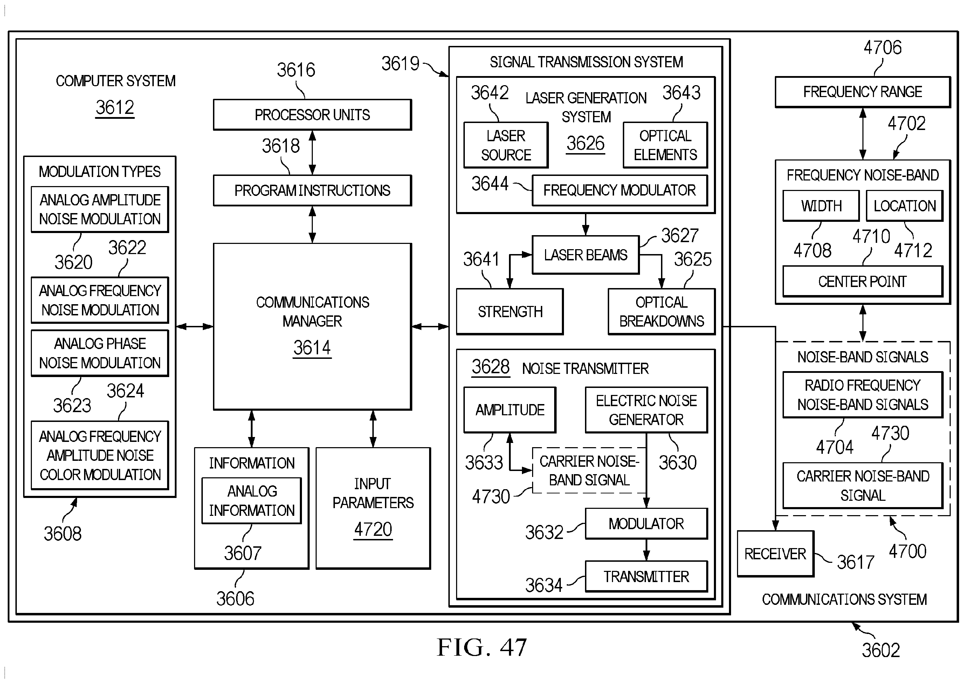

Turning now to Figure **47****,** an illustration of a block diagram of a communication system for transmitting noise signals using analog frequency noise modulation is depicted in accordance with an illustrative embodiment. In this illustrative example, communications system **3602** operates to modulate noise-band signals **4700** to correspond to information **3606** using analog frequency noise modulation **3622.** Noise-band signals **4700** can be selected from at least one of electromagnetic frequency noise signals, radio frequency noise signals, microwave frequency noise signals, audio frequency noise signals, ultrasonic frequency noise signals, ultra-low frequency noise signals, very low frequency noise signals, underwater frequency noise signals, optical frequency noise signals including visible and/or non-visible light, or other types of noise signals.

In this example, communications manager **3614** identifies analog information **3607** for transmission. Additionally, communications manager **3614** transmits noise-band signals **4700** with changes in a frequency noise-band **4702** that thereby modulate the noise-band signals **4700** to correspond to analog information **3607.** In other words, frequency noise-band **4702** of noise-band signals **4700** can be varied such that the manner in which the frequency noise-band **4702** varies corresponds to or correlates to, either directly or indirectly, the same or similar pattern as analog information **3607.**

In other words, the control of the changes in a frequency noise-band does not necessarily correlate exactly to the varying analog information **3607.** In alternative examples, the control of the changes in a frequency noise-band may be modified in such a way that the final output noise-modulated signal most closely corresponds to original analog information **3607** such that it may be received with minimum distortion by a receiver **3617** in **Figure 47****.**

In this example, frequency noise-band **4702** is a grouping of noise-band signals **4700.** For example, frequency noise-band **4702** can be at least one of "clusters of noise," "noise spectra," noise spectrum," "a frequency band of noise," "a pass-band of noise," "a band-pass of noise," "a frequency range of noise," or a "noise frequency range" which can have a lower ½ power boundary and an upper half-power boundary". Frequency noise-band **4702** for noise-band signals **4700** can be changed in a manner that corresponds to analog information **3607.** For example, noise-band signals **4700** can be modulated such that frequency noise-band **4702** changes in at least one of width **4708** (bandwidth or frequency bandwidth), location **4712,** center point **4710,** or ½ power boundary.

For example, frequency noise-band **4702** can be changed by changing frequency range **4706** of frequency noise-band **4702.** In this example, the change in frequency range **4706** of frequency noise-band **4702** means that the boundaries of frequencies encompassed by frequency noise-band **4702** can change. This change in the boundaries of frequency range **4706** can change at least one of bandwidth or width **4708,** location **4712,** or center point **4710,** of frequency noise-band **4702.** In this manner, noise-band signals **4700** can be modulated to change frequency range **4706** of frequency noise-band **4702** of noise-band signals **4700** in a manner that causes noise-band signals **4700** to correspond to or correlate to, either directly or indirectly, analog information **3607.**

In one illustrative example, this transmission can be performed by laser generation system **3626.** With this example, communications manager **3614** controls an emission of a set of one or more laser beams **3627** from laser generation system **3626** to cause and/or control optical breakdowns **3625** that generate noise-band signals **4700** in the form of radio frequency noise-band signals **4704** with the changes in frequency range **4706** of frequency noise-band **4702** for radio frequency noise-band signals **4704** that thereby modulate the radio frequency noise-band signals **4704** to correspond to or correlate to, directly or indirectly, the analog information **3607.** In this example, at least one of width **4708,** location **4712,** or center point **4710,** of frequency range **4706** of frequency noise-band **4702** can be varied to cause radio frequency noise-band signals **4704** to correspond to analog information **3607.**

In one illustrative example, communications manager **3614** controls the emission of the set of one or more laser beams **3627** by controlling the emission of the set of one or more laser beams **3627** from laser generation system **3626** to cause and/or control optical breakdowns **3625** that generate radio frequency noise-band signals **4704** by varying location **4712** of center point **4710** of frequency noise-band **4702** for radio frequency noise-band signals **4704.** In this example, a variation of the location **4712** of center point **4710** of frequency noise-band **4702** for radio frequency noise-band signals **4704** thereby modulates radio frequency noise-band signals **4704** to correspond to analog information **3607.**

Thus, in this example, center point **4710** can be moved back and forth to modulate radio frequency noise-band signals **4704** to correspond to analog information **3607.** In other words, the modulation of center point **4710** of radio frequency noise-band **4710** for radio frequency noise-band signals **4704** is an example of one manner in which radio frequency noise-band **4702** can be modulated to cause and/or control radio frequency noise-band signals **4704** to correspond to analog information **3607.**

In another example, communications manager **3614** can control the emission of the set of one or more laser beams **3627** from laser generation system **3626** to cause and/or control optical breakdowns **3625** that generate radio frequency noise-band signals **4704** by varying width **4708** of frequency range **4706** of frequency noise-band **4702** for radio frequency noise-band signals **4704.** In this example, a variation of width **4708** thereby modulates radio frequency noise-band signals **4704** to correspond to analog information **3607.** In other words, the width or range of radio frequency noise-band signals **4704** in frequency noise-band **4702** can be increased and decreased to modulate radio frequency noise-band signals **4704** to correspond to analog information **3607.**

In another example, communications manager **3614** controls a set of one or more input parameters **4720** for the emission of a set of one or more of laser beams **3627** from the laser generation system **3626** to cause and/or control optical breakdowns **3625** that generate radio frequency noise-band signals **4704** by varying frequency noise-band **4702.** In this example, a variation of frequency noise-band **4702** of radio frequency noise-band signals **4704** thereby modulates radio frequency noise-band signals **4704** to correspond to or correlate with, directly or indirectly, analog information **3607.**

With this example, the set of one or more input parameters **4720** can take a number of different forms. For example, the set of one or more input parameters **4720.** The set of input parameters **4720** can for example be selected from one or more of, a mirror orientation, a deformable mirror position, a lens position, lens, a deformable lens position or some other element that can be positioned in a manner that changes an optical path length (OPL) for the set of one or more laser beams **3627.** In this example, the path length change can be both the optical path length and the physical path length. Another input parameter that can be changed in this example is the index of refraction (IoR). The optical pathway is inversely proportional to the index of refraction.

These changes to input parameters **4720** can change frequency noise-band **4702** to radio frequency noise-band signals **4704.** For example, changes can be made to at least one of width **4708** (bandwidth or frequency bandwidth) or location **4712** of frequency noise-band **4702** for radio frequency noise-band signals **4704.**

In another example, communications manager **3614** can control noise transmitter **3628** in signal transmission system **3619** to transmit analog information **3607.** For example, in generating noise-band signals **4700,** communications manager **3614** can generate carrier noise-band signal **4730** using electric noise generator **3630.** Communications manager **3614** can modulate carrier noise-band signal **4730** using modulator **3632** to change frequency noise-band **4702** for carrier noise-band signal **4730.** Changes in frequency range **4706** of frequency noise-band **4702** for carrier noise-band signal **4730** thereby modulate carrier noise-band signal **4730** to correspond to analog information **3607.** Communications manager **3614** transmits carrier noise-band signal **4730** with changes in frequency range **4706** of frequency noise-band **4702.** In this example, these changes cause carrier noise-band signal **4730** to correspond to or correlate with, directly or indirectly, analog information **3607.** This type of modulation of carrier noise-band signal **4730** can change at least one of width **4708** or location **4712** of frequency noise-band **4702** for carrier noise-band signal **4730.**

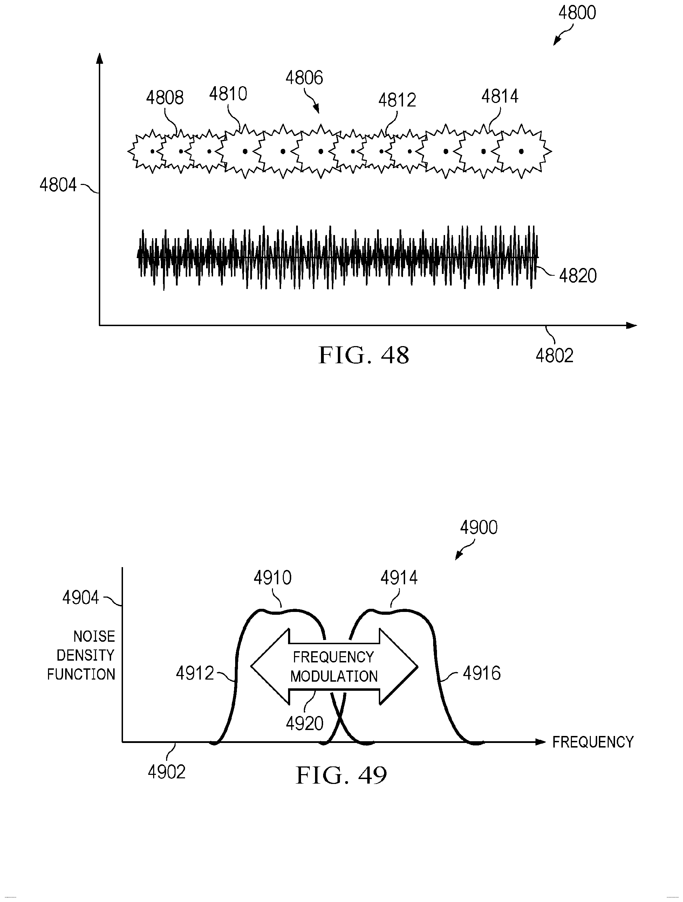

Turning to **Figure 48****,** an illustration of information flow for transmitting analog information with analog frequency noise modulation using a laser generation system is depicted in accordance with an illustrative embodiment. In this example, information flow **4800** can be implemented using laser generation system **3626** in signal transmission system **3619** for communications system **3602** in **Figure 47****.** In this example, x-axis **4802** represents time for optical breakdowns and noise signals while y-axis **4804** represents a strength of noise signals in information flow **4800.**

As depicted, optical breakdowns **4806** are generated with varying frequency based on the analog information to be transmitted. As previously described, these optical breakdowns are plasma generated using laser generation system **3626.** Each optical breakdown in optical breakdowns **4806** is a plasma event generated by the set of one or more laser beams **3627** emitted by laser generation system **3626** in **Figure 47****.**

In this illustrative example, different optical breakdowns in optical breakdowns **4806** occur at different times that are not periodic because of the different frequencies at which optical breakdowns **4806** occur. As depicted, the optical breakdowns **4806** are generated such that separated pulses are not present. Instead, optical breakdowns **4806** merge or overlap each other in this example.

In this example, the variation frequency can occur from the timing of laser pulses that generate optical breakdowns **4806.** For example, optical breakdown **4808** and optical breakdown **4810** occurs at a slower interval as compared to optical breakdown **4812** and optical breakdown **4814.**

The result of these optical breakdowns is radio frequency noise signals **4820.** As depicted, these radio frequency signals have varying frequencies of noise or noise-bands that are modulated through the frequency of optical breakdowns **4806** to correspond to and/or correlate with, directly or indirectly, the analog information being transmitted. In this example, the change in the frequency of radio frequency noise signals can include at least one of a change in the center point location or width of radio frequency noise signals **4820.**

Turning next to **Figure 49****,** an illustration of frequency noise modulation of radio frequency signals through changing a location of the center points of radio frequency noise-band signals is depicted in accordance with an illustrative embodiment. In this illustrative example, in graph **4900,** x-axis **4902** denotes frequency and y-axis **4904** denotes noise density, noise power density, or noise density function.

As depicted, center point **4910** in frequency noise-band signal **4912** is shifted relative to center point **4914** of radio frequency noise-band signal **4916.** In this example, radio frequency noise-band signal **4916** occurs at a higher frequency band than radio frequency noise-band signal **4912.** Frequency noise-band signal **4912** can be generated using a lower bandpass noise carrier as compared to frequency noise-band signal **4916.**

In this example, frequency modulation **4920** can occur by changing the location of the center point of radio frequency signals back and forth. The amount of change in location can be used to cause and/or control radio frequency noise-band signals to correspond to the analog signals being transmitted.

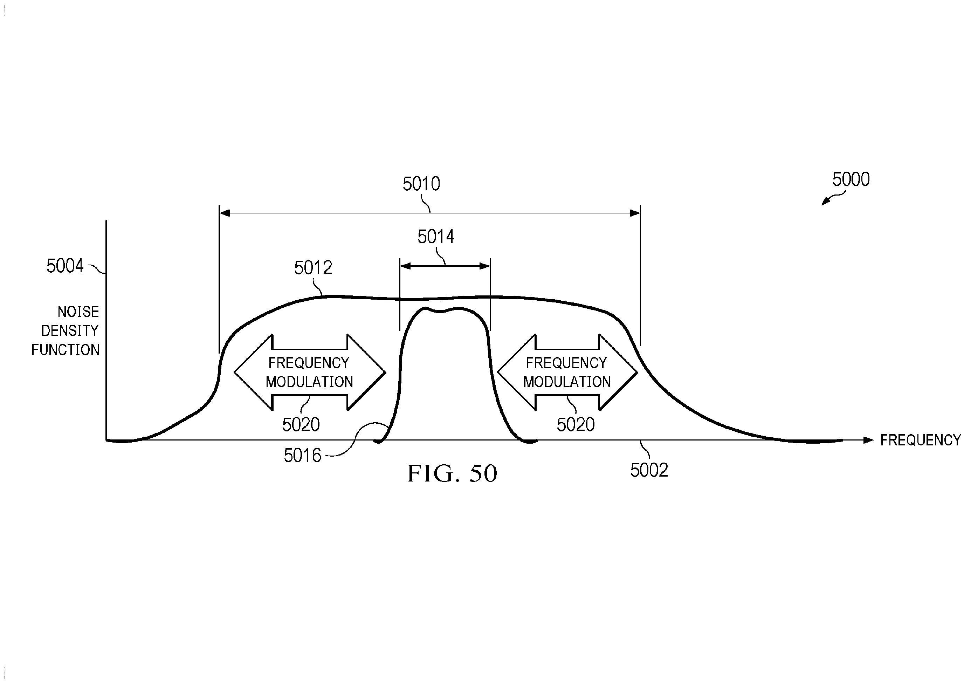

In **Figure 50****,** an illustration of frequency modulation of radio frequency signals through changing a width or bandwidth of radio frequency noise-band signals is depicted in accordance with an illustrative embodiment. In this illustrative example, in graph **5000,** x-axis **5002** denotes frequency and y-axis **5004** denotes noise density function.

As depicted, width **5010** of radio frequency noise-band signal **5012** is wider than width **5014** of radio frequency noise-band signal **5016.** In this example, radio frequency noise-band signal **5016** occurs at a narrower frequency band than the wider frequency band of radio frequency noise-band signal **5012.**

In this example, frequency modulation **5020** between width **5014** and width **5010** can be used to modulate these radio frequency noise-band signals to correspond to analog signals being transmitted.

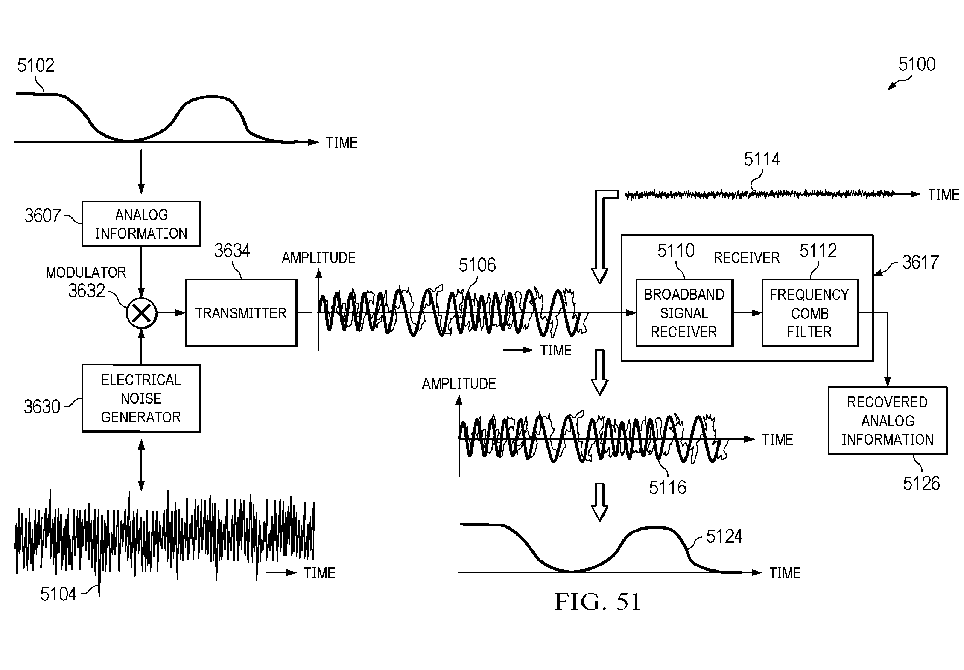

Turning next to **Figure 51****,** an illustration of information flow for transmitting analog information with analog frequency noise modulation using a noise transmitter is depicted in accordance with an illustrative embodiment. In the illustrative examples, the same reference numeral may be used in more than one figure. This reuse of a reference numeral in different figures represents the same element in the different figures.

In this example, information flow **5100** can be implemented using noise transmitter **3628** in signal transmission system **3619** for communications system **3602** in **Figure 47****.**

As depicted in **Figure 51** in this example, analog signal **5102** is an example of analog information **3607** in **Figure 47** that is to be transmitted using analog frequency noise modulation. In this example, electric noise generator **3630** generates carrier noise-band signal **5104.** In this example, modulator **3632** is a frequency modulator that modulates the frequency of carrier noise-band signal **5104** with analog information **3607.** This modulation causes carrier noise-band signal **5104** to vary in frequency in a manner that results in modulated carrier noise-band signal **5106** that has changes in a frequency range of the frequency noise-band for carrier noise-band signal **5104** that is transmitted by transmitter **3634.** This carrier noise-band signal with the frequency noise-band changes is transmitted by transmitter **3634** as modulated carrier noise-band signal **5106.** Modulated carrier noise-band signal **5106** is an example of carrier noise-band signal **5104** with changes in the frequency noise-band **4702** in **Figure 47****.** This modulated transmission signal has a frequency noise-band that varies in a manner that corresponds to analog signal **5102.**

As depicted, receiver **3617** includes broadband signal receiver **5110** and frequency comb filter **5112.** Broadband signal receiver **5110** is a hardware and/or software device that is configured to receive and process signals across a wide range of frequencies. In this example, broadband signal receiver **5110** receives modulated carrier noise-band signal **5106.**

In addition, broadband signal receiver **5110** also receives noise **5114.** Noise **5114** represents the normal noise floor that can be present when receiving signals. This reception of modulated carrier noise-band signal **5106** and noise **5114** results in received signal **5116.** As depicted in this example, received signal **5116** is the same as modulated carrier noise-band signal **5106.** Noise **5114** is not relevant in the signal because modulated carrier noise-band signal **5106** is above the noise floor represented by noise **5114.**

In this example, frequency comb filter **5112** can detect frequency changes in the frequency noise-band for received signal **5116** to generate a signal having a shape that resembles those frequency noise-band variations. Frequency comb filter **5112** detects amplitudes of bandpass noise signals that exceed a threshold at different frequency ranges. Multiple filters can have ranges of bandpass frequencies in which each filter is assigned a range of bandpass frequencies. Each of these filters is connected to an amplitude detector that can detect when a noise signal is present for that particular bandpass range of frequencies.

In this example, the output signal from the frequency comb filter **5112** is recovered analog information signal **5124** for recovered analog information **5126.** As depicted in this example, recovered analog information signal **5124** for recovered analog information **5126** has the same shape as analog signal **5102** for analog information **3607.**

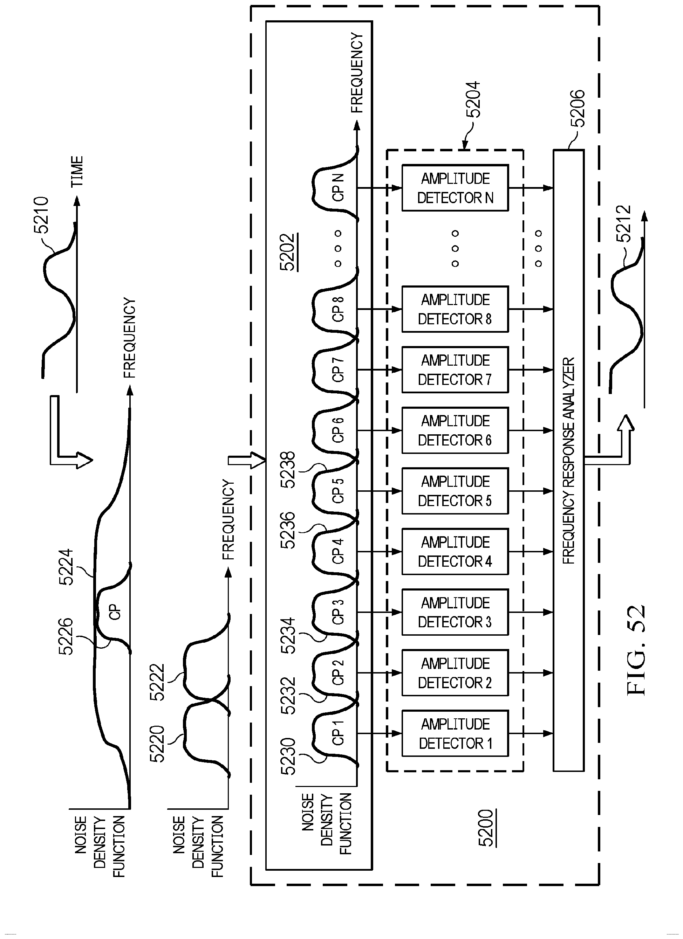

Turning now to **Figure 52****,** an illustration of a receiver frequency comb filter is depicted in accordance with an illustrative embodiment. In this illustrative example, frequency comb filter **5200** is an example of an implementation for frequency comb filter **5112** in Figure **51****.** As depicted, frequency comb filter **5200** comprises bandpass filters **5202,** amplitude detectors **5204,** and frequency response analyzer **5206.**

In this illustrative example, bandpass filters **5202** are filters that pass selected ranges of frequencies. Each bandpass filter in bandpass filters **5202** is configured to pass frequencies of a particular range with CPx (CP1, CP2, CP3, etc.) indicating the center point of that bandpass filter in bandpass filters **5202.** In this example, bandpass filters **5202** are configured to cover a frequency range for frequencies expected for input analog noise-band signal **5210.** These input noise-band signals can be, for example, radio frequency noise-band signals or carrier noise-band signals that have been modulated to correspond to or encode analog information.

Amplitude detectors **5204** have inputs connected to the output of bandpass filters **5202.** Amplitude detectors **5204** generate output signals in response to detecting signal amplitudes greater than a threshold. In this illustrative example, an amplitude detector is connected to each of bandpass filters **5202.** As a result, amplitude detectors **5204** can indicate when different ranges of frequencies are detected from input analog noise-band signal **5210.**

Frequency response analyzer **5206** is connected to the outputs of amplitude detectors **5204.** Frequency response analyzer **5206** generates recovered analog information in the form of recovered analog information signal **5212.**

For example, when input analog noise-band signal **5210** is modulated by changing the location of the center points, this change in the set of points can be detected by different bandpass filters. These changes in frequency location are for a change in frequency of the center points (CP1, CP2, CP3, etc.) of the noise-bands which is detected by frequency comb filter **5200.** For example, signal **5220** can be detected by bandpass filter **5230** while signal **5222** can be detected by bandpass filter **5232.**

Changes in the width of the signal can also be detected. For example, wide noise bandpass signal **5224** can be detected by bandpass filter **5230,** bandpass filter **5232,** bandpass filter **5234,** bandpass filter **5236,** and bandpass filter **5238.** The narrower bandpass noise signal **5226** can only be detected by bandpass filter **5234.**

This change in the center points or the change in the widths of noise signals can be used to determine the correlation or correspondence, directly or indirectly, to analog information to obtain recovered analog information signal **5212.** In addition to frequency noise modulation, in other illustrative examples, this circuit can be implemented to determine changes in amplitude noise modulation, noise color modulation, and/or phase noise modulation.

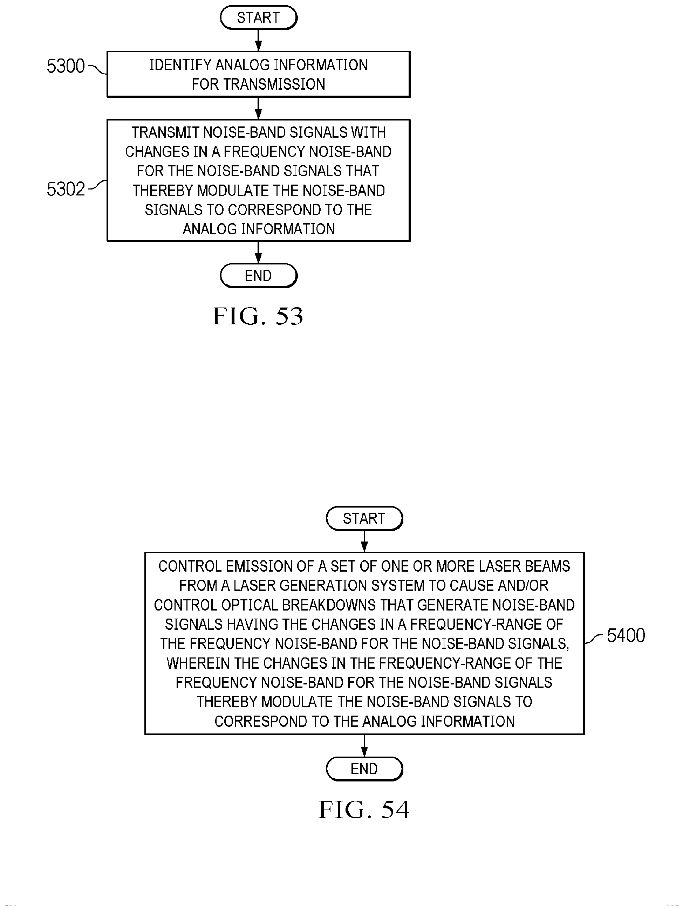

Turning now to **Figure 53****,** an illustration of a flowchart for communicating analog information is depicted in accordance with an illustrative embodiment. The process in **Figure 53** can be implemented in hardware, software, or both. When implemented in software, the process can take the form of program instructions that are run by one of more processor units located in one or more hardware devices in one or more computer systems. For example, the process can be implemented in communications manager **3614** in computer system **3612** in **Figure 47****.**

The process begins by identifying analog information for transmission (operation **5300**). The process transmits noise-band signals with changes in a frequency noise-band for the noise-band signals that thereby modulate the noise-band signals to correspond to the analog information (operation **5302).** The process terminates thereafter. These changes in a frequency noise-band do not necessarily correlate exactly to the varying analog information **3607.** In alternative examples, the control of the changes in a frequency noise-band may be modified in such a way that the final output noise-modulated signal most closely corresponds to original analog information **3607** such that it may be received with minimum distortion by a receiver **3617** in **Figure 47****.**

With reference next to **Figure 54****,** an illustration of a flowchart of a process for transmitting noise signals using a laser generation system is depicted in accordance with an illustrative embodiment. The process in this figure is an example of an implementation for operation **5302** in **Figure 53****.** In this example, the noise signals are radio frequency noise signals.

The process controls emission of a set of one or more laser beams from a laser generation system to cause and/or control optical breakdowns that generate noise-band signals having the changes in a frequency-range of the frequency noise-band for the noise-band signals, wherein the changes in the frequency-range of the frequency noise-band for the noise-band signals thereby modulate the noise-band signals to correspond to the analog information (operation **5400).** The process terminates thereafter.

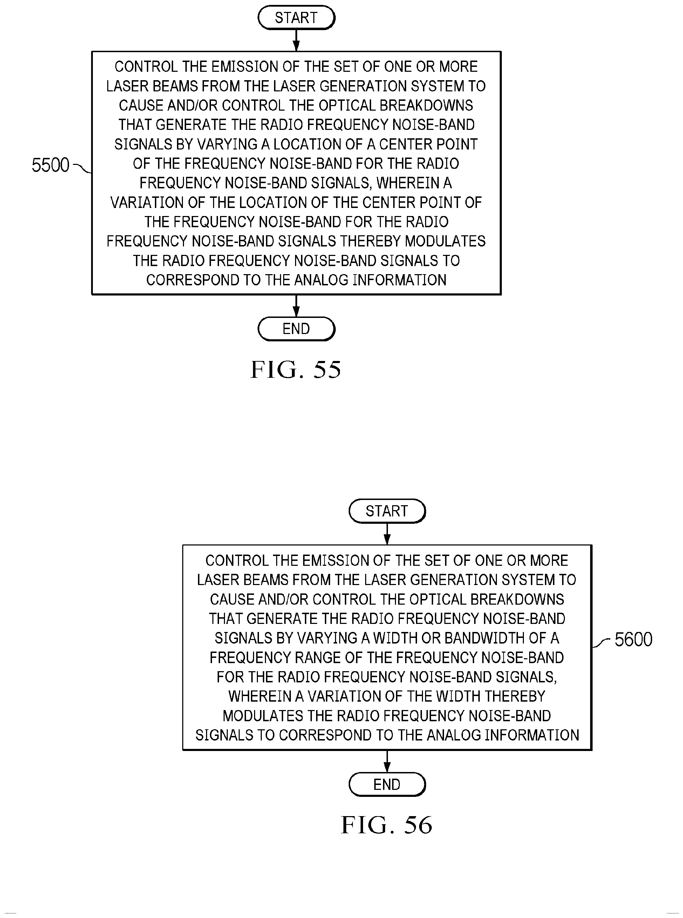

Next in **Figure 55****,** an illustration of a flowchart of a process for controlling emission of a set of one or more laser beams is depicted in accordance with an illustrative embodiment. The process in this figure is an example of an implementation for operation **5400** in **Figure 54****.**

The process controls the emission of the set of one or more laser beams from the laser generation system to cause and/or control the optical breakdowns that generate the radio frequency noise-band signals by varying a location of a center point of the frequency noise-band for the radio frequency noise-band signals, wherein a variation of the location of the center point of the frequency noise-band for the radio frequency noise-band signals thereby modulates the radio frequency noise-band signals to correspond to the analog information (operation **5500).** The process terminates thereafter.

In **Figure 56****,** an illustration of a flowchart of a process for controlling emission of a set of one or more laser beams is depicted in accordance with an illustrative embodiment. The process in this figure is an example of an implementation for operation **5400** in **Figure 54****.**

The process controls the emission of the set of one or more laser beams from the laser generation system to cause and/or control the optical breakdowns that generate the radio frequency noise-band signals by varying a width or bandwidth of a frequency range of the frequency noise-band for the radio frequency noise-band signals, wherein a variation of the width thereby modulates the radio frequency noise-band signals to correspond to the analog information (operation **5600).** The process terminates thereafter.

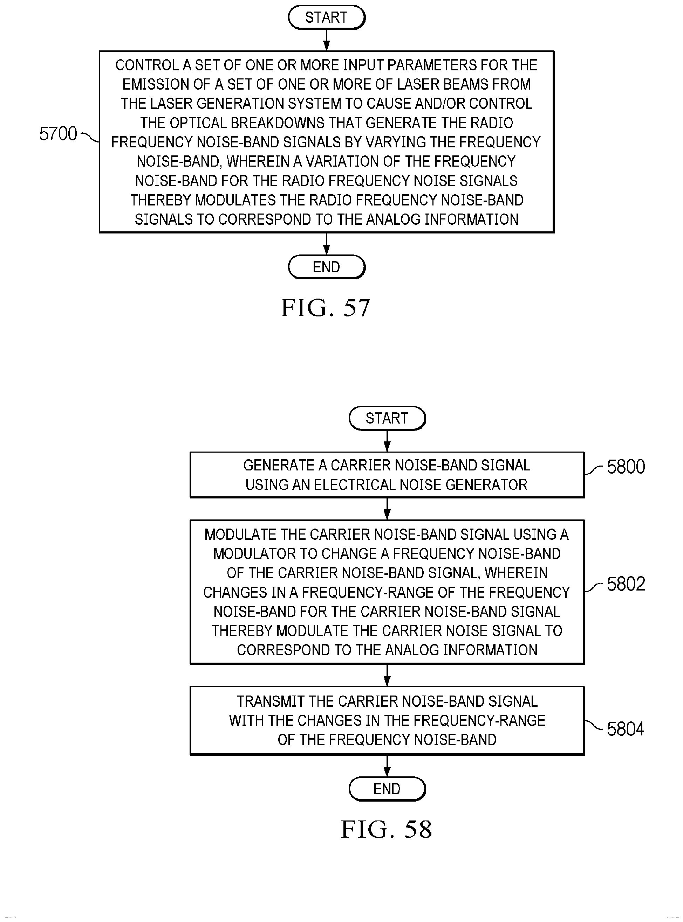

With reference to **Figure 57****,** an illustration of a flowchart of a process for controlling emission of a set of one or more laser beams is depicted in accordance with an illustrative embodiment. The process in this figure is an example of an implementation for operation **5400** in **Figure 54****.**

The process controls a set of one or more input parameters for the emission of a set of one or more of laser beams from the laser generation system to cause and/or control the optical breakdowns that generate the radio frequency noise-band signals by varying the frequency noise-band, wherein a variation of the frequency noise-band for the radio frequency noise signals thereby modulates the radio frequency noise-band signals to correspond to the analog information (operation **5700).** The process terminates thereafter.

With reference now to **Figure 58****,** an illustration of a flowchart of a process for transmitting noise signals is depicted in accordance with an illustrative embodiment. The process in this figure is an example of an implementation for operation **5302** in **Figure 53****.**

The process begins by generating a carrier noise-band signal using an electrical noise generator (operation **5800).** The process modulates the carrier noise-band signal using a modulator to change a frequency noise-band of the carrier noise-band signal, wherein changes in a frequency-range of the frequency noise-band for the carrier noise-band signal thereby modulate the carrier noise signal to correspond to the analog information (operation **5802).**

The process transmits the carrier noise-band signal with the changes in the frequency-range of the frequency noise-band (operation **5804).** The process terminates thereafter.

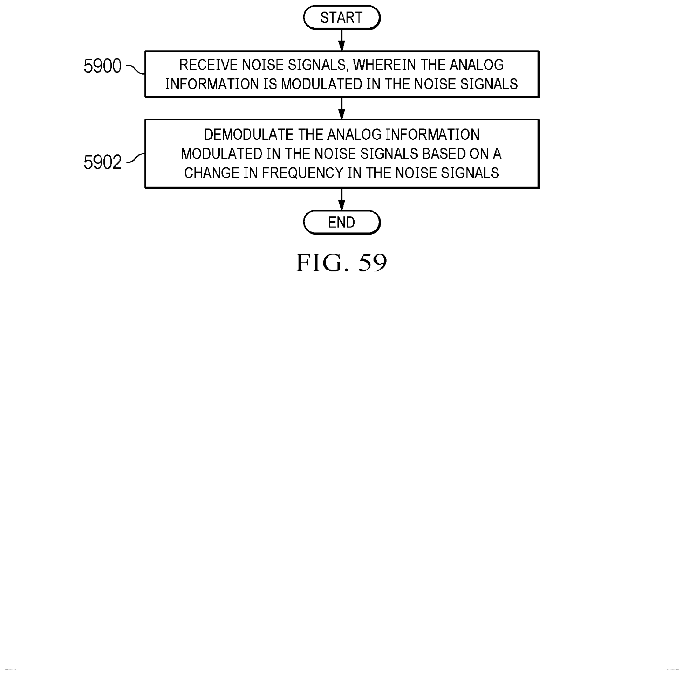

Turning next to **Figure 59****,** an illustration of a flowchart of process for communicating analog information is depicted in accordance with an illustrative. The process in **Figure 59** can be implemented in hardware, software, or both. When implemented in software, the process can take the form of program instructions that are run by one or more processor units located in one or more hardware devices in one or more computer systems. For example, the process can be implemented in receiver **3617** in **Figure 47****.**

The process begins by receiving noise signals, wherein the analog information is modulated in the noise signals (operation **5900).** The process demodulates the analog information modulated in the noise signals based on a change in frequency in the noise signals (operation **5902).** The process terminates thereafter.

Some features of the illustrative examples for modulating analog information **3607** using analog frequency noise modulation **3622** in communications system **3602** are described in the following clauses. These clauses are examples of features and are not intended to limit other illustrative examples.
1. A communications system comprising:
   a computer system; and
   a communications manager in the computer system, wherein the communications manager is configured to:
      identify analog information for transmission; and
      transmit noise-band signals with changes in a frequency noise-band of the noise-band signals that thereby modulate the noise-band signals to correspond to the analog information.
2. The communications system of clause 1, wherein the noise-band signals are radio frequency noise-band signals and further comprising:
   a laser generation system configured to emit a set of one or more laser beams,
   wherein in transmitting the noise-band signals, the communications manager is configured to:
      control an emission of a set of one or more laser beams from the laser generation system to control optical breakdowns that generate the radio frequency noise-band signals with the changes in a frequency-range of the frequency noise-band for the radio frequency noise-band signals that thereby modulate the radio frequency noise-band signals to correspond to the analog information.
3. The communications system of clause 2, wherein in controlling the emission of the set of one or more laser beams, the communications manager is configured to:
   control the emission of the set of one or more laser beams from the laser generation system to control the optical breakdowns that generate the radio frequency noise-band signals by varying a location of a center point of the frequency noise-band for the radio frequency noise-band signals, wherein a variation of the location of the center point of the frequency noise-band for the radio frequency noise-band signals thereby modulates the radio frequency noise-band signals to correspond to the analog information.
4. The communications system of clause 2, wherein in controlling the emission of the laser beams, the communications manager is configured to:
   control the emission of the set of one or more laser beams from the laser generation system to control the optical breakdowns that generate the radio frequency noise-band signals by varying a width of a frequency range of the frequency noise-band for the radio frequency noise-band signals, wherein a variation of the width thereby modulates the radio frequency noise-band signals to correspond to the analog information.
5. The communications system of clause 2, wherein in controlling the emission of the laser beams, the communications manager is configured to:
   control a set of one or more input parameters for the emission of a set of one or more of laser beams from the laser generation system to control the optical breakdowns that generate the radio frequency noise-band signals by varying the frequency noise-band, wherein a variation of the frequency noise-band for the radio frequency noise signals thereby modulates the radio frequency noise-band signals to correspond to the analog information.
6. The communications system of clause 1 further comprising:
   an electrical noise generator configured to generate a carrier noise-band signal; and
   a modulator; and
   a transmitter,
   wherein in transmitting the noise-band signals, the communications manager is configured to:
      generate the carrier noise-band signal using the electrical noise generator;
      modulate the carrier noise-band signal using the modulator to change a frequency noise-band for the carrier noise-band signal, wherein changes in a frequency-range of the frequency noise-band for the carrier noise-band signal thereby modulate the carrier noise-band signal to correspond to the analog information; and
      transmit the carrier noise-band signal with the changes in the frequency-range of the frequency noise-band for carrier noise-band signal.
7. The communications system of clause 6, wherein the carrier noise-band signal is selected from at least one of electromagnetic frequency noise signals, radio frequency noise signals, microwave frequency noise signals, audio frequency noise signals, ultrasonic frequency noise signals, ultra-low frequency noise signals, very low frequency noise-band signals, underwater frequency noise signals, or optical frequency noise signals including visible and/or non-visible light.
8. The communications system of clause 1, wherein the changes in the frequency noise-band for the noise-band signals are made to at least one of a width or a location of the frequency-noise-band.
9. The communications system of clause 1, wherein the changes are made to a frequency band of the frequency noise-band for the noise-band signals.
10. A method for communicating analog information, the method comprising:
   identifying analog information for transmission; and
   transmitting noise-band signals with changes in a frequency noise-band for the noise-band signals that thereby modulate the noise-band signals to correspond to the analog information.
11. The method of clause 10, wherein the noise-band signals are radio frequency noise-band signals and further comprising:
   controlling emission of a set of one or more laser beams from a laser generation system to control optical breakdowns that generate noise-band signals having the changes in a frequency-range of the frequency noise-band for the noise-band signals, wherein the changes in the frequency-range of the frequency noise-band for the noise-band signals thereby modulate the noise-band signals to correspond to the analog information.
12. The method of clause 11, wherein said controlling the emission of the set of one or more laser beams comprises:
   controlling the emission of the set of one or more laser beams from the laser generation system to control the optical breakdowns that generate the radio frequency noise-band signals by varying a location of a center point of the frequency noise-band for the radio frequency noise-band signals, wherein a variation of the location of the center point of the frequency noise-band for the radio frequency noise-band signals thereby modulates the radio frequency noise-band signals to correspond to the analog information
13. The method of clause 11, wherein said controlling the emission of the laser beams comprises:
   controlling the emission of the set of one or more laser beams from the laser generation system to control the optical breakdowns that generate the radio frequency noise-band signals by varying a width of a frequency range of the frequency noise-band for the radio frequency noise-band signals, wherein a variation of the width thereby modulates the radio frequency noise-band signals to correspond to the analog information.
14. The method of clause 11, wherein said controlling the emission of the laser beams comprises:
   controlling a set of one or more input parameters for the emission of a set of one or more of laser beams from the laser generation system to control the optical breakdowns that generate the radio frequency noise-band signals by varying the frequency noise-band, wherein a variation of the frequency noise-band for the radio frequency noise signals thereby modulates the radio frequency noise-band signals to correspond to the analog information.
15. The method of clause 10, wherein said transmitting the noise-band signals comprises:
   generating a carrier noise-band signal using an electrical noise generator; and
   modulating the carrier noise-band signal using a modulator to change a frequency noise-band of the carrier noise-band signal, wherein changes in a frequency-range of the frequency noise-band for the carrier noise-band signal thereby modulate the carrier noise signal to correspond to the analog information; and
   transmitting the carrier noise-band signal with the changes in the frequency-range of the frequency noise-band.
16. The method of clause 10, wherein the noise-band signals are selected from at least one of electromagnetic frequency noise signals, radio frequency noise signals, microwave frequency noise signals, audio frequency noise signals, ultrasonic frequency noise signals, ultra-low frequency noise signals, very low frequency noise signals, underwater frequency noise signals, or optical frequency noise signals including visible and/or non-visible light.
17. A method for communicating analog information, the method comprising:
   receiving noise-band signals, wherein analog information is modulated in the noise-band signals; and
   demodulating the analog information modulated in the noise-band signals based on changes in a frequency noise-band of the noise-band signals.
18. The method of clause 17, wherein the changes in the frequency noise-band are changes in a frequency-range of the frequency noise-band of the noise-band signals.
19. The method of clause 10, wherein the changes in the frequency noise-band for the noise-band signals are made to at least one of a width or a location of the frequency-noise-band.
20. The method of clause 10, wherein the changes are made to a frequency band of the frequency noise-band for the noise-band signals.

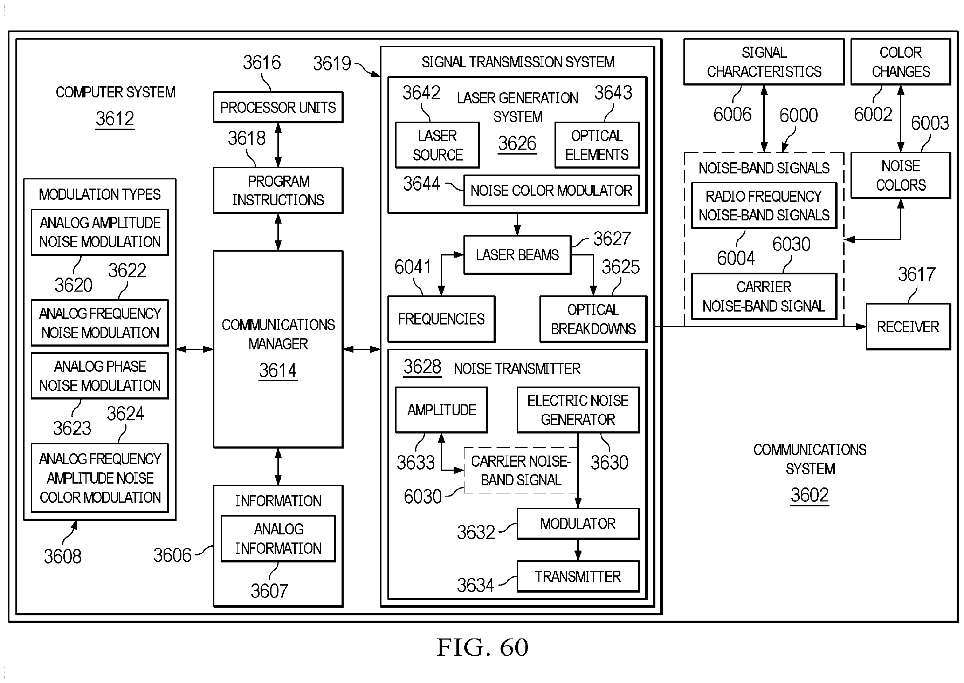

Turning now to **Figure 60****,** an illustration of a block diagram of a communications system **3602** for transmitting noise-band signals using analog frequency-amplitude noise color modulation, or more simply analog noise color modulation, is depicted in accordance with an illustrative embodiment. In this illustrative example, communications system **3602** operates to modulate noise-band signals **6000** to correspond to information **3606** using analog frequency amplitude color modulation **3624.**

In this illustrative example, noise-band signals **6000** can be selected from at least one of electromagnetic frequency noise signals, radio frequency noise signals, microwave frequency noise signals, audio frequency noise signals, ultrasonic frequency noise signals, ultra-low frequency noise signals, very low frequency noise signals, underwater frequency noise signals, or optical frequency noise signals including visible and/or non-visible light.

In this example, communications manager **3614** identifies analog information **3607** for transmission. Additionally, communications manager **3614** transmits noise-band signals **6000** that have a set of one or more noise colors **6003.** Communications manager **3614** transmits noise-band signals **6000** with color changes **6002** in noise colors **6003** of noise-band signals **6000** that modulate analog information **3607.** In this example, color changes **6002** in noise colors **6003** of noise-band signals **6000** correspond to and/or correlate with, directly or indirectly, analog information **3607.** This correspondence encodes, transfers, and/or transforms analog information **3607** into noise-band signals **6000.**

In other words, the control of the changes in a noise color modulation does not necessarily correlate exactly to the varying analog information **3607.** In alternative examples, the control of the changes in noise color modulation may be modified in such a way that the final output noise-modulated signal most closely corresponds to original analog information **3607** such that it may be received with minimum distortion by a receiver **3617** in **Figure 60****.**

In this illustrative example a noise color is a spectrum of frequencies present in noise-band signals **6000.** Different colors are present in noise colors **6003** based on a set of one or more signal characteristics **6006** of noise-band signals **6000.** These signal characteristics of noise-band signals **6000** can be selected from at least one of a noise slope characteristic, an amplitude, a frequency, a frequency region, a phase, a time domain, a polarization, a passband or bandpass, a band reject, a slope of the noise-band signals, a curvature of the noise-band signals, a frequency spectrum, a power spectral density profile, or other characteristics that can be used to define noise colors **6003.** Changes in these characteristics can be used to generate color changes **6002** in noise colors **6003** of noise-band signals **6000.**

As depicted, the transmission of noise-band signals **6000** with color changes **6002** can be performed by communications manager **3614** using signal transmission system **3619.** As depicted signal transmission system **3619** can include at least one of laser generation system **3626** or noise transmitter **3628.**

In one illustrative example, noise-band signals **6000** are radio frequency noise-band signals **6004.** In this example, laser generation system **3626** is configured to emit a set of one or more laser beams **3627.** In transmitting the noise-band signals **6000** encoding analog information **3607,** communications manager **3614** is configured to control an emission of a set of one or more laser beams **3627** from laser generation system **3626** to cause and/or control optical breakdowns **3625** that generate radio frequency noise-band signals **6004** with color changes **6002** in noise colors **6003** for radio frequency noise-band signals **6004** that modulate analog information **3607.**

For example, communications manager **3614** can control the emission of the set of one or more laser beams **3627** with signal changes in a set of one or more signal characteristics **6006** of radio frequency noise-band signals **6004** corresponding to noise colors **6003** for radio frequency noise-band signals **6004** that modulate the analog information **3607.**

In one illustrative example, in controlling the emission of the set of one or more laser beams **3627,** communications manager **3614** controls frequencies **6041** for the set of one or more laser beams **3627** emitted from laser source **3642** in laser generation system to cause and/or control the optical breakdowns that generate radio frequency noise-band signals **6004** to have signal changes in the set of one or more noise slope characteristics in the set of one or more signal characteristics **6006** corresponding to noise colors **6003** for radio frequency noise-band signals **6004** that modulate analog information **3607.**

In this illustrative example, other components in laser generation system **3626** can also be used to control frequencies **6041.** For example, optical elements **3643** can be used to change frequencies **6041** in addition to or in place of controlling laser source **3642.** Further, controlling noise slope characteristics is an example of one manner in which color changes **6002** in noise colors **6003** can be implemented. In other examples, other characteristics in the set of one or more signal characteristics **6006** can be controlled in place of or in addition to noise slope characteristics to implement color changes **6002** in noise colors **6003** for noise-band signals **6000.**

In another illustrative example, communications manager **3614** can generate carrier noise-band signal **6030** using electric noise generator **3630.** With this example, communications manager **3614** modulates carrier noise signal using modulator **3632** to form carrier noise-band signal **6030** with signal changes in a set of one or more signal characteristics **6006** thereby generating noise colors **6003** for carrier noise-band signal **6030** that modulate analog information **3607.**

In this example, modulator **3632** comprises a set of one or more filters that modify the set of one or more signal characteristics **6006** of carrier noise-band signal **6030** to create noise colors **6003.** These filters can be selected from at least one of a bandpass filter, a bandstop or band reject filter, a low pass filter, a high-pass filter, an all pass filter that changes the phase, a notch filter, or other suitable type of filter that can be used to generate color changes **6002** in noise colors **6003** for carrier noise-band signals **6030.** Thus, modulator **3632** can be used by communications manager **3614** to make modifications to a set of one or more signal characteristics **6006** for carrier noise-band signal **6030** that causes color changes **6002** in noise colors **6003** to a set of one or more signal characteristics for the carrier noise signal.

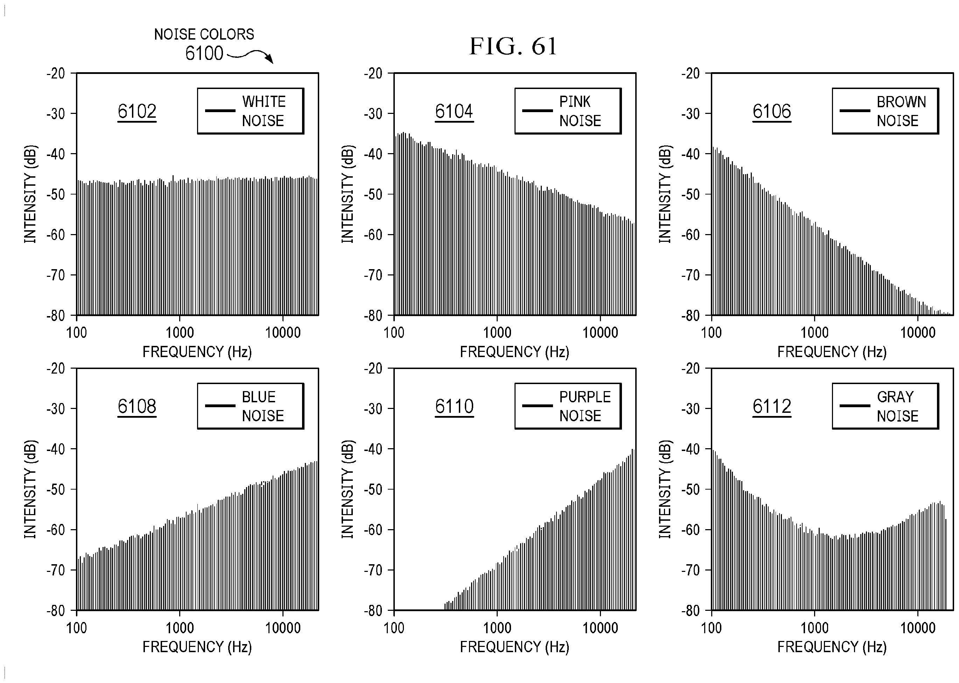

Turning next to **Figure 61****,** an illustration of noise colors is depicted in accordance with an illustrative embodiment. As depicted, noise colors **6100** are examples of noise colors **6003** for noise-band signals **6000** in **Figure 60****.** In this example, the signal characteristics for noise colors **6100** in **Figure 61** are defined by the power spectrum, frequency power spectrum, spectral density, or noise spectral density of the noise signal. The power spectrum shows the energy of noise signals distributed over various frequencies. Each noise color in this example is defined by the characteristics of the power spectrum.

As depicted, noise colors **6100** comprises white noise **6102,** pink noise **6104,** brown noise **6106,** blue noise **6108,** purple noise **6110,** and gray noise **6112.** As depicted, each of the noise colors **5900,** including white noise **6102,** pink noise **6104,** brown noise **6106,** blue noise **6108,** purple noise **6110,** and gray noise **6112,** has a unique signal characteristic, power spectral density, or power spectrum as compared to the other noise colors in noise colors **6100.**

For example, white noise **6102** has a power spectrum that is substantially flat. Pink noise **6104** has a power spectrum that slopes downward as the frequencies increase. Brown noise **6106** has a power spectrum with a steeper slope as compared to pink noise **6104.** Blue noise **6108** has a power spectrum with a slope that increases as the frequency increases. Purple noise **6110** has a steeper slope as compared to blue noise **6108.** As yet another example, gray noise **6112** is defined as a curve. Other noise colors may be defined with different spectral densities, including variations of curves with higher and lower power densities at different frequencies and/or spectral ranges.

In this illustrative example, analog information can be modulated or encoded within noise-band signals by using color changes to the noise color of the noise and signals. Different noise colors can be used to represent different amplitudes in an analog signal. Further, different color changes can also be used to represent varying amplitude values between one amplitude and another in the analog signal. In this illustrative example, the rate of change between noise colors may correspond to and/or correlate with, directly or indirectly, the rate of change (slope) of the amplitude of the analog information **3607** in **Figure 60****.**

Illustration of noise colors **6100** in **Figure 61** are presented as an example of some noise colors that can be used for noise colors **6003** in **Figure 60****.** This example is not meant to limit the manner in which other illustrative examples can implement noise colors **6003.** In other illustrative examples, other numbers or types of noise colors can be used in addition to or in place of noise colors **6100** depicted in this example.

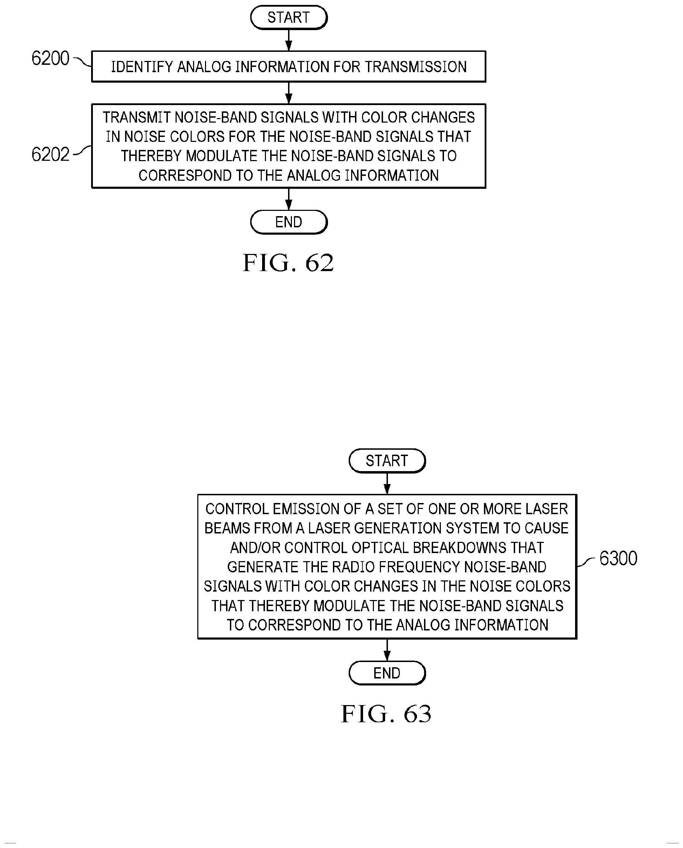

With reference next to **Figure 62****,** an illustration a flowchart of a process for communicating analog information is depicted in accordance with an illustrative embodiment. The process in **Figure 62** can be implemented in hardware, software, or both. When implemented in software, the process can take the form of program instructions that are run by one of more processor units located in one or more hardware devices in one or more computer systems. For example, the process can be implemented in communications manager **3614** in computer system **3612** in **Figure 60****.**

The process begins by identifying analog information for transmission (operation **6200).** The process transmits noise-band signals with color changes in noise colors for the noise-band signals that thereby modulate the noise-band signals to correspond to the analog information (operation **6202).** The process terminates thereafter. In this example, the color changes to the noise colors are used to modulate the noise-band signals to correspond to or correlate with, directly or indirectly, the analog information.

With reference now to **Figure 63****,** an illustration of a flowchart of a process for transmitting noise-band signals using a laser generation system is depicted in accordance with an illustrative embodiment. The process in this flowchart is an example of an implementation for operation **6202** in **Figure 62****.**

The process controls emission of a set of one or more laser beams from a laser generation system to cause and/or control optical breakdowns that generate the radio frequency noise-band signals with color changes in the noise colors that thereby modulate the noise-band signals to correspond to the analog information (operation **6300).** The process terminates thereafter.

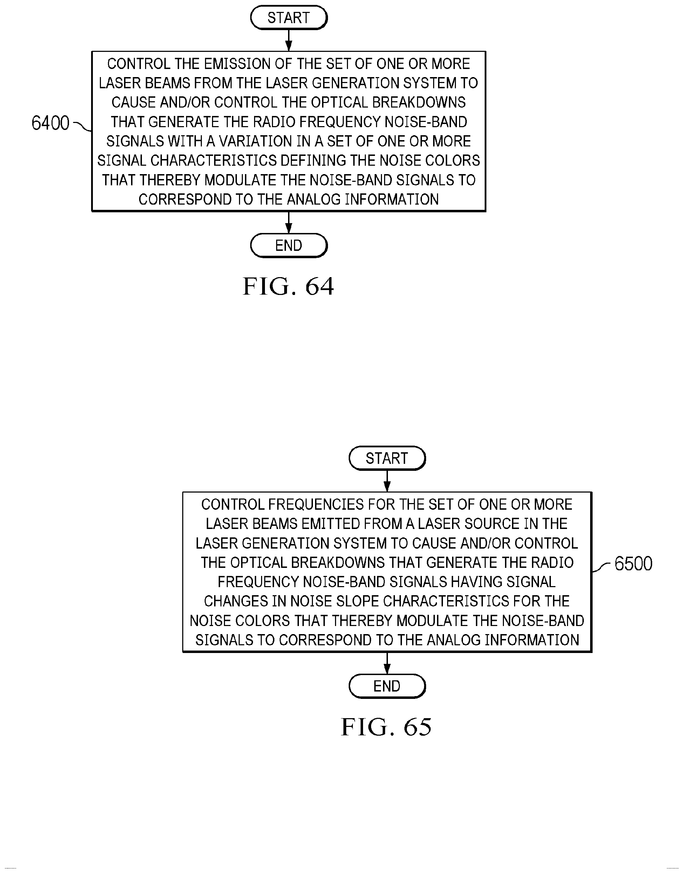

Turning next to **Figure 64****,** an illustration of a flowchart of a process for controlling the emission of a set of one or more laser beams is depicted in accordance with an illustrative embodiment. The process in this flowchart is an example of an implementation for operation **6300** in **Figure 63****.**

The process controls the emission of the set of one or more laser beams from the laser generation system to cause the optical breakdowns that generate the radio frequency noise-band signals with a variation in a set of one or more signal characteristics defining the noise colors that thereby modulate the noise-band signals to correspond to the analog information (operation **6400).** The process terminates thereafter.

Next in **Figure 65****,** an illustration of a flowchart of a process for controlling the emission of a set of one or more laser beams is depicted in accordance with an illustrative embodiment. The process in this flowchart is an example of an implementation for operation **6300** in **Figure 63****.**

The process controls frequencies for the set of one or more laser beams emitted from a laser source in the laser generation system to cause and/or control the optical breakdowns that generate the radio frequency noise-band signals having signal changes in noise slope characteristics for the noise colors that thereby modulate the noise-band signals to correspond to the analog information (operation **6500).** The process terminates thereafter.

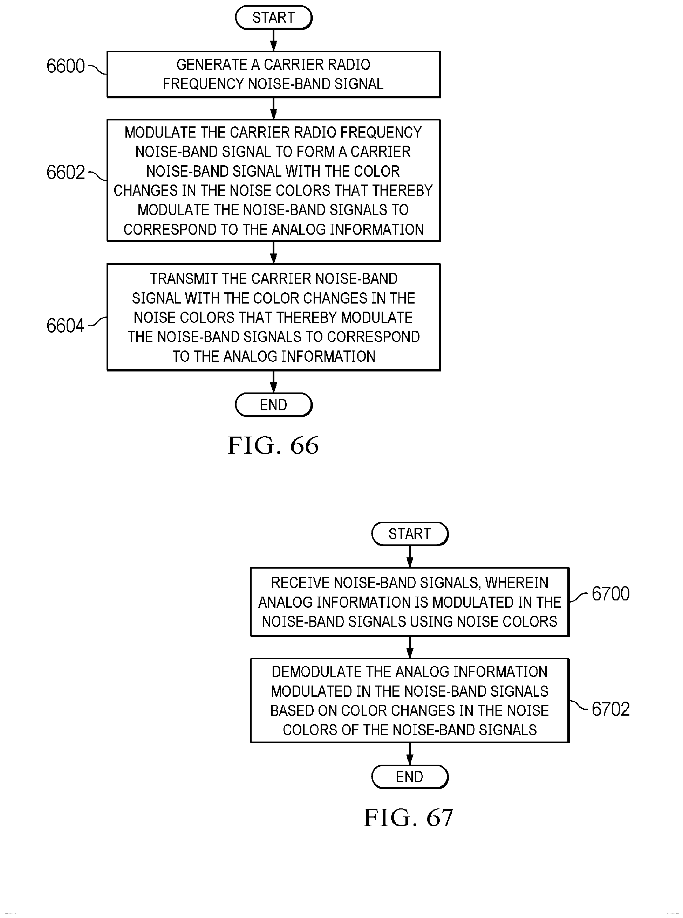

With reference now to **Figure 66****,** an illustration of a flowchart of a process for transmitting noise signals using a noise transmitter is depicted in accordance with an illustrative embodiment. The process in this flowchart is an example of an implementation for operation **6202** in **Figure 62****.**

The process begins by generating a carrier radio frequency noise-band signal (operation **6600).** The process modulates the carrier radio frequency noise-band signal to form a carrier noise-band signal with the color changes in the noise colors that thereby modulate the noise-band signals to correspond to the analog information (operation **6602).**

The process transmits the carrier noise-band signal with the color changes in the noise colors that thereby modulate the noise-band signals to correspond to the analog information (operation **6604).** The process terminates thereafter.

Turning next to **Figure 67****,** an illustration of a flowchart of a process for communicating analog information is depicted in accordance with an illustrative embodiment. The process in **Figure 67** can be implemented in hardware, software, or both. When implemented in software, the process can take the form of program instructions that are run by one of more processor units located in one or more hardware devices in one or more computer systems. For example, the process can be implemented in receiver **3617** in **Figure 58****.**

The process begins by receiving noise-band signals, wherein analog information is modulated in the noise-band signals using noise colors (operation **6700).** The process demodulates the analog information modulated in the noise-band signals based on color changes in the noise colors of the noise-band signals (operation **6702).** The process terminates thereafter.

Some features of the illustrative examples for modulating analog information **3607** using analog frequency noise color modulation **3624** in communications system **3602** are described in the following clauses. These clauses are examples of features and are not intended to limit other illustrative examples.
1. A communications system comprising:
   a computer system; and
   a communications manager in the computer system, wherein the communications manager is configured to:
      identify analog information for transmission; and
      transmit noise-band signals with color changes in noise colors for noise-band signals that thereby modulate the noise-band signals to correspond to the analog information.
2. The communications system of clause 1, wherein the noise-band signals are radio frequency noise-band signals and further comprising:
   a laser generation system configured to emit a set of one or more laser beams,
   wherein in transmitting the noise-band signals, the communications manager is configured to:
      control an emission of the set of one or more laser beams from the laser generation system to control optical breakdowns that generate the radio frequency noise-band signals with color changes in the noise colors for radio frequency noise band signals that thereby modulate the noise-band signals to correspond to the analog information.
3. The communications system of clause 2, wherein in controlling the emission of the set of one or more laser beams, the communication manager is configured to:
   control the emission of the set of one or more laser beams from the laser generation system to control the optical breakdowns that generate the radio frequency noise-band signals with signal changes in a set of one or more signal characteristics of radio frequency noise band signals corresponding to the noise colors for radio frequency noise band signals that thereby modulate the noise-band signals to correspond to the analog information.
4. The communications system of clause 3, wherein in controlling the emission of the set of one or more laser beams, the communication manager is configured to:
   control frequencies for the set of one or more laser beams emitted from a laser source in the laser generation system to control the optical breakdowns that generate the radio frequency noise-band signals to have signal changes in the set of one or more noise slope characteristics corresponding to the noise colors for the radio frequency noise-band signals that thereby modulate the noise-band signals to correspond to the analog information.
5. The communications system of clause 1 further comprising:
   an electrical noise generator configured to generate a carrier noise signal;
   a modulator; and
   a transmitter,
   wherein in generating the carrier noise signal, the communications manager is configured to:
      generate the carrier noise signal using the electrical noise generator; and
      modulate the carrier noise signal using the modulator to form a carrier noise-band signal with signal changes in a set of one or more signal characteristics thereby generating the noise colors for carrier noise signal that modulate the noise-band signals to correspond to the analog information,
6. The communications system of clause 5, wherein the modulator comprises a set of one or more filters that modify the set of one or more signal characteristics of the carrier noise signal to create the noise colors.
7. The communications system of clause 1, wherein the noise colors are defined using a set of one or more signal characteristics of the noise-band signals.
8. The communications system of clause 7, wherein the color changes in the noise colors are caused by modifications to a set of one or more signal characteristics for the carrier noise-band signal.
9. The communications system of clause 7, wherein the set of one or more signal characteristics of the noise-band signals is selected from at least one of a noise slope characteristic, an amplitude, frequency, a phase, a time domain, a polarization, a slope of the noise-band signals, a curvature of the noise-band signals, a frequency spectrum, or a power spectral density profile.
10. The communications system of clause 1, wherein the noise-band signals are selected from at least one of electromagnetic frequency noise signals, radio frequency noise signals, microwave frequency noise signals, audio frequency noise signals, ultrasonic frequency noise signals, ultra-low frequency noise signals, very low frequency noise signals, underwater frequency noise signals, or optical frequency noise signals including visible and/or non-visible light.
11. A method for communicating analog information, the method comprising:
   identifying analog information for transmission; and
   transmitting noise-band signals with color changes in noise colors for the noise band signals that thereby modulate the noise-band signals to correspond to the analog information.
12. The method of clause 11, wherein the noise-band signals are radio frequency noise-band signals and wherein transmitting the noise-band signals comprises:
   controlling emission of a set of one or more laser beams from a laser generation system to control optical breakdowns that generate the radio frequency noise-band signals with color changes in the noise colors that thereby modulate the noise-band signals to correspond to the analog information.
13. The method of clause 12, wherein said controlling the emission of the set of one or more laser beams comprises:
   controlling the emission of the set of one or more laser beams from the laser generation system to control the optical breakdowns that generate the radio frequency noise-band signals with a variation in a set of one or more signal characteristics defining the noise colors that thereby modulate the noise-band signals to correspond to the analog information.
14. The method of clause 13, wherein said controlling the emission of the set of one or more laser beams comprises:
   controlling frequencies for the set of one or more laser beams emitted from a laser source in the laser generation system to control the optical breakdowns that generate the radio frequency noise-band signals having signal changes in noise slope characteristics for the noise colors that thereby modulate the noise-band signals to correspond to the analog information.
15. The method of clause 11, wherein said transmitting the noise-band signals comprises:
   generating a carrier radio frequency noise-band signal;
   modulating the carrier radio frequency noise-band signal to form a carrier noise-band signal with the color changes in the noise colors that you is when been okay the ones that that summer figure like the slaves modulate the noise-band signals to correspond to the analog information; and
   transmitting the carrier noise-band signal with the color changes in the noise colors that thereby modulate the noise-band signals to correspond to the analog information.
16. The method of clause 15, wherein the noise colors are defined by a set of one or more signal characteristics and the color changes in the noise colors are caused by modifications to a set of one or more signal characteristics for the carrier noise signal.
17. The method of clause 16, wherein the modulator comprises a set of one or more filters that modify the set of one or more signal characteristics in the carrier noise signal to create the noise colors.
18. The method of clause 11, wherein the noise-band signals are selected from at least one of electromagnetic frequency noise signals, radio frequency noise signals, microwave frequency noise signals, audio frequency noise signals, ultrasonic frequency noise signals, ultra-low frequency noise signals, very low frequency noise signals, underwater frequency noise signals, or optical frequency noise signals including visible and/or non-visible light.
19. The method of clause 11, wherein the noise colors are identified using signal characteristics selected from at least one of amplitude, frequency, a phase, a time domain, a polarization, a slope of noise-band signals, a curvature of the noise-band signals, a frequency spectrum or a power spectral density profile.
20. A method for communicating analog information, the method comprising:
   receiving noise-band signals, wherein analog information is modulated in the noise-band signals using noise colors; and
   demodulating the analog information modulated in the noise-band signals based on color changes in the noise colors of the noise-band signals.

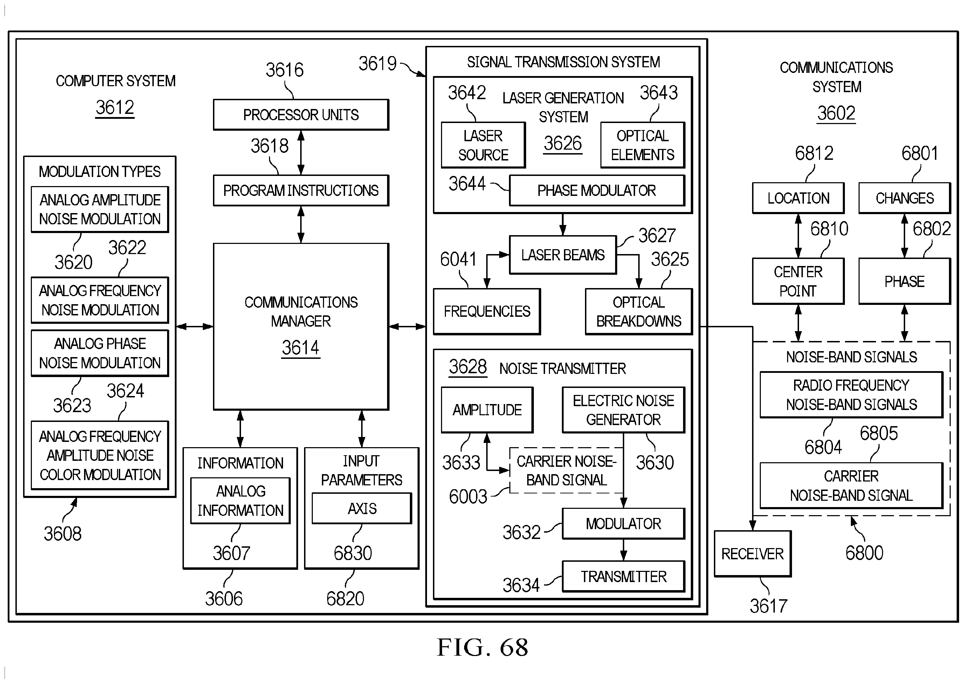

Turning now to **Figure 68****,** an illustration of a block diagram of a communications system **3602** for transmitting noise-band signals **6800** using analog phase noise modulation is depicted in accordance with an illustrative embodiment. In this illustrative example, communications system **3602** operates to modulate noise-band signals **6800** to correspond to information **3606** as analog information **3607** using analog phase noise modulation **3623.**

In this illustrative example, noise-band signals **6800** can be selected from at least one of electromagnetic frequency noise signals, radio frequency noise signals, microwave frequency noise signals, audio frequency noise signals, ultrasonic frequency noise signals, ultra-low frequency noise signals, very low frequency noise signals, underwater frequency noise signals, or optical frequency noise signals including visible and/or non-visible light.

In this example, communications manager **3614** identifies analog information **3607** for transmission. Communications manager **3614** transmits noise-band signals **6800** with changes **6801** in phase **6802** of the noise-band signals **6800** that thereby modulates noise-band signals **6800** to correspond to analog information **3607.** In this illustrative example, communications manager **3614** uses signal transmission system **3619** to transmit noise-band signals **6800** with changes **6801** in phase **6802.** The transmission of a signal transmission system **3619** can be made using various components such as laser generation system **3626** and noise transmitter **3628.**

In one illustrative example, communications manager **3614** uses laser generation system **3626** to transmit noise-band signals **6800** in the form of radio frequency noise-band signals **6804.** With this example, communications manager **3614** controls an emission of a set of one or more laser beams **3627** from laser generation system **3626** to cause and/or control optical breakdowns **3625** that generate radio frequency noise-band signals **6804** with the changes **6801** in phase **6802** that thereby modulates the phase of the radio frequency noise-band signals **6804** to correspond to analog information **3607.**

In controlling the emission of the set of one or more laser beams **3627,** communications manager **3614** can control the emission of the set of one or more laser beams **3627** from laser generation system **3626** to cause and/or control optical breakdowns **3625** that generate radio frequency noise-band signals **6804** by varying location **6812** of center point **6810** of radio frequency noise-band signals **6804.** In this example, a variation of location **6812** of center point **6810** of radio frequency noise-band signals **6804** thereby modulates phase **6802** of radio frequency noise-band signals **6804** to correspond to analog information **3607.**

In this illustrative example, the variation in location **6812** of center point **6810** can be performed in a number of different ways. For example, communications manager **3614** controls a set of one or more input parameters **6820** for an emission of a set of one or more laser beams **3627** from laser generation system **3626** to cause and/or control optical breakdowns **3625** that generate radio frequency noise-band signals **6804** by varying location **6812** of center point **6810** of radio frequency noise-band signals **6804.** In this example, a variation of location **6812** of center point **6810** of radio frequency noise-band signals **6804** thereby modulates phase **6802** of radio frequency noise-band signals **6804** to correspond to analog information. In other words, the variation in location **6812** of center point **6810** for radio frequency noise-band signals **6804** results in changes **6801** in phase **6802** for radio frequency noise-band signals **6804.**

Communications manager **3614** can control input parameters **6820** in a number of different ways. For example, communications manager **3614** can control axis **6830** in an input parameter in the set of one or more input parameters **6820** to cause and/or control changes **6801** in phase **6802.** In this illustrative example, communications manager **3614** can control directing the set of one or more laser beams **3627** along axis **6830** such that optical breakdowns **3625** vary in space along axis **6830** to generate radio frequency noise-band signals **6804** with changes **6801** in phase **6802** occurring along axis **6830** that thereby modulates the phase of radio frequency noise-band signals **6804** to correspond to analog information **3607.**

In this example, changes **6801** in phase **6802** caused by a change location **6812** in center point **6810** result in a phase shift. Changes **6801** in phase **6802** can be implemented through change in a laser position or mirror position using optical elements **3643** in laser generation system **3626.** These optical elements can include mirrors, lenses, and other devices. The change can occur through changing a focal length of a mirror or other components to cause and/or control a phase shift. In other cases, a mirror or lens can move to pivot a laser beam.

In another illustrative example, communications manager **3614** can use noise transmitter **3628** to transmit noise-band signals **6800** in the form of carrier noise-band signal **6805** with changes **6801** in phase **6802.** In this example, communications manager **3614** modulates the carrier noise-band signal **6805** using modulator **3632** to form carrier noise-band signal **6805** with changes **6801** in phase **6802** of carrier noise-band signal **6805** that thereby modulates the phase **6802** of carrier noise-band signal **6805** to correspond to the analog information **3607.**

In this example, modulator **3632** can be implemented using devices capable of shifting or changing phase **6802** of carrier noise-band signal **6805.** For example, modulator **3632** can be implemented using a phase shift modulator for bandwidth noise, noise-band center point, and/or noise color.

In this example, the change in phase **6802** can take a number of forms. For example, for a Doppler phase shift the carrier noise-band signal can be a shift in a bandpass range of frequencies. In another example, analog continuous Doppler phase shift of a bandpass range of colored noise frequencies, slope, or curvature of range of noise frequencies can occur using noise transmitter **3628.** In yet another example, a continuous Doppler shift of modulation of white, pink, red (Brownian), purple, or gray noise can occur using noise transmitter **3628.** Also, multi-color noise Doppler shifts (electronic approach as opposed to lasers) can occur using noise transmitter **3628.**

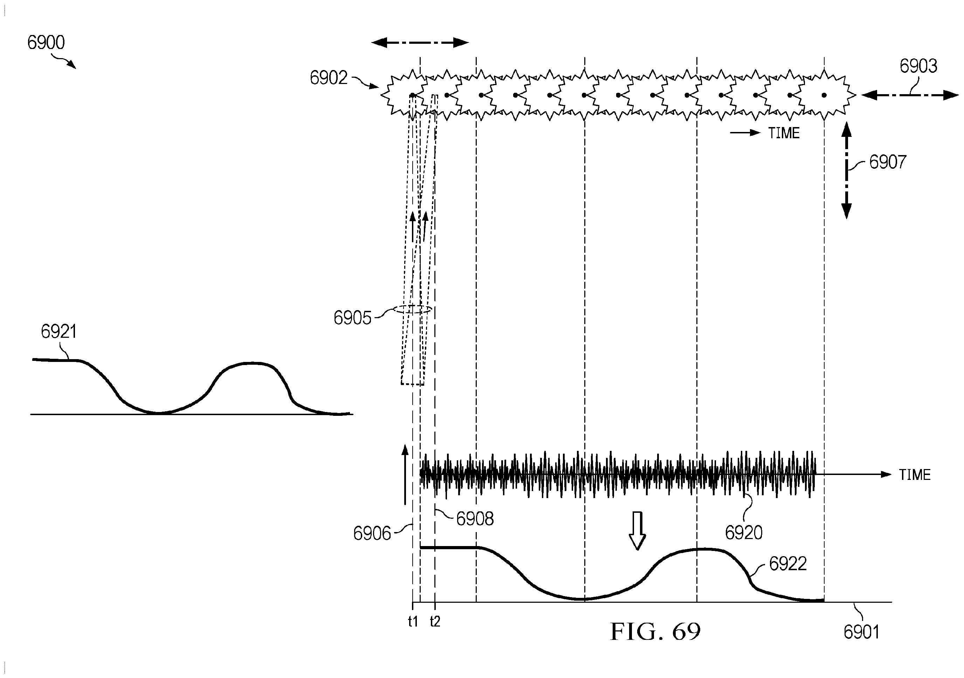

Turning next to **Figure 69****,** an illustration of information flow in transmitting analog information with analog phase noise modulation using a laser generation system is depicted in accordance with an illustrative embodiment. In this example, information flow **6900** can be implemented using laser generation system **3626** in signal transmission system **3619** for communications system **3602** in **Figure 68****.** In this example, x-axis **6901** represents time for optical breakdowns and noise signals in information flow **6900.** The y-axis for radio frequency noise-band signal **6920** and analog information **6922** represents amplitude or signal strength.

As depicted, optical breakdowns **6902** are generated with varying phase based on the analog information to be transmitted. In this example, the analog information is represented as input analog signal **6921.** As previously described, these optical breakdowns **6902** are plasma generated using laser generation system **3626** laser beams **3627** in **Figure 68****.** Each optical breakdown in optical breakdowns **6902** in **Figure 69** is a plasma event generated by the set of one or more laser beams **3627** emitted by laser generation system **3626** in **Figure 68****.** In **Figure 69****,** the act of pivoting laser beam **6905** to the right or left during optical breakdown results in respective positive or negative Doppler phase shift in a lateral direction causing a Doppler noise-band phase shift along axis **6903.**

In this example, the phase of optical breakdowns **6902** can change along axis **6903.** As depicted, laser beam **6905** can generate optical breakdowns **6902** at time t1 **6906.** As long as laser beam **6905** does not pivot as this timing is used, the phase of optical breakdowns **6902** does not change. In this example, laser beam **6905** can move or pivot such that optical breakdowns **6902** is continuously generated from time t1 **6906** to time t2 **6908.** When this pivot occurs between time t1 **6906** and time t2 **6908,** the change in position of the generation of optical breakdowns **6902** during time t1 to t2 results in a phase shift in the lateral direction along axis **6903.**

In this illustrative example, the change in timing and optical breakdown location can be performed by changing the position of the laser or a mirror. This change can cause and/or control a phase shift in one or both of axis **6903** and axis **6907.** As depicted in **Figure 69****,** axis **6907** is perpendicular to axis **6903.** In this illustrative example, the phase shift will be along the lateral axis **6903,** with almost no phase shift along the vertical axis **6907.**

As depicted, these optical breakdowns **6902** result in radio frequency noise-band signal **6920** with changes in phase. These changes in phase encode analog information that can be recovered. In this example, processing of radio frequency noise-band signal **6920** results in output analog information **6922** which corresponds to or correlates with, directly or indirectly, input analog signal **6921.**

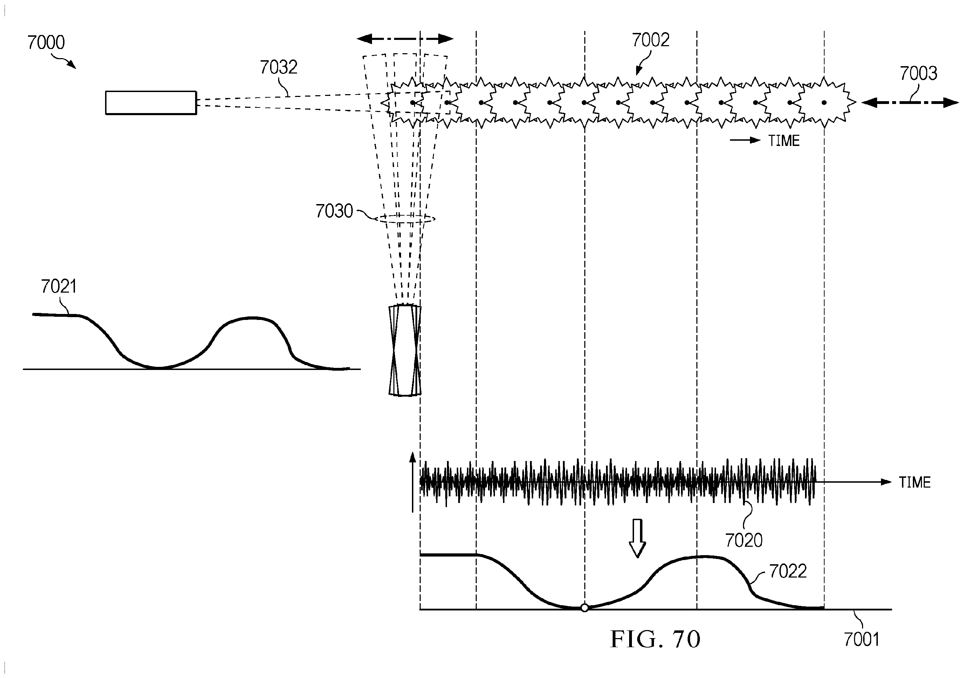

Turning next to **Figure 70****,** an illustration of information flow in transmitting analog information with analog phase noise modulation using a laser generation system is depicted in accordance with an illustrative embodiment. In this example, information flow **7000** can be implemented using laser generation system **3626** in signal transmission system **3619** for communications system **3602** in **Figure 68****.** In this example, x-axis **7001** represents time for optical breakdowns **7002** and noise signals in information flow **7000.**

In this example, optical breakdowns **7002** are generated using laser beam **7030** and laser beam **7032.** In this example, laser beam **7032** is emitted in a direction along axis **7003.** Laser beam **7030** is emitted in one or more directions to intersect laser beam **7032.** In this illustrative example, laser beam **7030** can be pivoted relative to laser beam **7032** to shift the timing and physical locations at which optical breakdowns **7002** are generated. This change in timing and physical locations of optical breakdowns **7002** generates a phase shift in a direction along axis **7003.** The phase shift is generated based on input analog signal **7021.** The phase shift in this example can also be referred to as a Doppler noise-band shift.

As a result, radio frequency noise-band signal **7020** is generated with changes in phase to correspond to and/or correlate with, directly or indirectly, the analog information in input analog signal **7021.** In this example, radio frequency noise-band signal **7020** can be received and decoded to generate output analog signal **7022.**

In this illustrative example, the axes for laser beam **7032** and laser beam **7030** are at or near right angles (i.e., 90 degrees). The movement of laser beam **7030** along axis **7003,** thus causes optical breakdowns **7002** to also shift along axis **7003.** This means that the directionality of the phase shift will also be along axis **7003.** However, if, in another illustrative example, the axes for laser beam **7032** and laser beam **7030** are not at or near right angles (e.g., at 45 degrees), then the directionality of the phase shift would be in the direction of the change in location of the optical breakdowns **7002.** This would generally be along the axis of the stationary laser beam but controlled by the moving or pivoting intersecting laser beam.

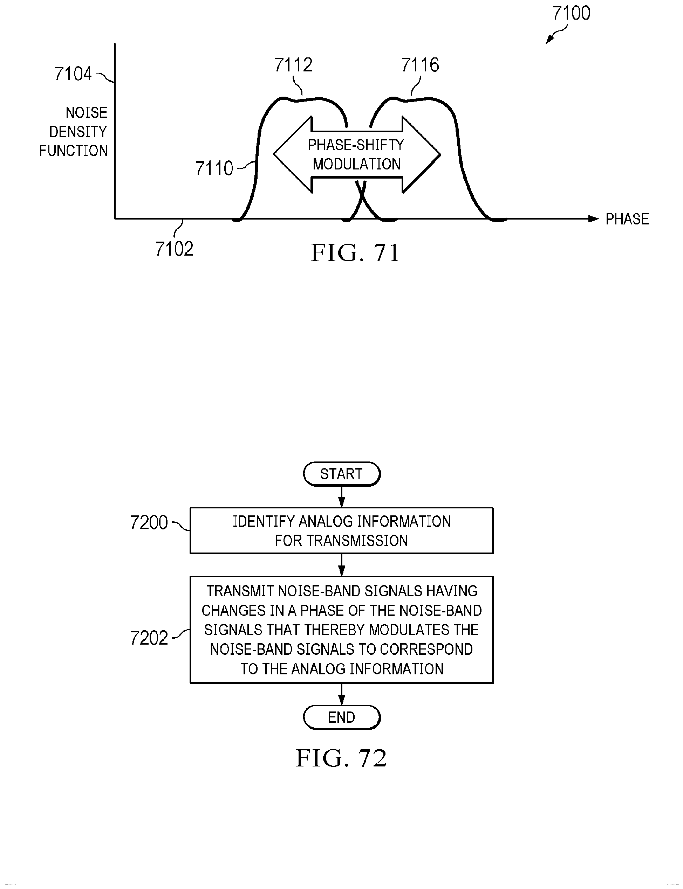

In **Figure 71****,** an illustration of analog phase noise modulation is depicted in accordance with an illustrative embodiment. As depicted in graph **7100,** x-axis **7102** represents phase and y-axis **7104** represents a noise density function.

In this illustrative example, noise-band signal **7110** has a first center point **7112** and a second center point **7116.** As depicted, the set of center points of noise-band signal **7110** are shifted in phase relative to each other. The shifting in the phase of this noise-band signal **7110** can be used to cause and/or control, directly or indirectly, the shift or change in phase of the noise signals to correlate to the analog information being transmitted. As depicted, this shift in phase is Doppler shift and can be performed using either or both laser generation system **3626** and noise transmitter **3628** in signal transmission system **3619** in **Figure 68****.**

With reference next to **Figure 72****,** an illustration of a flowchart of a process for communicating analog information is depicted in accordance with an illustrative embodiment. The process in **Figure 72** can be implemented in hardware, software, or both. When implemented in software, the process can take the form of program instructions that are run by one of more processor units located in one or more hardware devices in one or more computer systems. For example, the process can be implemented in communications manager **3614** in computer system **3612** in **Figure 68****.**

The process begins by identifying analog information for transmission (operation **7200).** The process transmits noise-band signals having changes in a phase of the noise-band signals that thereby modulates the noise-band signals to correspond to the analog information (operation **7202).** The process terminates thereafter.

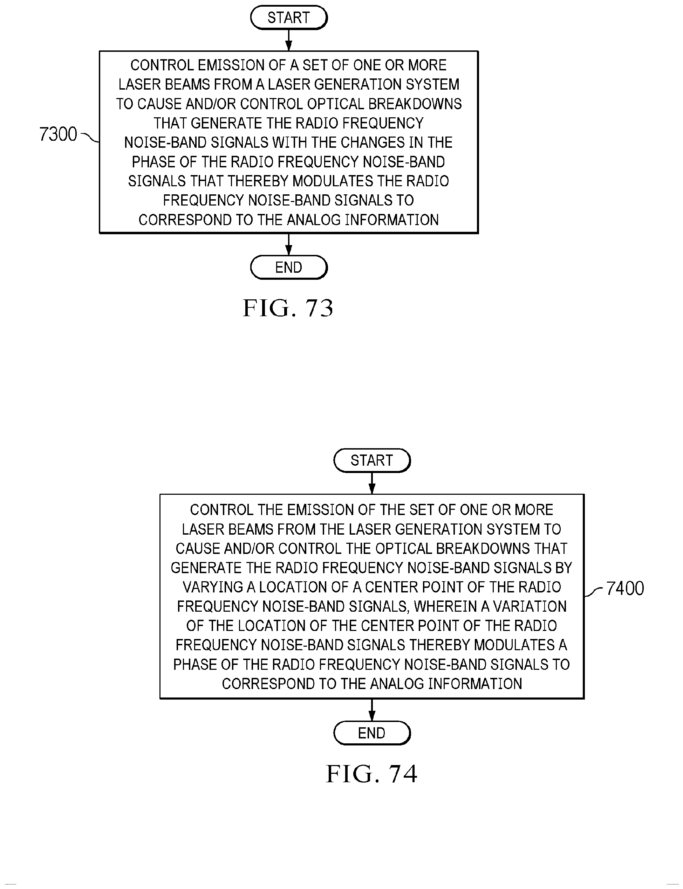

With reference now to **Figure 73****,** an illustration of a flowchart of a process for transmitting noise-band signals using a laser generation system is depicted in accordance with an illustrative embodiment. The process in this flowchart is an example of an implementation for operation **7202** in **Figure 72****.**

The process controls emission of a set of one or more laser beams from a laser generation system to cause and/or control optical breakdowns that generate the radio frequency noise-band signals with the changes in the phase of the radio frequency noise-band signals that thereby modulates the radio frequency noise-band signals to correspond to the analog information (operation **7300).** The process terminates thereafter.

Next in **Figure 74****,** an illustration of a flowchart of a process for controlling emission of a set of one or more laser beams is depicted in accordance with an illustrative embodiment. The process depicted in this figure is an example of an implementation for operation **7300** in **Figure 73****.**

The process controls the emission of the set of one or more laser beams from the laser generation system to cause and/or control the optical breakdowns that generate the radio frequency noise-band signals by varying a location of a center point of the radio frequency noise-band signals, wherein a variation of the location of the center point of the radio frequency noise-band signals thereby modulates a phase of the radio frequency noise-band signals to correspond to the analog information (operation **7400).** The process terminates thereafter. In other words, by controlling the varying locations of the optical breakdowns that generate the radio frequency noise-band signals, it varies the location of a center point of the radio frequency noise-band signals, wherein a variation of the location of the center point of the radio frequency noise-band signals thereby modulates a phase of the radio frequency noise-band signals to correspond to the analog information.

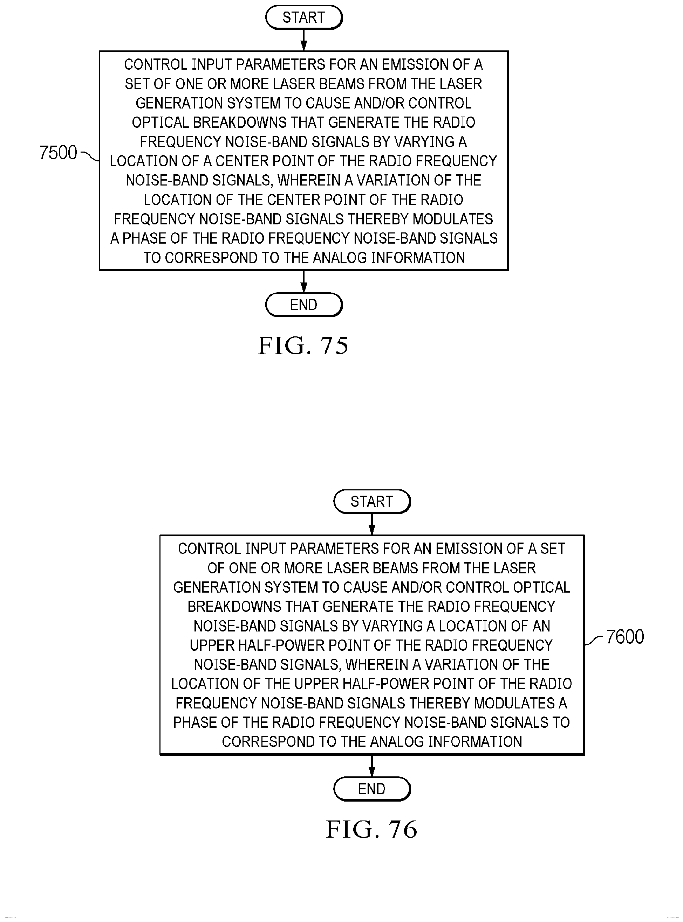

Turning now to **Figure 75****,** an illustration of a flowchart of a process for controlling emission of a set of one or more laser beams is depicted in accordance with an illustrative embodiment. The process depicted in this figure is an example of an implementation for operation **7300** in **Figure 73****.**

The process controls input parameters for an emission of a set of one or more laser beams from the laser generation system to cause and/or control, directly or indirectly, optical breakdowns that generate the radio frequency noise-band signals by varying a location of a center point of the radio frequency noise-band signals, wherein a variation of the location of the center point of the radio frequency noise-band signals thereby modulates a phase of the radio frequency noise-band signals to correspond to the analog information (operation **7500).** The process terminates thereafter. In other words, by controlling the input parameters for an emission of a set of one or more laser beams from the laser generation system, it varies the locations of the optical breakdowns that generate the radio frequency noise-band signals, and thus varies the location of a center point of the radio frequency noise-band signals, wherein a variation of the location of the center point of the radio frequency noise-band signals thereby modulates a phase of the radio frequency noise-band signals to correspond to the analog information

Next in **Figure 76****,** an illustration of a flowchart of a process for controlling emission of a set of one or more laser beams is depicted in accordance with an illustrative embodiment. The process depicted in this figure is an example of an implementation for operation **7300** in **Figure 73****.**

The process controls input parameters for an emission of a set of one or more laser beams from the laser generation system to cause and/or control optical breakdowns that generate the radio frequency noise-band signals by varying a location of an upper half-power point of the radio frequency noise-band signals, wherein a variation of the location of the upper half-power point of the radio frequency noise-band signals thereby modulates a phase of the radio frequency noise-band signals to correspond to the analog information (operation **7600).** The process terminates thereafter.

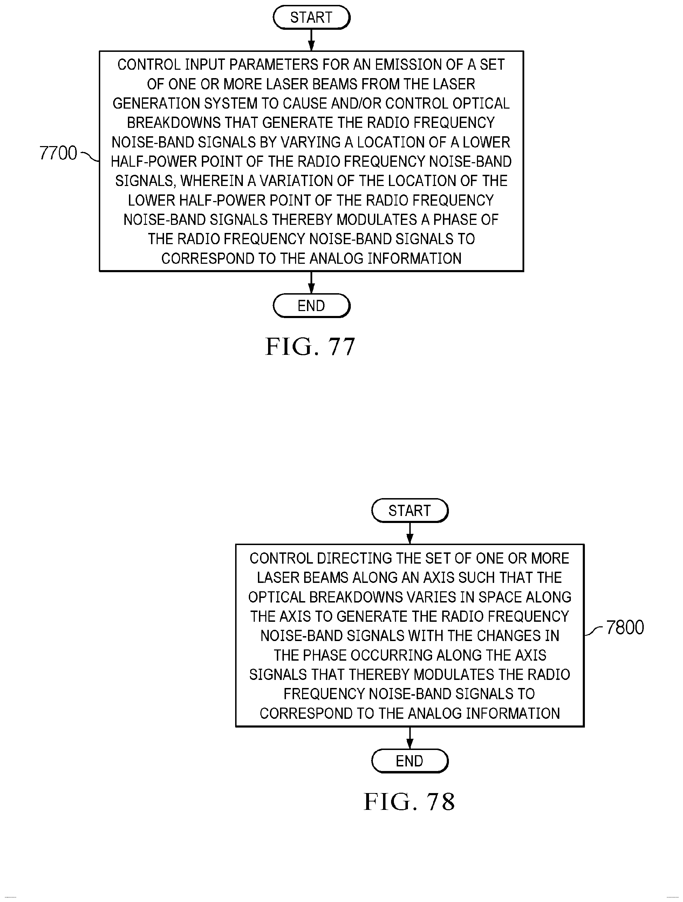

With reference to **Figure 77****,** an illustration of a flowchart of a process for controlling emission of a set of one or more laser beams is depicted in accordance with an illustrative embodiment. The process depicted in this figure is an example of an implementation for operation **7300** in **Figure 73****.**

The process controls input parameters for an emission of a set of one or more laser beams from the laser generation system to cause and/or control optical breakdowns that generate the radio frequency noise-band signals by varying a location of a lower half-power point of the radio frequency noise-band signals, wherein a variation of the location of the lower half-power point of the radio frequency noise-band signals thereby modulates a phase of the radio frequency noise-band signals to correspond to the analog information (operation **7700).** The process terminates thereafter.

With reference to **Figure 78****,** an illustration of a flowchart of a process for controlling emission of a set of one or more laser beams is depicted in accordance with an illustrative embodiment. The process depicted in this figure is an example of an implementation for operation **7300** in **Figure 73****.**

The process controls directing the set of one or more laser beams along an axis such that the optical breakdowns vary in space along the axis to generate the radio frequency noise-band signals with the changes in the phase occurring along the axis signals that thereby modulates the radio frequency noise-band signals to correspond to the analog information (operation **7800).** The process terminates thereafter.

In operation **7800,** "axis" does not have to be lined up with a laser. The "axis" can be based on the movement of the optical breakdowns that determine the direction of the phase shifts.

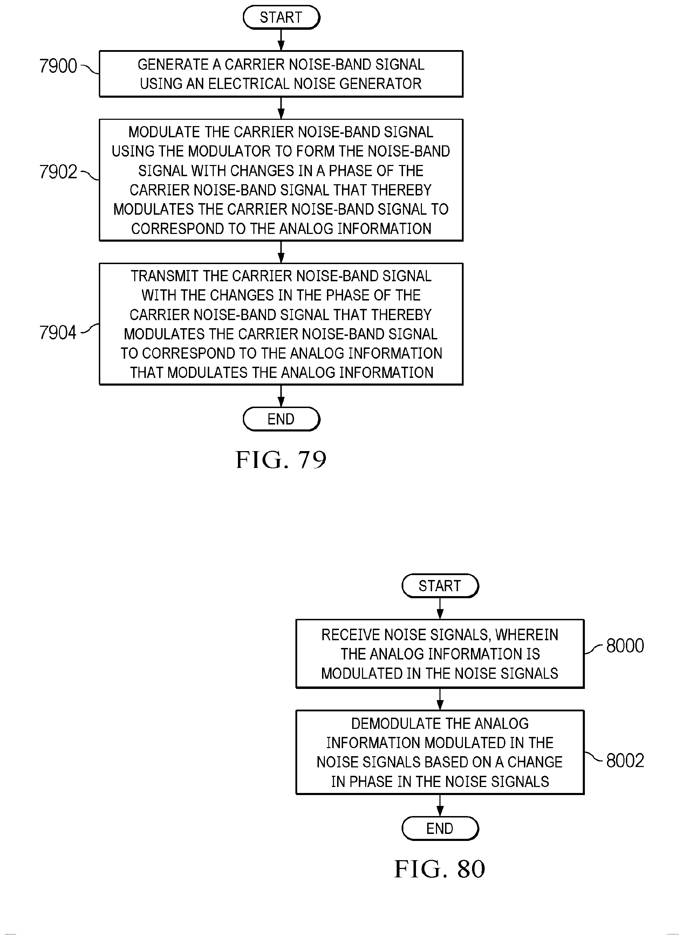

With reference to **Figure 79****,** an illustration of a flowchart of a process for transmitting noise signals using a noise transmitter is depicted in accordance with an illustrative embodiment. The process in this flowchart is an example of an implementation for operation **7202** in **Figure 72****.**

The process generates a carrier noise-band signal using an electrical noise generator (operation **7900).** The process modulates the carrier noise-band signal using a modulator to form the noise-band signal with changes in a phase of the carrier noise-band signal that thereby modulates the carrier noise-band signal to correspond to the analog information (operation **7902).**

The process transmits the carrier noise-band signal with the changes in the phase of the carrier noise-band signal that thereby modulates the carrier noise-band signal to correspond to the analog information that modulates the analog information (operation **7904).** The process terminates thereafter.

Turning next to **Figure 80****,** an illustration of a flowchart of a process for communicating analog information is depicted in accordance with an illustrative. The process in **Figure 80** can be implemented in hardware, software, or both. When implemented in software, the process can take the form of program instructions that are run by one or more processor units located in one or more hardware devices in one or more computer systems. For example, the process can be implemented in receiver **3617** in **Figure 68****.**

The process begins by receiving noise signals, wherein the analog information is modulated in the noise signals (operation **8000).** The process demodulates the analog information modulated in the noise signals based on a change in phase in the noise signals (operation **8002).** The process terminates thereafter.

Some features of the illustrative examples for modulating analog information **3607** using analog phase noise modulation **3623** in communications system **3602** are described in the following clauses. These clauses are examples of features and are not intended to limit other illustrative examples.
1. A communications system comprising:
   a computer system; and
   a communications manager in the computer system, wherein the communications manager is configured to:
      identify analog information for transmission; and
      transmit noise-band signals with changes in a phase of the noise-band signals that thereby modulates the noise-band signals to correspond to the analog information.
2. The communications system of clause 1, wherein the noise-band signals are radio frequency noise-band signals and further comprising:
   a laser generation system configured to emit a set of one or more laser beams,
   wherein in transmitting the noise-band signals, the communications manager is configured to:
      control an emission of a set of one or more laser beams from the laser generation system to control optical breakdowns that generate the radio frequency noise-band signals with the changes in the phase that thereby modulates the radio frequency noise-band signals to correspond to the analog information.
3. The communications system of clause 2, wherein in controlling the emission of the set of one or more laser beams, the communications manager is configured to:
   control the emission of the set of one or more laser beams from the laser generation system to control the optical breakdowns that generate the radio frequency noise-band signals by varying a location of a center point of the radio frequency noise-band signals, wherein a variation of the location of the center point of the radio frequency noise-band signals thereby modulates a phase of the radio frequency noise-band signals to correspond to the analog information.
4. The communications system of clause 2, wherein in controlling the emission of the laser beams, the communications manager is configured to:
   control a set of one or more input parameters for an emission of a set of one or more laser beams from the laser generation system to control optical breakdowns that generate the radio frequency noise-band signals by varying a location of a center point of the radio frequency noise-band signals, wherein a variation of the location of the center point of the radio frequency noise-band signals thereby modulates a phase of the radio frequency noise-band signals to correspond to the analog information.
5. The communications system of clause 4, wherein in controlling the set of one or more input parameters, the communications manager is configured to:
   control directing the set of one or more laser beams along an axis such that the optical breakdowns varies in space along the axis to generate the radio frequency noise-band signals with the changes in the phase occurring along the axis that thereby modulates the radio frequency noise-band signals to correspond to the analog information.
6. The communications system of clause 1 further comprising:
   an electrical noise generator configured to generate a carrier noise signal; and
   a modulator; and
   a transmitter,
   wherein in generating noise-band signals, the communications manager is configured to:
   generate a carrier noise-band signal using the electrical noise generator; and
   modulate the carrier noise-band signal using the modulator to form the carrier noise-band signal with changes in a phase of the carrier noise-band signal that thereby modulates the phase of the carrier noise-band signal to correspond to the analog information.
7. The communications system of clause 1, wherein the noise-band signals are selected from at least one of electromagnetic frequency noise signals, radio frequency noise signals, microwave frequency noise signals, audio frequency noise signals, ultrasonic frequency noise signals, ultra-low frequency noise signals, very low frequency noise signals, underwater frequency noise signals, or optical frequency noise signals including visible and/or non-visible light.
8. A method for communicating analog information, the method comprising:
   identifying analog information for transmission; and
   transmitting noise-band signals having changes in a phase of the noise-band signals that thereby modulates the noise-band signals to correspond to the analog information.
9. The method of clause 8, wherein the noise-band signals are radio frequency noise-band signals and, wherein said transmitting the noise-band signals comprises:
   controlling emission of a set of one or more laser beams from a laser generation system to control optical breakdowns that generate the radio frequency noise-band signals with the changes in the phase of the radio frequency noise-band signals that thereby modulates the radio frequency noise-band signals to correspond to the analog information.
10. The method of clause 9, wherein said controlling the emission of the set of one or more laser beams comprises:
   controlling the emission of the set of one or more laser beams from the laser generation system to control the optical breakdowns that generate the radio frequency noise-band signals by varying a location of a center point of the radio frequency noise-band signals, wherein a variation of the location of the center point of the radio frequency noise-band signals thereby modulates a phase of the radio frequency noise-band signals to correspond to the analog information.
11. The method of clause 9, wherein said controlling the emission of the laser beams comprises:
   controlling input parameters for an emission of a set of one or more laser beams from the laser generation system to control optical breakdowns that generate the radio frequency noise-band signals by varying a location of a center point of the radio frequency noise-band signals, wherein a variation of the location of the center point of the radio frequency noise-band signals thereby modulates a phase of the radio frequency noise-band signals to correspond to the analog information.
12. The method of clause 9, wherein said controlling the emission of the laser beams comprises:
   controlling input parameters for an emission of a set of one or more laser beams from the laser generation system to control optical breakdowns that generate the radio frequency noise-band signals by varying a location of an upper half-power point of the radio frequency noise-band signals, wherein a variation of the location of the upper half-power point of the radio frequency noise-band signals thereby modulates a phase of the radio frequency noise-band signals to correspond to the analog information.
13. The method of clause 9, wherein said controlling the emission of the laser beams comprises:
   controlling input parameters for an emission of a set of one or more laser beams from the laser generation system to control optical breakdowns that generate the radio frequency noise-band signals by varying a location of a lower half-power point of the radio frequency noise-band signals, wherein a variation of the location of the lower half-power point of the radio frequency noise-band signals thereby modulates a phase of the radio frequency noise-band signals to correspond to the analog information.
14. The method of clause 9, wherein said controlling the emission of the laser beams comprises:
   controlling directing the set of one or more laser beams along an axis such that the optical breakdowns varies in space along the axis to generate the radio frequency noise-band signals with the changes in the phase occurring along the axis signals that thereby modulates the radio frequency noise-band signals to correspond to the analog information.
15. The method of clause 8, wherein said transmitting the noise-band signals comprises:
   generating a carrier noise-band signal using an electrical noise generator; and
   modulating the carrier noise-band signal using the modulator to form the noise-band signal with changes in a phase of the carrier noise-band signal that thereby modulates the carrier noise-band signal to correspond to the analog information; and
   transmitting the carrier noise-band signal with the changes in the phase of the carrier noise-band signal that thereby modulates the carrier noise-band signal to correspond to the analog information that modulates the analog information.
16. The method of clause 8, wherein the noise-band signal is selected from at least one of electromagnetic frequency noise signals, radio frequency noise-band , microwave frequency noise signals, audio frequency noise signals, ultrasonic frequency noise signals, ultra-low frequency noise signals, very low frequency noise signals, underwater frequency noise signals, or optical frequency noise signals including visible and/or non-visible light.
17. A method for communicating analog information, the method comprising:
   receiving noise-band signals, wherein the analog information is modulated in the noise-band signals; and
   demodulating the analog information modulated in the noise-band signals based on a change in a phase of the noise-band signals.

The description of the different illustrative embodiments has been presented for purposes of illustration and description and is not intended to be exhaustive or limited to the embodiments in the form disclosed. The different illustrative examples describe components that perform actions or operations. In an illustrative embodiment, a component can be configured to perform the action or operation described. For example, the component can have a configuration or design for a structure that provides the component an ability to perform the action or operation that is described in the illustrative examples as being performed by the component. Further, to the extent that terms "includes", "including", "has", "contains", and variants thereof are used herein, such terms are intended to be inclusive in a manner similar to the term "comprises" as an open transition word without precluding any additional or other elements.

Many modifications and variations will be apparent to those of ordinary skill in the art. Further, different illustrative embodiments may provide different features as compared to other desirable embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A communications system (3602) comprising:
a computer system (3612); and
a communications manager (3614) in the computer system (3612), wherein the communications manager (3614) is configured to:
identify analog information (3607) for transmission; and
transmit noise signals (3604) with a varying amplitude (3640) that thereby modulate the noise signals (3604) to correspond to the analog information (3607).

2. The communications system (3602) of claim 1, wherein the noise signals (3604) are radio frequency noise signals (3605), and further comprising:
a laser generation system (3626) configured to emit a set of one or more laser beams (3627), wherein in transmitting the noise signals (3604), the communications manager (3614) is configured to:
control an emission of the set of one or more laser beams (3627) from the laser generation system (3626) to control optical breakdowns (3625) that generate the radio frequency noise signals (3605) with the varying amplitude (3640) that thereby modulate the radio frequency noise signals (3605) to correspond to the analog information (3607).

3. The communications system (3602) of claim 2, wherein in controlling the emission of the set of one or more laser beams (3627), the communication manager (3614) is configured to:
control a strength (3612) of the set of one or more laser beams (3627) emitted from the laser generation system (3626) to control the optical breakdowns (3625) that generate the radio frequency noise signals (3605) with the varying amplitude (3640) that thereby modulate the radio frequency noise signals (3605) to correspond to the analog information (3607).

4. The communications system (3602) of claim 3, wherein, in controlling the strength (3612) of the set of one or more laser beams (3627), the communication manager (3614) is configured to:
control the strength (3612) of the set of one or more laser beams (3627) emitted from the laser generation system (3626) using a set of optical elements to control the optical breakdowns (3625) that generate the radio frequency noise signals (3605) with the varying amplitude (3640) that thereby modulate the radio frequency noise signals (3605) to correspond to the analog information (3607).

5. The communications system (3602) of claim 3, wherein, in controlling the strength (3612) of the set of one or more laser beams (3627), the communication manager (3614) is configured to:
control the strength (3612) of the set of one or more laser beams (3627) emitted from the laser generation system (3626) using an amplitude modulator (3632) in the laser generation system (3626) to control the optical breakdowns (3625) that generate the radio frequency noise signals (3605) with the varying amplitude (3640) that thereby modulate the noise signals (3604) to correspond to the analog information (3607).

6. The communications system (3602) of any preceding claim, further comprising:
an electrical noise generator (3630) configured to generate a carrier noise signal (3631);
a modulator (3632); and
a transmitter (3634), wherein, in generating the noise signals (3604), the communications manager (3614) is configured to:
generate the carrier noise signal (3631) using the electrical noise generator (3630); and
modulate an amplitude of the carrier noise signal (3631) using the modulator (3632) to vary the carrier noise signal (3631) with the varying amplitude (3640) that thereby modulates the carrier noise signal (3631) to correspond to the analog information (3607).

7. The communications system (3602) of any preceding claim, wherein the noise signals (3604) are selected from at least one of electromagnetic frequency noise signals, radio frequency noise signals (3605), microwave frequency noise signals, audio frequency noise signals, ultrasonic frequency noise signals, ultra-low frequency noise signals, very low frequency noise signals, underwater noise signals, or optical frequency noise signals including visible and/or non-visible light.

8. A method for communicating analog information (3607), the method comprising:
identifying (3900) the analog information (3607) for transmission; and
transmitting (3902) noise signals (3604) with a varying amplitude (3640) that thereby modulates the noise signals (3604) to correspond to the analog information (3607).

9. The method of claim 8, wherein the noise signals (3604) are radio frequency noise signals (3605), and wherein said transmitting the noise signals (3604) comprises:
controlling (4000) emission of a set of one or more laser beams (3627) from a laser generation system (3626) to control optical breakdowns (3625) that generate the radio frequency noise signals (3605) with the varying amplitude (3640) that thereby modulates the noise signals (3604) to correspond to the analog information (3607).

10. The method of claim 9, wherein said controlling (4000) the emission of the set of one or more laser beams (3627) comprises:
controlling (4100) a strength (3612) of the set of one or more beams emitted from the laser generation system (3626) to control the optical breakdowns (3625) that generate the radio frequency noise signals (3605) with the varying amplitude (3640) that thereby modulates the radio frequency noise signals (3605) to correspond to the analog information (3607).

11. The method of claim 10, wherein said controlling (4100) the strength (3612) of the set of one or more beams comprises:
controlling (4200) the strength (3612) of the set of one or more beams emitted from a laser source (3642) in the laser generation system (3626) to control the optical breakdowns (3625) that generate the radio frequency noise signals (3605) with the varying amplitude (3640) that thereby modulates the radio frequency noise signals (3605) to correspond to the analog information (3607).

12. The method of claim 10, wherein said controlling (4100) the strength (3612) of the set of one or more beams comprises:
controlling (4300) the strength (3612) of the set of one or more beams emitted from the laser generation system (3626) using a set of optical elements to control the optical breakdowns (3625) that generate the radio frequency noise signals (3605) with the varying amplitude (3640) that thereby modulates the radio frequency noise signals (3605) to correspond to the analog information (3607).

13. The method of claim 10, wherein said controlling (4100) the strength (3612) of the set of one or more beams comprises:
controlling (4400) the strength (3612) of the set of one or more beams emitted from a laser source (3642) in the laser generation system (3626) using an amplitude modulator (3632) in the laser generation system (3626) to control the optical breakdowns (3625) that generate the radio frequency noise signals (3605) with the varying amplitude (3640) that thereby modulates the radio frequency noise signals (3605) to correspond to the analog information (3607).

14. The method of claim 8, wherein said transmitting (3900) the noise signals (3604) comprises:
generating (4500) a carrier radio frequency noise signal;
modulating (4502) the carrier radio frequency noise signal to form the noise signals (3604) with the varying amplitude (3640) that thereby modulates the carrier radio frequency noise signal to correspond to the analog information (3607); and
transmitting (4504) the noise signals (3604) with the varying amplitude (3640) that thereby modulates the noise signals (3604) to correspond to the analog information (3607).

15. A method for communicating analog information (3607), the method comprising:
receiving (4600 noise signals (3604), wherein the analog information (3607) is modulated in the noise signals (3604); and
demodulating (4602) the analog information (3607) modulated in the noise signals (3604) based on a change in amplitude in the noise signals (3604).
